(19) Europäisches Patentamt
European Patent Office
Office européen des brevets

(11) **EP 4 772 987 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*G06F 3/04845* (2022.01)      *G06F 3/04847* (2022.01)
*G06F 3/0488* (2022.01)      *G06F 3/04815* (2022.01)

(21) Application number: 25824799.8

(22) Date of filing: 15.05.2025

(52) Cooperative Patent Classification (CPC):
G06F 3/04815; G06F 3/04845; G06F 3/04847;
G06F 3/0488; G06T 13/20; G09G 3/3208

(86) International application number:
PCT/CN2025/095256

(87) International publication number:
WO 2026/001412 (02.01.2026 Gazette 2026/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.06.2024 CN 202410868868

(71) Applicant: Honor Device Co., Ltd.
Shenzhen, Guangdong 518040 (CN)

(72) Inventors:
• LI, Chenlong
Shenzhen, Guangdong 518040 (CN)
• YANG, Yuanyuan
Shenzhen, Guangdong 518040 (CN)

(74) Representative: Henselmann, Alexander Gerhard
Mitscherlich PartmbB
Karlstraße 7
80333 München (DE)

(54) **DISPLAY METHOD, ELECTRONIC DEVICE, AND STORAGE MEDIUM**

(57) This application provides a display method, an electronic device, and a storage medium, and relates to the field of display technologies. The method includes: displaying, by an electronic device, a first interface in response to a first operation; and displaying a target animation in a preset region of the first interface, where the target animation includes an animation element, the animation element moves or remains still according to a motion state of the electronic device, and the target animation is used to map the motion state of the electronic device in real time. In this implementation, the animation element in the target animation changes according to the motion state of the electronic device, so that the displayed target animation can map different motion states of the electronic device in real time, and motion information felt by eyes of a user is consistent with motion information felt by the vestibular system, that is, a motion state of the target animation in the display interface seen by the eyes of the user is consistent with a motion state felt by the vestibular system. In this way, a conflict between motion states perceived by vision of the user and the vestibular system can be relieved, thereby relieving motion sickness of the user.

```
┌─────────────────────────────────────────┐
│ An electronic device displays a first     │──── S201
│ interface in response to a first operation │
└─────────────────────────────────────────┘
                    │
                    ▼
┌─────────────────────────────────────────┐
│ Display a target animation in a preset     │──── S202
│ region of the first interface              │
└─────────────────────────────────────────┘
```

FIG. 12

## Description

This application claims priority to Chinese Patent Application No. 202410868868.7, filed with the China National Intellectual Property Administration on June 29, 2024 and entitled "DISPLAY METHOD, ELECTRONIC DEVICE, AND STORAGE MEDIUM", which is incorporated herein by reference in its entirety.

## TECHNICAL FIELD

This application relates to the field of display technologies, and in particular, to a display method, an electronic device, and a storage medium.

## BACKGROUND

Motion sickness is a relatively common physiological phenomenon in daily life. Depending on different vehicles, motion sickness can be further categorized into carsickness, seasickness, airsickness (aviation motion sickness), space motion sickness, and the like. Motion sickness is a disorder induced when acceleration/deceleration motions in any form (such as bumping, swaying, and rotation) generated during the movement of vehicles such as cars, trains, ships, and airplanes stimulate the human vestibular system.

For example, when a user browses a screen of an electronic device while riding in a vehicle, motion sickness is very likely to occur.

## SUMMARY

This application provides a display method, an electronic device, and a storage medium. By using a target animation capable of mapping different motion states in real time, a motion state perceived by the eyes of a user is consistent with a motion state perceived by the vestibular system of the user, thereby relieving motion sickness of the user to varying degrees.

According to a first aspect, this application provides a display method, applied to an electronic device, where the method includes: displaying, by the electronic device, a first interface in response to a first operation; and displaying a target animation in a preset region of the first interface, where the target animation includes an animation element, the animation element moves or remains still according to a motion state of the electronic device, and the target animation is used to map the motion state of the electronic device in real time.

Optionally, when the electronic device is located in a transportation vehicle, the motion state of the electronic device is consistent with a motion state of the transportation vehicle. Therefore, the target animation may also be used to map the motion state of the transportation vehicle in real time.

In this implementation, the animation element in the target animation changes according to the motion state of the electronic device, enabling the target animation to map different motion states of the electronic device in real time. This allows a motion state of the target animation in the display interface seen by the eyes of a user to be consistent with a motion state actually perceived by the vestibular system of the user, thereby reducing a conflict between perception of the vision of the user and the vestibular system and relieving motion sickness of the user.

With reference to the first aspect, in some implementations of the first aspect, when the electronic device is located in a vehicle and the vehicle is in an uphill and/or upward jolting motion state, the displaying a target animation in a preset region of the first interface includes: displaying a first animation in the preset region, where an animation element in the first animation moves in a first preset direction.

With reference to the first aspect, in some implementations of the first aspect, when the vehicle is in a downhill and/or downward jolting motion state, the displaying a target animation in a preset region of the first interface includes: displaying a second animation in the preset region, where an animation element in the second animation moves in a second preset direction, and the second preset direction is opposite to the first preset direction.

With reference to the first aspect, in some implementations of the first aspect, the animation element includes a first animation element, the first animation element includes a first track and a second track, and when the vehicle is in a leftward tilted and/or a leftward jolting motion state, the displaying a target animation in a preset region of the first interface includes: displaying a third animation in the preset region, where in the third animation, the first track moves in the first preset direction, the second track moves in the second preset direction, and the first track and the second track separately rotate by a first rotation angle counterclockwise around a Z-axis.

With reference to the first aspect, in some implementations of the first aspect, when the vehicle is in a rightward titled and/or rightward jolting motion state, the displaying a target animation in a preset region of the first interface includes: displaying a fourth animation in the preset region, where in the fourth animation, the first track moves in the second preset direction, the second track moves in the first preset direction, and the first track and the second track separately rotate by the first rotation angle clockwise around the Z-axis.

With reference to the first aspect, in some implementations of the first aspect, when the vehicle is in an acceleration motion state, the displaying a target animation in a preset region of the first interface includes: displaying a fifth animation in the preset region, where a display size of an animation element in the fifth animation is adjusted from a first display size to a second display size, and the first display size is less than the second display size.

With reference to the first aspect, in some implementations of the first aspect, when the vehicle is in a deceleration motion state, the displaying a target animation in a preset region of the first interface includes: displaying a sixth animation in the preset region, where a display size of an animation element in the sixth animation is adjusted from a third display size to a fourth display size, and the third display size is greater than the fourth display size.

With reference to the first aspect, in some implementations of the first aspect, the first track and the second track are symmetrically displayed left and right in the preset region, the animation element further includes a second animation element, and when the vehicle is in a turn left motion state, the displaying a target animation in a preset region of the first interface includes: displaying a seventh animation in the preset region, where in the seventh animation, the second animation element moves in the first track in a third preset direction, and moves through a right tail end of the first track to a left start end of the second track.

With reference to the first aspect, in some implementations of the first aspect, when the vehicle is continuously in a turn left motion state, the displaying a target animation in a preset region of the first interface includes: displaying an eighth animation in the preset region, where the second animation element in the eighth animation moves in the third preset direction on the left start end of the second track, and moves through a right tail end of the second track to a left start end of the first track.

With reference to the first aspect, in some implementations of the first aspect, when the vehicle is in a turn right motion state, the displaying a target animation in a preset region of the first interface includes: displaying a ninth animation in the preset region, where the second animation element in the ninth animation moves in the second track in a fourth preset direction and moves through a left tail end of the second track to a right start end of the first track, and the fourth preset direction is opposite to the third preset direction.

With reference to the first aspect, in some implementations of the first aspect, when the vehicle is continuously in a turn right motion state, the displaying a target animation in a preset region of the first interface includes: displaying a tenth animation in the preset region, where the second animation element in the tenth animation moves in the fourth preset direction on the right start end of the first track, and moves through a left tail end of the first track to a right start end of the second track.

With reference to the first aspect, in some implementations of the first aspect, when the vehicle is in a turn left motion state, the displaying a target animation in a preset region of the first interface further includes: displaying an eleventh animation in the preset region, where a display size of the first track in the eleventh animation is adjusted from a fifth display size to a sixth display size, a display size of the second track is adjusted from the fifth display size to a seventh display size, the fifth display size is less than the sixth display size, and the fifth display size is greater than the seventh display size.

With reference to the first aspect, in some implementations of the first aspect, when the vehicle is in a turn right motion state, the displaying a target animation in a preset region of the first interface further includes: displaying a twelfth animation in the preset region, where a display size of the first track in the twelfth animation is adjusted from the fifth display size to the seventh display size, and a display size of the second track is adjusted from the fifth display size to the sixth display size.

With reference to the first aspect, in some implementations of the first aspect, the display method further includes: when the vehicle is in a steady motion state, displaying a thirteenth animation in the preset region, where an animation element in the thirteenth animation is still.

With reference to the first aspect, in some implementations of the first aspect, the display method further includes: adjusting transparency of the animation element from a first transparency value to a second transparency value according to a motion state of the vehicle.

With reference to the first aspect, in some implementations of the first aspect, the display method further includes: adjusting a display color of the animation element according to a color of the first interface.

With reference to the first aspect, in some implementations of the first aspect, the first animation element includes any one of a track, a rectangular frame, and a ring frame, and the second animation element includes any one of a small ball, an animal, a person, and a plant.

With reference to the first aspect, in some implementations of the first aspect, the first operation includes at least one of a tap operation, a slide operation, a voice operation, and a gesture operation for enabling a motion sickness relief function switch.

With reference to the first aspect, in some implementations of the first aspect, the display method further includes: displaying, by the electronic device, a second interface in response to a second operation, where the second interface includes a control used to adjust an animation parameter; and adjusting the animation parameter in response to a third operation for the control. The second operation includes a tap operation, a slide operation, a voice operation, or the like for a motion sickness relief application. The third operation includes at least one of a tap operation, a slide operation, a voice operation, or a gesture operation for a control.

According to a second aspect, this application provides an electronic device, where the electronic device includes one or more processors; one or more memories; and a module with a plurality of applications installed. The memory stores one or more programs. When the one or more programs are executed by the processor, the electronic device is enabled to perform the method in the first aspect and any possible implementation of the first aspect.

According to a third aspect, this application provides a chip, including a processor. The processor is configured to read and execute a computer program stored in a memory, to perform the method in any one of the first aspect and the possible implementations of the first aspect.

Optionally, the chip further includes the memory, and the memory is connected to the processor by using a circuit or a wire.

Optionally, the chip further includes a communication interface.

According to a fourth aspect, this application provides a computer readable storage medium. The computer readable storage medium stores a computer program. When the computer program is executed by a processor, the processor is enabled to perform the method in the first aspect and any possible implementation thereof.

According to a fifth aspect, this application provides a computer program product. The computer program product includes computer program code. When the computer program code runs on an electronic device, the electronic device is enabled to perform the method in the first aspect and any possible implementation thereof.

Technical effects achieved in the second aspect, the third aspect, the fourth aspect, and the fifth aspect are similar to the technical effects achieved by corresponding technical means in the first aspect. Details are not described herein again.

## BRIEF DESCRIPTION OF DRAWINGS

FIG. 1A and FIG. 1B are schematic diagrams of a vestibular system according to an embodiment of this application;

FIG. 1C is a schematic diagram of an application scenario of a display method according to an embodiment of this application;

FIG. 2A and FIG. 2B are schematic diagrams of a display interface of an electronic device according to an embodiment of this application;

FIG. 2C is a schematic diagram of a smart recommendation card according to an embodiment of this application;

FIG. 2D and FIG. 2E are a schematic diagram of quickly enabling a motion sickness relief mode according to an embodiment of this application;

FIG. 2F to FIG. 2H are another schematic diagram of quickly enabling a motion sickness relief mode according to an embodiment of this application;

FIG. 3A is a design diagram of a target animation according to an embodiment of this application;

FIG. 3B to FIG. 3L are schematic diagrams of a plurality of target animations according to an embodiment of this application;

FIG. 4A is a schematic diagram of a preset region according to an embodiment of this application;

FIG. 4B is a schematic diagram of a display manner of a target animation according to an embodiment of this application;

FIG. 4C is a schematic diagram of another preset region according to an embodiment of this application;

FIG. 4D is a schematic diagram of another display manner of a target animation according to an embodiment of this application;

FIG. 4E and FIG. 4F are schematic diagrams of still another display manner of a target animation according to an embodiment of this application;

FIG. 4G is a schematic diagram of yet another display manner of a target animation according to an embodiment of this application;

FIG. 4H is a schematic diagram of still another display manner of a target animation according to an embodiment of this application;

FIG. 5A is a schematic diagram of an animation effect according to an embodiment of this application;

FIG. 5B is a schematic diagram of another animation effect according to an embodiment of this application;

FIG. 5C to FIG. 5E are schematic diagrams of an uphill animation effect according to an embodiment of this application;

FIG. 5F to FIG. 5H are schematic diagrams of a downhill animation effect according to an embodiment of this application;

FIG. 5I to FIG. 5K are schematic diagrams of another uphill animation effect according to an embodiment of this application;

FIG. 5L to FIG. 5N are schematic diagrams of another downhill animation effect according to an embodiment of this application;

FIG. 6A and FIG. 6B are schematic diagrams of a leftward-tilting animation effect according to an embodiment of this application;

FIG. 6C and FIG. 6D are schematic diagrams of a rightward-tilting animation effect according to an embodiment of this application;

FIG. 6E is a schematic diagram of another animation effect according to an embodiment of this application;

FIG. 7A and FIG. 7B are schematic diagrams of an acceleration animation effect according to an embodiment of this application;

FIG. 7C to FIG. 7E are schematic diagrams of another acceleration animation effect according to an embodiment of this application;

FIG. 7F and FIG. 7G are schematic diagrams of a deceleration animation effect according to an embodiment of this application;

FIG. 7H is a schematic diagram of still another acceleration animation effect according to an embodiment of this application;

FIG. 7I is a schematic diagram of still another deceleration animation effect according to an embodiment of this application;

FIG. 7J is a schematic diagram of a visual style of another target animation according to an embodiment of this application;

FIG. 8A, FIG. 8B, FIG. 8C, FIG. 8D, and FIG. 8E are schematic diagrams of a left-turn and leftward-tilting animation effect according to an embodiment of this application;

FIG. 8F, FIG. 8G, FIG. 8H, FIG. 8I, and FIG. 8J are schematic diagrams of a right-turn and rightward-tilting animation effect according to an embodiment of this application;

FIG. 8K, FIG. 8L, FIG. 8M, FIG. 8N, and FIG. 8O are schematic diagrams of another left-turn animation effect according to an embodiment of this application;

FIG. 8P, FIG. 8Q, FIG. 8R, FIG. 8S, and FIG. 8T are schematic diagrams of another right-turn animation effect according to an embodiment of this application;

FIG. 8U and FIG. 8V are schematic diagrams of a visual style according to an embodiment of this application;

FIG. 9A and FIG. 9B are schematic diagrams of a principle of an animation effect according to an embodiment of this application;

FIG. 9C and FIG. 9D are schematic diagrams of another principle of an animation effect according to an embodiment of this application;

FIG. 9E is a schematic diagram of rotation around an axis according to an embodiment of this application;

FIG. 9F is a schematic diagram of still another principle of an animation effect according to an embodiment of this application;

FIG. 9G is a schematic diagram of yet another principle of an animation effect according to an embodiment of this application;

FIG. 9H and FIG. 9I are schematic diagrams of still another principle of an animation effect according to an embodiment of this application;

FIG. 9J is a schematic diagram of a principle of a cyclic animation according to an embodiment of this application;

FIG. 9K is a schematic diagram of another principle of a cyclic animation according to an embodiment of this application;

FIG. 9L is a schematic diagram of a function according to an embodiment of this application;

FIG. 10A to FIG. 10D are schematic diagrams of some application scenarios of a target animation according to an embodiment of this application;

FIG. 11A and FIG. 11B are schematic diagrams of a parameter adjustment interface according to an embodiment of this application;

FIG. 12 is an example flowchart of a display method according to an embodiment of this application;

FIG. 13 is a schematic diagram of a software structure of an electronic device according to an embodiment of this application;

FIG. 14 is a schematic diagram of a hardware structure of an electronic device according to an example embodiment of this application; and

FIG. 15 is a schematic diagram of a structure of a chip according to an embodiment of this application.

## DESCRIPTION OF EMBODIMENTS

The following describes the technical solutions in this application with reference to the accompanying drawings.

In the descriptions of embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, in the descriptions of embodiments of this application, "a plurality of' refers to two or more.

In the following descriptions, the terms "first" and "second" are used merely for the purpose of description, and should not be construed as indicating or implying relative importance or implicitly indicating a quantity of indicated technical features. Therefore, a feature defined with "first" or "second" may explicitly or implicitly include one or more such features. In the descriptions of the embodiments, unless otherwise stated, "a plurality of" means two or more.

Referring to "one embodiment", "some embodiments", or the like that is described in this specification of this application means that specific features, structures, or characteristics described with reference to one or more embodiments are included in the one or more embodiments of this application. Therefore, statements such as "in one embodiment", "in some embodiments", or "in some other embodiments" that appear in different parts of this application do not necessarily refer to same embodiments, but mean "one or more but not all embodiments" unless otherwise specifically emphasized in another manner. The terms "include", "comprise", and "have", and variants thereof all mean "include but are not limited to", unless otherwise specifically emphasized in another manner.

To better understand embodiments of this application, the following first describes some terms involved in embodiments of this application for ease of understanding by persons skilled in the art.

### 1. Window (Window)

The window is a region of a visual view displayed on a screen/display interface of an electronic device. In an Android (Android) system, a Window has a unique object (surface), and the Window draws its own content (content) into the surface. Each Window has a unique view hierarchy (View hierarchy) attached thereto. The view (View) in the View hierarchy shares the surface of the Window. A special view (SurfaceView) has a dedicated surface, so that an application draws content directly therein.

In embodiments of this application, a target animation is drawn on the SurfaceView. After that, a service (Surface Flinger) that is responsible for composing display content of the screen renders them on the screen of the electronic device according to an order of each surface on a Z-axis (Z-order).

### 2. Preset region

The preset region refers to a region predefined in a screen/display interface, and is used to display a target animation.

It should be understood that the preset region may be an edge of the screen or a region easily accessible to a user line of sight, that is, the region is not a region for mainly displaying content, but a user easily notices the region when browsing the screen.

### 3. Sprite (Sprite)

In computer graphics, "Sprite" is often translated as a "sprite", which refers to a two-dimensional image or animation that is usually used to construct a role, object, or interface element in a game. In embodiments of this application, the Sprite is used to construct animations that simulate different driving/moving states of a vehicle.

### 4. Inertial measurement unit (Inertial Measurement Unit, IMU)

The IMU is a device used to measure and report a specific force and an angular velocity of an object, and in some cases, a direction of an object around a magnetic field. The IMU may usually include a plurality of sensors, such as an acceleration sensor/accelerometer, and a gyroscope sensor.

The acceleration sensor is configured to measure a linear acceleration, and the gyroscope sensor is configured to measure an angular velocity or a rotation rate.

### 5. Application programming interface (Application Programming Interface, API)

The API is a predefined set of functions or protocols for building software and an application.

6. Accelerometer (Accelerometer, ACC)

The ACC is a sensor used to measure an acceleration, also referred to as an acceleration sensor. It can detect and measure acceleration changes of an electronic device along three axes (such as an X-axis, a Y-axis, and a Z-axis) in space.

7. Gyroscope (Gyroscope, GYRO)

The GYROSCOPE is a sensor configured to measure an angular velocity or a rotation rate, also referred to as a gyroscope sensor. It can detect a rotation rate of an electronic device around three axes (such as an X-axis, a Y-axis, and a Z-axis) in space, or may detect an angular velocity of the electronic device.

8. Quaternion (Quaternion)

The quaternion is used to represent and calculate rotation in a three-dimensional space.

9. Attitude angle

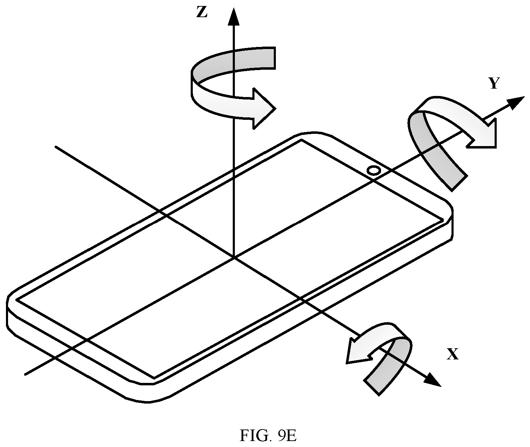

The attitude angle is a set of angles used to describe a direction and a position of an electronic device relative to a reference coordinate system. The attitude angle used in embodiments of this application may include a Yaw angle (yaw angle), a Pitch angle (pitch angle), and a Roll angle (roll angle).
The Yaw angle is an angle of rotation around a vertical axis (Z-axis) and determines an advancing direction of an object. The Pitch angle is an angle of rotation about a lateral axis (X-axis) and describes a degree of upward and downward tilting of an object. The Roll angle is an angle of rotation around a longitudinal axis (Y-axis) and describes a leftward and rightward tilting or rolling state of an object. For the X-axis, the Y-axis, and the Z-axis, refer to FIG. 9E.

10. Euler angle

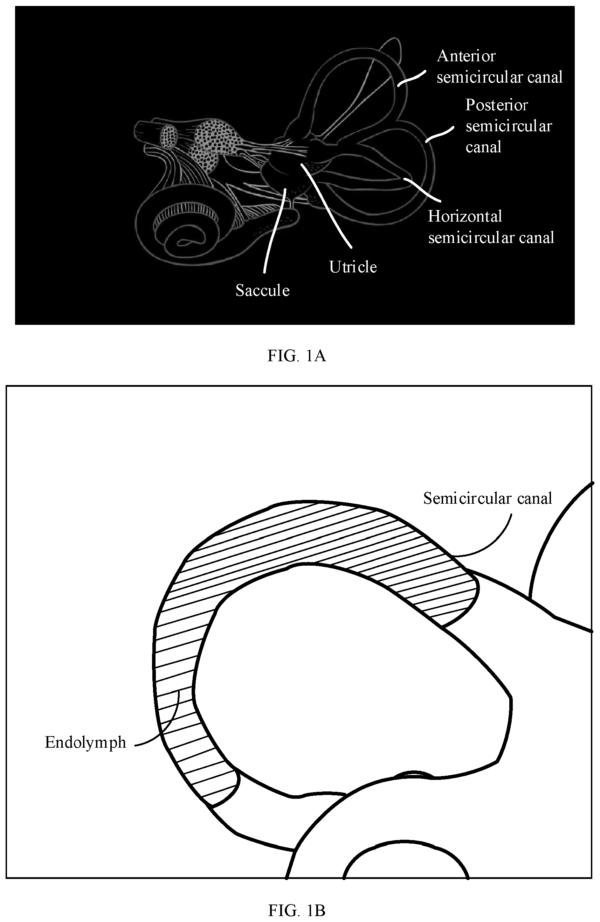

The Euler angle is a specific representation method of an attitude angle, and uses three angles to describe rotation of an electronic device in a three-dimensional space. A combination of Euler angles may be used to describe any direction of the electronic device relative to a fixed coordinate system. The Euler angle includes three angles, and is usually represented as a yaw angle (Yaw, $\beta$ or $\psi$), a pitch angle (Pitch, $\alpha$), and a roll angle (Roll, $\gamma$ or $\varphi$). In embodiments of this application, the attitude angle is represented by using an Euler angle.
The foregoing is a brief description of the terms included in the embodiments of this application, and details are not described again below.
When motion perceived by eyes does not match motion perceived by the vestibular system in the inner ear, it causes confusion in the brain. This confusion triggers a series of physiological reactions, including dizziness, nausea, vomiting, sweating, fainting, loss of appetite, increased salivation, balance disorders, and the like, which are medically known as motion sickness. Depending on different vehicles, motion sickness can be further categorized into carsickness, seasickness, airsickness (aviation motion sickness), space motion sickness, and the like.
For example, when a vehicle starts, accelerates, decelerates, or brakes, the vestibular organs in the inner ear sense a motion state of the vehicle relative to the ground, while the eyes perceive that an object inside the vehicle is not moving (for instance, when the user views an electronic screen while riding in the vehicle, the eyes see that a picture or a text displayed on the screen remains stationary). That is, the motion states perceived by the vision of the user and vestibular system are inconsistent, leading to confusion in the brain and resulting in symptoms such as dizziness.
For ease of understanding, embodiments of this application illustrate the principle of carsickness with reference to the accompanying drawings. Referring to FIG. 1A and FIG. 1B, FIG. 1A and FIG. 1B are schematic diagrams of a vestibular system according to an embodiment of this application.
As shown in FIG. 1A, our vestibular system mainly includes the saccule, the utricle, and the semicircular canals (including the anterior semicircular canal, the posterior semicircular canal, and the horizontal semicircular canal). The saccule and the utricle are mainly responsible for detecting linear acceleration, for example, the saccule can detect vertical motion, the utricle can detect horizontal motion, and the semicircular canals are mainly responsible for detecting rotational acceleration.
As shown in FIG. 1B, the semicircular canals are filled with endolymph. The endolymph flows within the semicircular canals and works together with the otolith organs to help us perceive the position and movement of the head, thereby maintaining the body's balance. For example, when a user's head suddenly undergoes rotational motion, the endolymph flows in an opposite direction due to inertia, thereby squeezing the hair cells inside the vestibular system, which, upon being stimulated, transmit neural signals to the brain, allowing the brain to determine the head's rotational speed and direction and thereby understand the body's current balance status.

When the user is riding in a vehicle, the brain simultaneously receives two different signals transmitted by the eyes and the vestibular system. The information fed back to the brain by the eyes is that the interior of the vehicle is very stable, whereas the feedback from the vestibular system indicates that the body has already lost its balance. Because the brain simultaneously receives two completely different pieces of information, the brain cannot determine authenticity of the information. Therefore, the brain mistakenly assumes this is a hallucination caused by a neurotoxin. Out of self-protection, the brain induces reactions such as nausea and vomiting to cleanse the neurotoxin, thereby generating symptoms of carsickness. Especially when the user is browsing a mobile phone, and the vehicle undergoes motion such as accelerating or decelerating, going uphill or downhill, jolting left or right, or turning left or right, carsickness symptoms of the user become more severe.

In view of this, this application provides a display method. A motion parameter (also referred to as sensor data) is collected by using an electronic device, and a target animation is generated based on the motion parameter. The target animation can map different driving/motion states of a vehicle in real time. It may be understood that, by using the electronic device, six directions of motion (namely forward-backward, up-down, left-right, pitch, roll, and yaw), highfrequency and low-frequency motion information, and horizontal motion information perceived by the user riding in the vehicle are mapped into the target animation. Because the eyes of the user are basically aligned with the electronic device, when the user watches the target animation, the motion information perceived by the eyes of the user is consistent with the motion information perceived by the vestibular system, that is, the motion state of the target animation in a display interface seen by the eyes of the user is consistent with the motion state of the vehicle relative to the ground perceived by the vestibular system of the user. Therefore, it is possible to reduce a conflict between the motion state perceived by the vision of the user and the motion state perceived by the vestibular system of the user, that is, through the target animation, coordinated and consistent visual feedback can be provided for the user relative to the vestibular system, thereby relieving motion sickness of the user.

The display method provided in this application can be applied to various scenarios involving motion of transportation vehicles. These transportation vehicles may include cars, trains, motor trains, electric trains, high-speed rails, subways, maglev trains, ships, airplanes, spacecrafts, and the like. It should be noted that in embodiments of this application, no limitation is imposed on the driving mode of the transportation vehicle. For example, the driving mode may be an autonomous driving mode or a manual driving mode.

For another example, the display method provided in this application may be further applied to an entertainment scenario. For example, the method is applied to scenarios based on motion of an amusement device, a virtual reality (Virtual Reality, VR) device, or an augmented reality (Augmented Reality, AR) device.

In this embodiment of this application, the method is described by using an example in which the method is applied to a scenario in which a vehicle is in motion and a user is browsing a screen of an electronic device.

The vehicle may be any type of vehicle that carries people and/or goods and is propelled by an internal combustion engine, an electric motor, hybrid power, a battery, solar energy, or the like, including but not limited to an automobile, a bus, a car, a truck, a coach, a tricycle, a tram, a recreational vehicle, a golf cart, a train, an electric multiple unit train, a high-speed electric multiple unit passenger train, an amusement vehicle, a playground device, a construction device, and the like. A specific type of the vehicle is not limited in this embodiment of this application.

In this embodiment of this application, the electronic device may be a mobile phone, a smart screen, a tablet computer, a wearable device (such as a smartwatch, smart glasses, a smart band, a smart ring, a headset, or the like), an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a handheld or a laptop device, a media player, a smart projector, a smart TV, a desktop computer, a vehicle-mounted infotainment system, or the like. A specific type of the electronic device is not limited in this embodiment of this application. It should be noted that the electronic device in this embodiment of this application may be any one or a combination of the foregoing devices.

It may be understood that, for a portable electronic device, such as a mobile phone, a tablet computer, a wearable device (such as a smartwatch, smart glasses, a smart band, a smart ring, or a headset), an augmented reality (augmented reality, AR)/virtual reality (virtual reality, VR) device, a notebook computer, a handheld device, or a laptop device, a user may carry such a device, so that when riding in a vehicle, the user can browse content displayed on screens by using these portable electronic devices.

Optionally, for an electronic device that is not easy to carry, for example, a smart projector, a smart TV, or a desktop computer, such a device may be installed in a vehicle in advance, for example, installed in a recreational vehicle or a golf cart. When riding in the vehicle, the user can browse the content displayed on the screens of these electronic devices installed in the vehicle.

Optionally, when the electronic device is a vehicle-mounted infotainment system, the vehicle-mounted infotainment system may be installed in any type of vehicle in advance. When riding in the vehicle, the user can browse displayed content of the vehicle-mounted infotainment system through a display screen of the vehicle-mounted infotainment system.

The display screen of the vehicle-mounted infotainment system may include but is not limited to a central control screen, a co-pilot screen, a rear seat screen, an instrument, and a head-up display.

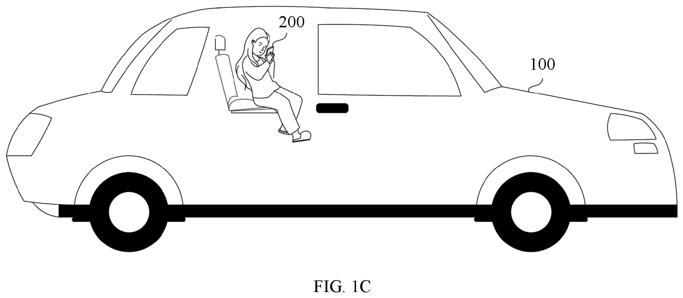

Referring to FIG. 1C, FIG. 1C is a schematic diagram of an application scenario of a display method according to an embodiment of this application. As shown in FIG. 1C, a user rides in a vehicle 100, and in a driving process of the vehicle 100, the user browses content displayed on a screen of an electronic device 200. In the scenario shown in FIG. 1C, the user browses the content displayed on the screen in a manner of holding the electronic device 200. In a possible implementation, the electronic device 200 may alternatively be fastened to the vehicle 100. For example, a mobile phone is fastened to a bracket in the vehicle for use by the user.

When the vehicle 100 undergoes motion such as accelerating or decelerating, going uphill or downhill, jolting left or right, or turning left or right, the vestibular organs in the inner ear of the user perceive a motion state of the vehicle 100 relative to the ground, while the eyes see that a picture displayed by the electronic device 200 does not move, thus causing inconsistency between the motion state perceived by the vision of the user and the motion state perceived by the vestibular system, resulting in confusion in the brain and symptoms of dizziness.

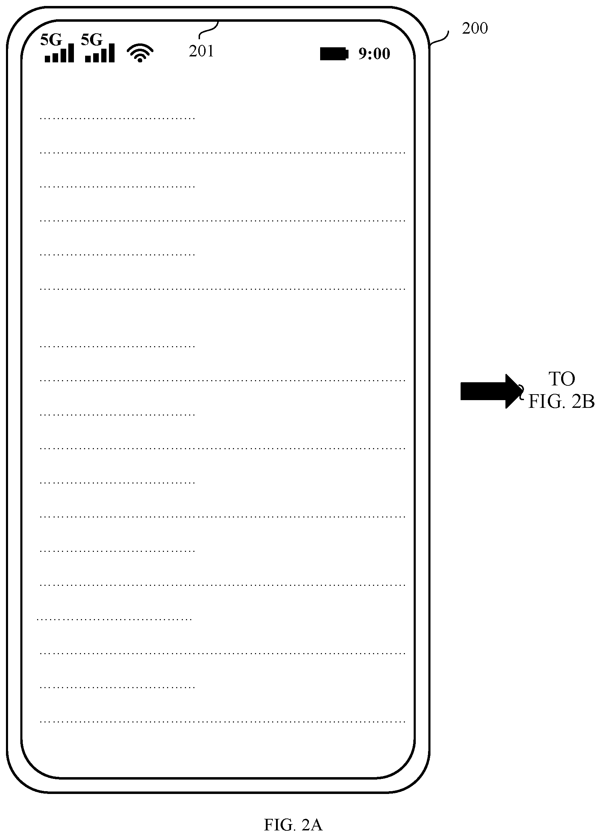

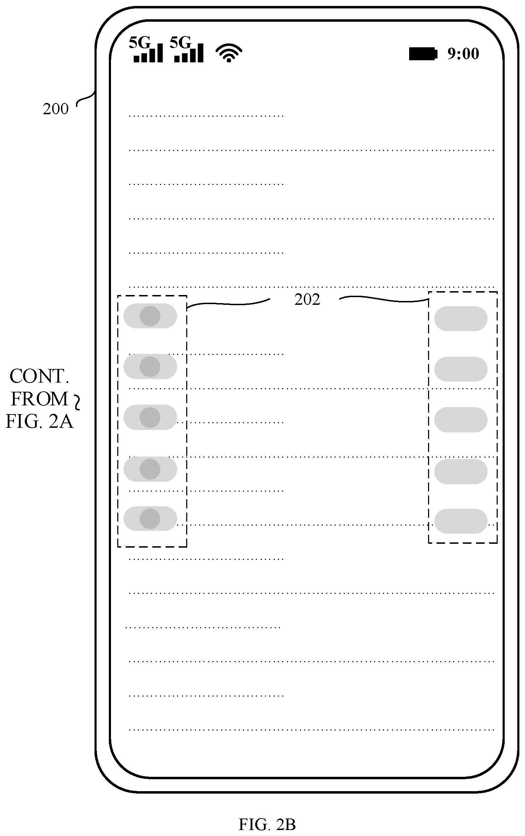

Based on this, this application provides a display method, so as to relieve motion sickness of a user. Referring to FIG. 2A and FIG. 2B, FIG. 2A and FIG. 2B are schematic diagrams of a display interface of an electronic device according to an embodiment of this application. Based on the scenario shown in FIG. 1C, that is, in a driving state (or referred to as a motion state) of the vehicle 100, the user is riding in the vehicle 100 and browsing the content displayed on the screen of the electronic device 200. In a possible implementation, in a scenario in which a carsickness relief function/mode (also referred to as an anti-carsickness function/mode) of the electronic device 200 is not enabled, regardless of which driving state the vehicle 100 is detected to be in, the display interface of the electronic device 200 displays a normal page, such as a page 201 shown in FIG. 2A. It should be understood that content in the page 201 shown in FIG. 2A is merely an example description. In an actual application scenario, the content in the displayed page is not limited.

In another possible implementation, in a scenario in which the carsickness relief function/mode (also referred to as the anti-carsickness function/mode) of the electronic device 200 is enabled and the driving state of the vehicle 100 (such as accelerating or decelerating, going uphill or downhill, jolting left or right, or turning left or right) is detected, the display interface of the electronic device 200, on the basis of displaying the page 201, superimposes or displays in a floating manner a target animation 202.

The target animation 202 is used to simulate a motion state of the vehicle 100 and present the motion state to the user, that is, the target animation 202 may dynamically simulate a motion characteristic of the vehicle 100 in the driving state (such as accelerating or decelerating, going uphill or downhill, jolting left or right, or turning left or right), and feed back the motion characteristic to the user in real time. That is, the target animation 202 simulated in real time is always consistent with a real-time motion state of the vehicle 100. When the user holds the electronic device 200 or the electronic device 200 is fastened in the vehicle 100, the eyes of the user watch the target animation 202 displayed in the display interface. The motion state of the target animation 202 visually perceived by the user is consistent with the motion state of the vehicle 100 relative to the ground perceived by the inner ear vestibular organs of the user. Therefore, the conflict between the motion state perceived by the vision of the user and the motion state perceived by the vestibular system can be reduced, thus relieving motion sickness of the user. It should be understood that the target animation 202 shown in FIG. 2B is merely an example, and a visual style of the target animation 202 in an actual scenario is not limited.

The carsickness relief function/mode may be enabled based on a first operation. The first operation may include at least one of a tap operation, a slide operation, a voice operation, a gesture operation, a long press operation, face recognition, eye movement recognition, head tracking, or the like for enabling the motion sickness relief function switch.

Optionally, in a possible implementation, the carsickness relief function/mode may be implemented by using a developed application (for example, a motion sickness relief application), and therefore, enabling the anti-motion sickness function/mode is equivalent to starting the application based on the first operation. In an example, the first operation may be a tap operation. For example, an icon of a motion sickness relief application is displayed on the display interface, the user taps the icon, and the electronic device starts the motion sickness relief application in response to the tap operation performed by the user on the icon. In another example, the first operation may alternatively be a voice operation, for example, the user wakes up the motion sickness relief application via voice, the electronic device responds to the language wake-up operation of the user, and starts the motion sickness relief application.

It should be understood that a deployment manner of the application (for example, the motion sickness relief application) is not limited in this application. For example, the application may be designed as a utility, a daily application, or the like in a system of the electronic device, or may be designed as third-party software, so that the user can independently download and install the application.

Optionally, an embodiment of this application further provides a method for enabling an anti-motion sickness function/mode. The method includes: when it is detected that a condition for a pop-up window to pop up is met, enabling a pop-up window to pop up on a display interface of an electronic device, where the pop-up window is used to prompt/query a user whether to enable an anti-motion sickness function/mode, and the pop-up window may be further used to prompt the user that the anti-motion sickness function/mode is enabled or the anti-motion sickness function/mode is disabled.

In an example, the pop-up window may include a smart recommendation card, and in response to an operation performed on the smart recommendation card to enable the anti-motion sickness function/mode, the electronic device enables the anti-motion sickness function/mode, for example, the electronic device enables the motion sickness relief application. Alternatively, in response to an operation performed on the smart recommendation card to refuse to enable the anti-motion sickness function/mode, the electronic device does not enable the anti-motion sickness function/mode, for example, the electronic device does not enable the motion sickness relief application.

Optionally, a quantity of the pop-up window popping up on the display interface is not limited, and may be one or more times. It should be understood that when the pop-up window pops up for a plurality of times, a time interval between two consecutive times of the pop-up window popping up is not limited.

Optionally, after the user performs an enable operation or a refuse-to-enable operation on the smart recommendation card, the electronic device may disable the smart recommendation card, that is, does not display the smart recommendation card on the display interface.

A card recommendation condition may include detecting that the user has entered any one mode of a vehicle riding mode, a ship riding mode, and an aircraft riding mode.

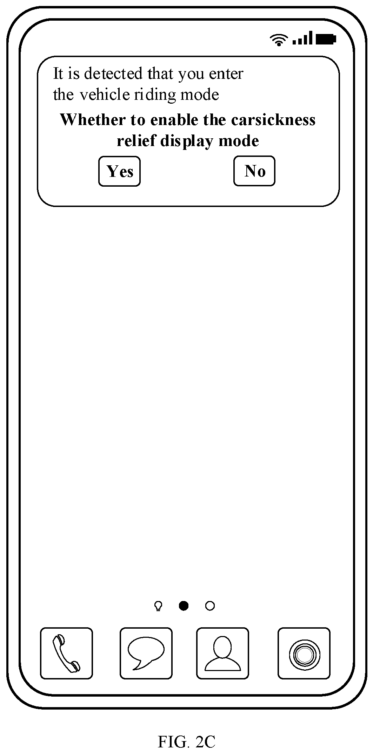

Referring to FIG. 2C, FIG. 2C is a schematic diagram of a smart recommendation card according to an embodiment of this application. As shown in FIG. 2C, the display interface displays a pop-up smart recommendation card. The smart recommendation card includes prompt information "you are detected to enter the vehicle riding mode" and "whether to enable the motion sickness relief display mode"; and further includes a control for enabling the carsickness relief function such as a control "yes", and further includes a control for refusing to enable the motion sickness relief function, such as a control "no". The user may select "yes" or "no" according to a requirement of the user. The electronic device responds to the operation of the user, and enables the anti-motion sickness function/mode, or refuses to enable the anti-motion sickness function/mode.

For example, the user taps the control "yes" in the smart recommendation card, and the electronic device responds to the tap operation of the user on the control "yes", starts the motion sickness relief application, and may display an interface shown in FIG. 2B.

Optionally, in a possible implementation, the condition for a pop-up window to pop up may further include, after detecting that the user has entered any one mode of a vehicle riding mode, a ship riding mode, an aircraft riding mode, and the like, detecting whether a handheld angle (such as a Pitch angle and a Roll angle) corresponding to the electronic device has been maintained within a preset angle range for preset duration. For example, the user holds the electronic device, and a screen mode may be a landscape mode, or may be a portrait mode. It is detected that the Pitch angle corresponding to the electronic device is within a first preset angle range, and the Roll angle corresponding to the electronic device is within a second preset angle range. In addition, this handheld angle is maintained for the preset duration, and it is determined that the electronic device meets the condition for a pop-up window to pop up.

The first preset angle range, the second preset angle range, and the preset duration may be set and adjusted according to an actual scenario, which is not limited. For example, the first preset angle range corresponding to the Pitch angle may be -20°~90°, the second preset angle range corresponding to the Roll angle may be -20°~20°, and the preset duration may be 5s, 8s, 10s, or the like.

Optionally, when the electronic device supports a front-facing auto focus function (such as a front-facing itof function and a front-facing AO camera), the condition for a pop-up window to pop up may further include, after detecting that the user has entered any one mode of a vehicle riding mode, a ship riding mode, an aircraft riding mode, and the like, detecting whether the user gazes at a preset region for preset gaze duration. If the user gazes at the preset region for the preset gaze duration, a pop-up window automatically pops up. The preset region may include an eye-tracking region on the screen. The preset gaze duration may be set and adjusted according to an actual scenario, which is not limited. For example, the preset gaze duration may be 3 seconds, 5 seconds, 8 seconds, 1 minute, 2 minutes, 5 minutes, or the like.

In this pop-up window popping up manner, an operation of enabling the anti-motion sickness function/mode is simplified, efficiency is improved, and user experience is improved.

Optionally, in a possible implementation, an embodiment of this application further provides a method for enabling an anti-motion sickness function/mode. The method includes: displaying a control center interface (for example, an interface corresponding to a status bar) on a display interface in response to a slide-downward operation at a top of the display interface. A motion sickness relief mode icon is displayed on the control center interface of the electronic device, and the user may quickly enable the anti-motion sickness function/mode by tapping the motion sickness relief mode icon.

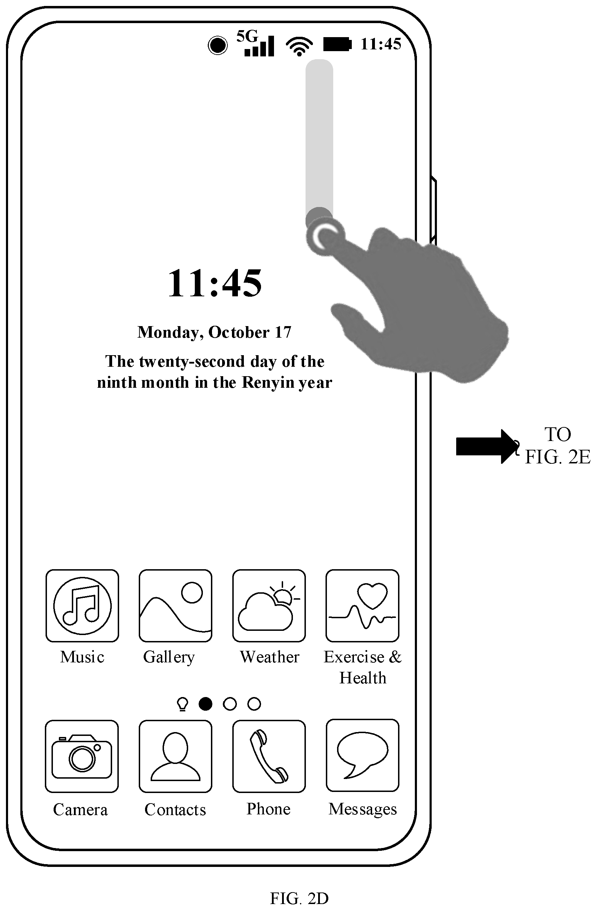

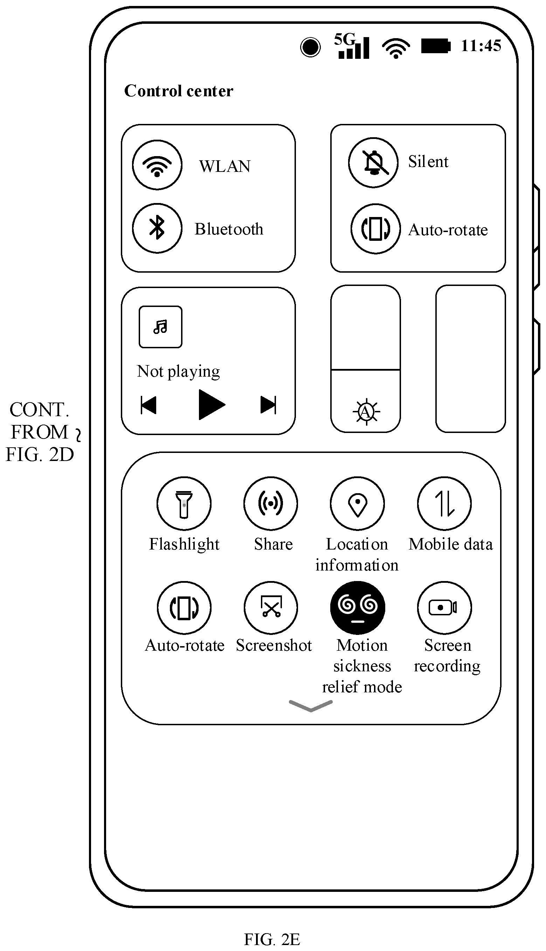

Referring to FIG. 2D and FIG. 2E, FIG. 2D and FIG. 2E are a schematic diagram of quickly enabling a motion sickness relief mode according to an embodiment of this application. As shown in FIG. 2D, the user may perform a slide-downward operation at the top of the screen (such as a right side of the top), for example, a single-finger slide-downward operation. The electronic device responds to the single-finger slide-downward operation of the user, and opens the interface corresponding to the status bar. Refer to the interface shown in FIG. 2E. A motion sickness relief mode icon may be displayed on the interface corresponding to the status bar. When the user taps the motion sickness relief mode icon, the electronic device responds to an operation of tapping the motion sickness relief mode icon by the user, and quickly enables the anti-motion sickness function/mode. After the anti-motion sickness function/mode is enabled, the electronic device may display the interface shown in FIG. 2B.

In this implementation, an operation of enabling the anti-motion sickness function/mode is simplified, efficiency is improved, and user experience is improved.

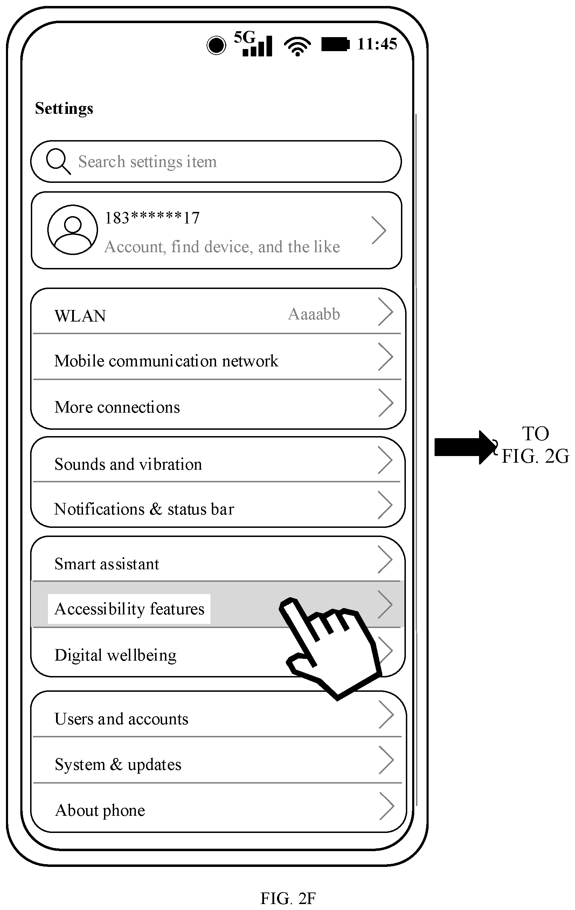

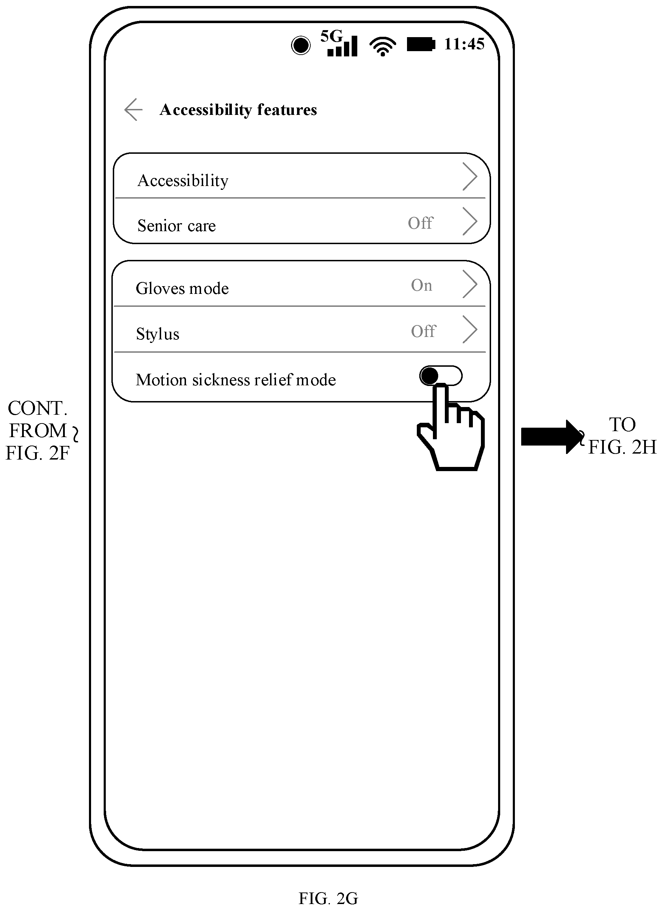

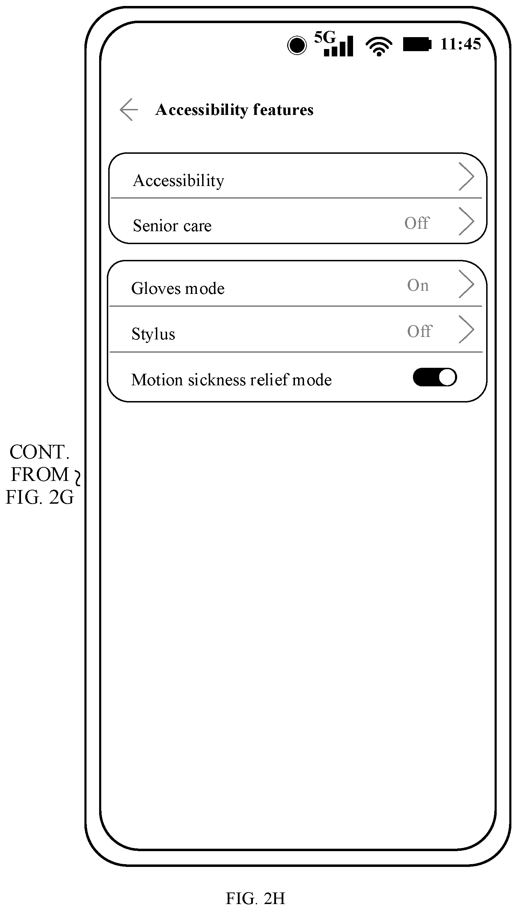

Optionally, in a possible implementation, an embodiment of this application further provides a method for enabling an anti-motion sickness function/mode. Referring to FIG. 2F to FIG. 2H, FIG. 2F to FIG. 2H are another schematic diagram of quickly enabling a motion sickness relief mode according to an embodiment of this application. For example, the user enables a "settings" function in the electronic device, and the electronic device displays a settings interface, as shown by a settings interface in FIG. 2F. The settings interface may include options such as a notification and a status bar, a smart assistant, and an accessibility feature. The user selects the "accessibility feature" option by performing a tap operation, and the electronic device responds to the tap operation of the user to display an accessibility feature interface, as shown in FIG. 2G. The accessibility feature interface may include a motion sickness relief mode option and a switch corresponding to the motion sickness relief mode, and the switch is configured to enable or disable the anti-motion sickness function/mode. When the user taps the switch corresponding to the motion sickness relief mode shown in FIG. 2G, the electronic device displays the interface shown in FIG. 2H and enables the anti-motion sickness function/mode. After the anti-motion sickness function/mode is enabled, the electronic device may display the interface shown in FIG. 2B.

Optionally, in a possible implementation, an embodiment of this application further provides a prompt method. The method includes: displaying a prompt interface on the display interface when it is detected that the anti-motion sickness function/mode is enabled for the first time. For example, the prompt interface may include "user notice" content (such as the principle of motion sickness and how to use the motion sickness relief application), functional value content, implementation principle content, and target animation effect demonstration content. In this implementation, when the anti-motion sickness function/mode is enabled for the first time, the user is prompted by using the prompt interface to read the principle that the target animation in the motion sickness relief application can relieve motion sickness, so that the user can quickly understand and use the motion sickness relief application, thereby better relieving motion sickness.

It should be noted that the target animation 202 presented in this application can perform adaptive rendering according to the content displayed on the page 201. For example, the electronic device 200 can adjust a color of the target animation 202 according to a color of the page 201, so that the color of the target animation 202 is consistent with or contrasts with the color of the page 201, which helps the user perceive the target animation 202 in different scenarios and watch the target animation 202. For another example, the electronic device 200 can adjust opacity of the target animation 202, so that the target animation 202 does not obscure the content displayed on the page 201 or the like. In this way, a degree of integration between the target animation and the content displayed on the display interface can be improved, and an intrusion sense brought by the target animation to the content displayed on the display interface can be reduced, thereby improving a feedback effect of the target animation and improving user experience.

In still another possible implementation, in a scenario in which the carsickness relief function/mode (or referred to as the anti-carsickness function/mode) of the electronic device 200 is enabled, if it is detected that the vehicle 100 is in an ignition-off state, a stationary state, a uniform speed driving/steady driving state, etc., to enhance browsing experience of the user, the target animation 202 is not displayed on the display interface of the electronic device 200. In this scenario, from the user's view, the display interface of the electronic device 200 displays a normal page, as shown in the page 201 in FIG. 2A.

Not displaying the target animation 202 may be achieved by hiding the target animation 202, closing the target animation 202, adjusting transparency of the target animation 202, adjusting a stacking order of the target animation 202, adjusting a priority of the target animation 202, setting the target animation 202 to be invisible, and the like.

**The following first describes the composition of the target animation provided in this application with reference to the accompanying drawings.**

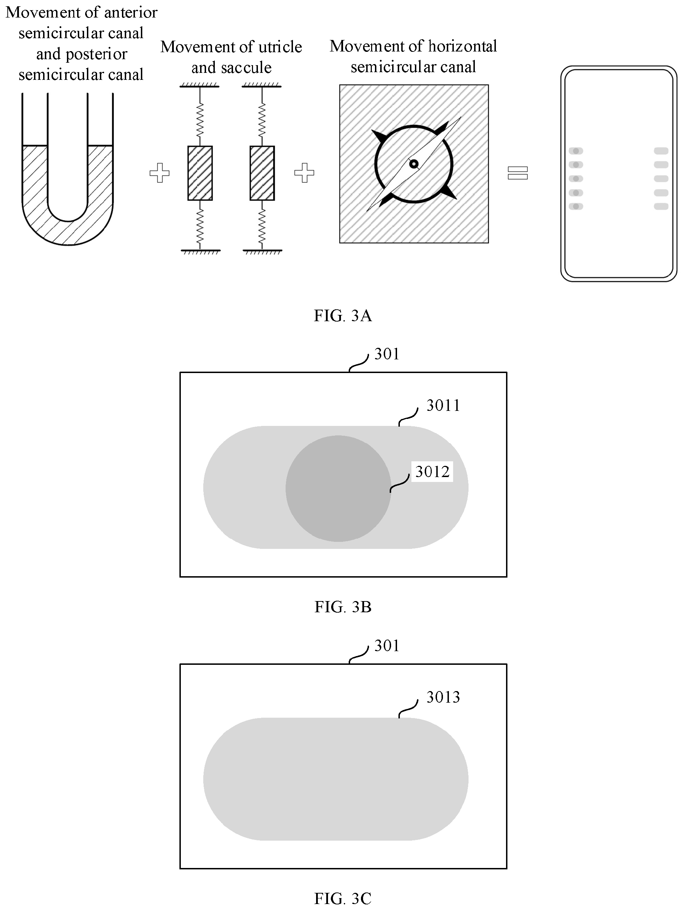

The target animation in this application is based on the principle of carsickness, or rather, designed based on the vestibular system perception principle, and integrates motion information of the anterior semicircular canal, the posterior semicircular canal, the utricle, the saccule, and the horizontal semicircular canal. Referring to FIG. 3A, FIG. 3A is a design diagram of a target animation according to an embodiment of this application. As shown in FIG. 3A, motion information detected by the anterior semicircular canal and the posterior semicircular canal in the vestibular system of the user, motion information detected by the utricle and the saccule, as well as motion information detected by the horizontal semicircular canal, are mapped into the target animation.

The target animation provided in this application has various visual styles, so as to adapt to different analog requirements and target audiences.

For example, the target animation is used to simulate different driving/motion states of the vehicle. The visual style of the target animation may include a water ripple style, a wave style, a particle motion style, a line style, a board style (such as rollerblading and skateboarding), a person motion style, a track style, a two-dimensional animation style, and a three-dimensional (3Dimensions) animation style. For example, water ripples, waves, particles, lines, rollerblading, skateboarding, tracks, and the like are used to simulate motion trajectories of the vehicle in different driving/motion states.

In this embodiment of this application, the user may select target animations of different styles according to a preference of the user. Correspondingly, the electronic device displays target animations of different styles on the display interface according to different selections of the user.

For ease of understanding, in this embodiment of this application, the visual style of the target animation being a track style is used as an example for description. The target animation of the track style includes at least one animation element, such as Sprite. The animation element refers to a two-dimensional image displayed on the display screen/display interface of the electronic device. Therefore, in this application, the animation element may also be referred to as a display image, a motion image, a two-dimensional image, or the like. Referring to FIG. 3B to FIG. 3L, FIG. 3B to FIG. 3L are schematic diagrams of a plurality of target animations according to an embodiment of this application.

In a possible implementation, as shown in FIG. 3B, an animation element 301 (or referred to as a display image 301) may include a track element 3011 and a movable element 3012. In this example, the track element 3011 may refer to an image of a track style displayed on the display screen/display interface of the electronic device, and the movable element 3012 may refer to a movable image displayed on the display screen/display interface of the electronic device. The track element 3011 is located at a lower layer of the movable element 3012, correspondingly, the movable element 3012 is located at an upper layer of the track element 3011, and the movable element 3012 may move freely in any direction in a track formed by the track element 3011. Generally, a size of the movable element 3012 is less than a size of the track element 3011. Therefore, when the movable element 3012 moves in the track element 3011, motion characteristics of the vehicle in different driving/motion states can be more clearly fed back. It should be understood that, in this embodiment of this application, the electronic device may adaptively adjust a display size of the track element 3011 and/or the movable element 3012, or the user may adjust a display size of the track element 3011 and/or the movable element 3012 according to a preference of the user, so that more different target animations can be generated, and more different animation effects are presented.

It should be noted that the visual style of the track element 3011 shown in FIG. 3B is a runway-type track style. This runway-type track style is merely an example and does not impose a limitation on the visual style of the track element 3011 in an actual scenario. For example, the visual style of the track element 3011 may be a rectangular style, a circular style, a wave line style, or an irregular style.

Similarly, the visual style of the movable element 3012 shown in FIG. 3B is a small ball style, which does not limit the visual style of the movable element 3012 in an actual scenario. For example, the visual style of the movable element 3012 may alternatively be a geometric style (such as a rectangular style, an oval style, or a star style), an animal style, a person style, a cartoon style, a plant style, or a special shape style.

Optionally, the visual styles of the track element and the movable element may be customized. For example, the user sets a picture or a custom graph, and uses the picture or the custom graph as the visual style of the track element and/or the movable element.

Optionally, the visual styles of the track element and the movable element may be changed in real time according to current weather, season, environment, road condition, path, and the like. For example, the visual style of the movable element may alternatively be a droplet style, a sunshine (sun) style, a snowflake style, a leaf style, a bubble style, or a stone style.

In another possible implementation, as shown in FIG. 3C, the animation element 301 may include only the track element 3013. Similarly, the visual style of the track element 3013 shown in FIG. 3C is a runway-type track style, and the runway-type track style is merely shown as an example, which does not limit the visual style of the track element 3013 in an actual scenario. In this implementation, because the movable element is reduced, complexity of a target animation formed by an animation element based on this type is low, so that the target animation is easier to maintain. In addition, a memory resource of the electronic device is further saved, and power consumption of the electronic device is reduced.

In still another possible implementation, the animation element may include only the movable element. In this implementation, because the track element is reduced, complexity of a target animation formed by an animation element based on this type is low, so that the target animation is easier to maintain. In addition, a memory resource of the electronic device is further saved, and power consumption of the electronic device is reduced.

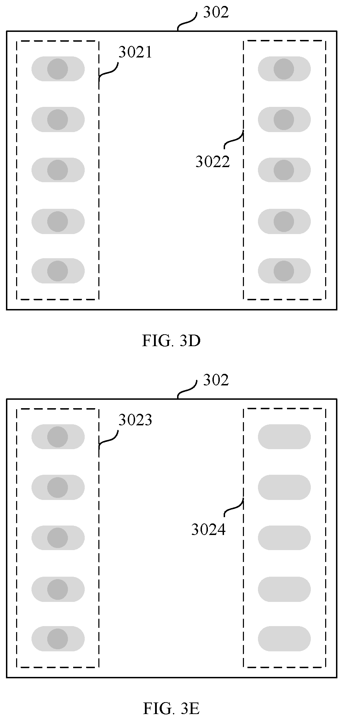

The foregoing describes an animation element that forms a target animation with reference to FIG. 3B and FIG. 3C. The following describes a target animation formed based on a plurality of animation elements with reference to FIG. 3D to FIG. 3F.

In this embodiment of this application, the target animation may include one or more animation elements. When the target animation includes a plurality of animation elements, several animation elements are arranged in a preset arrangement manner to obtain an element group. One or more element groups are constructed based on this manner, and a target animation is constructed based on at least one element group. The preset arrangement manner may include a linear arrangement (such as a horizontal linear arrangement or a vertical linear arrangement), a group arrangement, an aligned arrangement, a parallel arrangement, an interleaved arrangement, a column arrangement, a matrix arrangement, a stack arrangement, a dynamic arrangement, a modular arrangement, and the like.

In an example, as shown in FIG. 3D, a target animation 302 may include a track group 3021 and a track group 3022. The track group 3021 is obtained by performing vertical linear alignment on five animation elements by the electronic device, and the track group 3022 is the same. It may be understood that a quantity of animation elements that constitute a track group shown in FIG. 3D is merely an example, and a quantity of animation elements that constitute a track group in an actual scenario may be more or less than a quantity of animation elements shown in FIG. 3D. In this implementation, each track group includes a movable element, so that an animation subsequently simulated by using the movable element is more flexible and coordinated, motion characteristics of the vehicle in different driving/motion states can be presented more truly, and visual experience of the user is enhanced.

In another example, as shown in FIG. 3E, the target animation 302 may include a track group 3023 and a track group 3024. A difference from the target animation shown in FIG. 3D is that each animation element in the track group 3024 on the right side shown in FIG. 3E does not include a movable element.

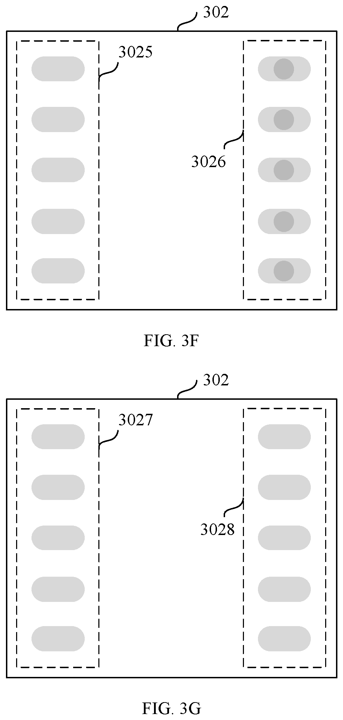

In still another example, as shown in FIG. 3F, the target animation 302 may include a track group 3025 and a track group 3026. A difference from the target animation shown in FIG. 3D is that each animation element in the left track group 3025 shown in FIG. 3F does not include a movable element.

In another example, as shown in FIG. 3G, the target animation 302 may include a track group 3027 and a track group 3028. A difference from the target animation shown in FIG. 3D is that each animation element in the track group 3027 and the track group 3028 shown in FIG. 3G does not include a movable element.

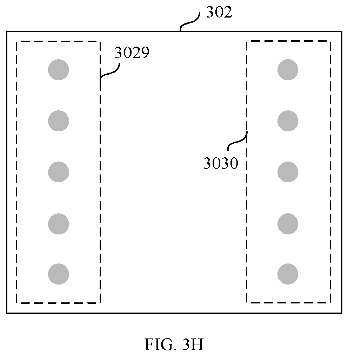

In still another example, as shown in FIG. 3H, the target animation 302 may include a track group 3029 and a track group 3030. A difference from the target animation shown in FIG. 3D is that each animation element in the track group 3029 and the track group 3030 shown in FIG. 3H includes only a movable element. It should be understood that the target animation 302 may alternatively include only the track group 3029 or the track group 3030, and positions of the track group 3029 and/or the track group 3030 on the display interface are not limited.

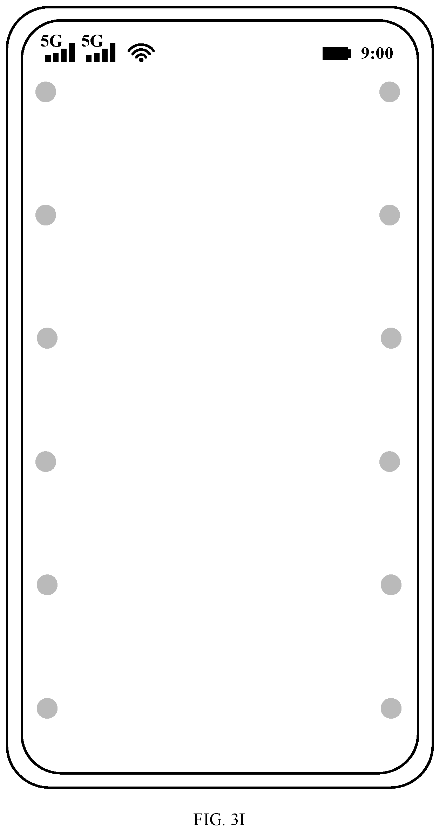

In another example, movable elements in the target animation may be evenly distributed in a preset region of the electronic device, as shown in FIG. 3I.

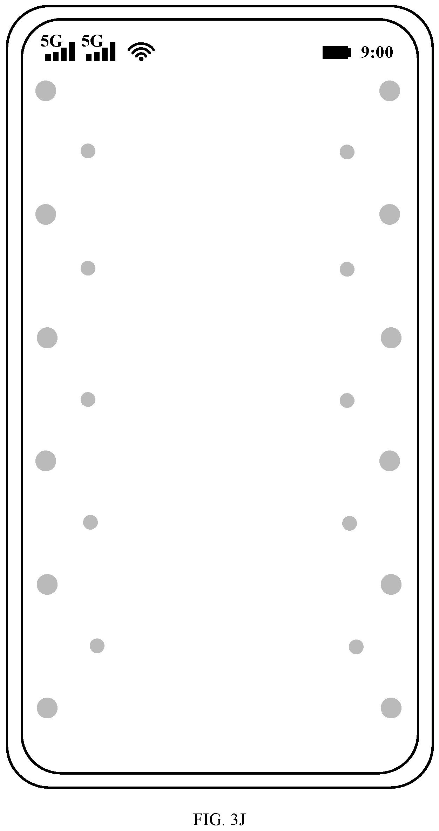

In still another example, movable elements in the target animation may be evenly distributed in a preset region of the electronic device in different display sizes and different display quantities, as shown in FIG. 3J. Compared with the target animation shown in FIG. 3I, in the target animation shown in FIG. 3J, there are two columns of movable elements on each side, and display sizes are different.

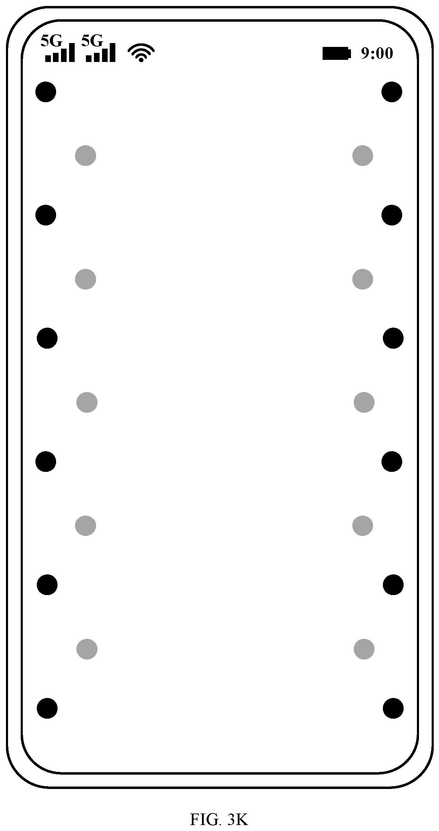

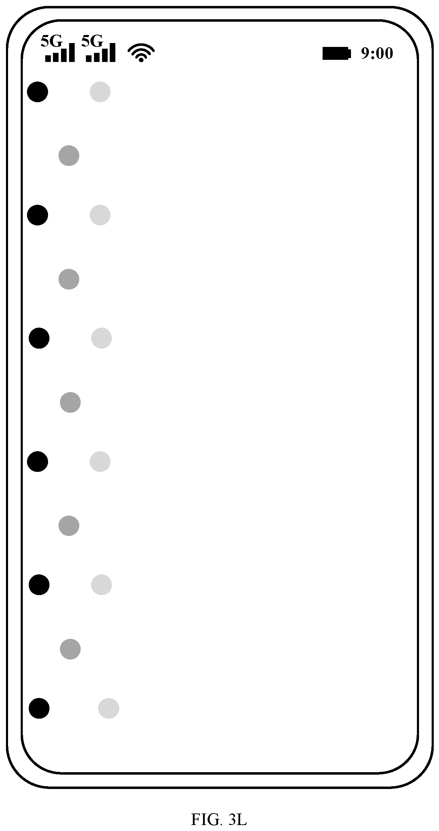

In another example, movable elements in the target animation may be distributed in a preset region of the electronic device in different display colors and/or different transparency, as shown in FIG. 3K. Compared with the target animation shown in FIG. 3I, in the target animation shown in FIG. 3K, there are two columns of movable elements on each side, and display colors and/or transparency are different. Further, in the target animation shown in FIG. 3L, there are three columns of movable elements on each side, and display colors and/or transparency of each column of movable elements are different. It should be noted that the target animation may alternatively be displayed on only one side, which is not shown in the figure.

It should be understood that the display methods for the target animations shown in FIG. 3B to FIG. 3L are merely exemplary illustrations. In a practical application process, various different display manners can be generated based on any combination of different quantities of animation elements, an arrangement manner, a display color, a display size, a display region (display position), transparency, a visual style, a movement method, a movement speed, and a movement effect (such as a fade-in/fade-out effect, a cyclic fade-in/fade-out effect, a scrolling effect, or a trailing effect).

In the foregoing several implementations, either the track element is reduced or the movable element is reduced, thereby lowering overall complexity of the target animation, making the target animation easier to maintain. In addition, this also saves the memory resource of the electronic device and reduces power consumption of the electronic device.

**The following describes a display manner of the target animation in the display interface of the electronic device with reference to the accompanying drawings.**

In this embodiment of this application, a scenario in which the target animation includes two track groups, and animation elements in each track group include a movable element is used as an example for description.

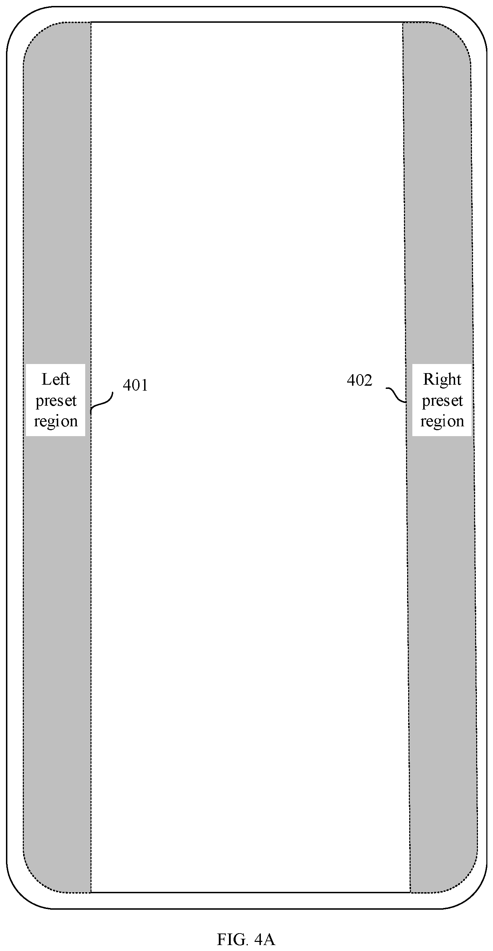

In an example, the user uses a portrait mode of the electronic device (such as a mobile phone), that is, a screen/display interface layout of the electronic device (such as a mobile phone) is vertical, and the two track groups of the target animation may be separately distributed in a preset region of the electronic device. Referring to FIG. 4A, FIG. 4A is a schematic diagram of a preset region according to an embodiment of this application. As shown in FIG. 4A, the preset region may include a left preset region 401 and/or a right preset region 402. The right preset region 402 is a rectangular touch region that extends to the left from the right edge of the screen, and the left preset region 401 is a rectangular touch region that extends to the right from the left edge of the screen.

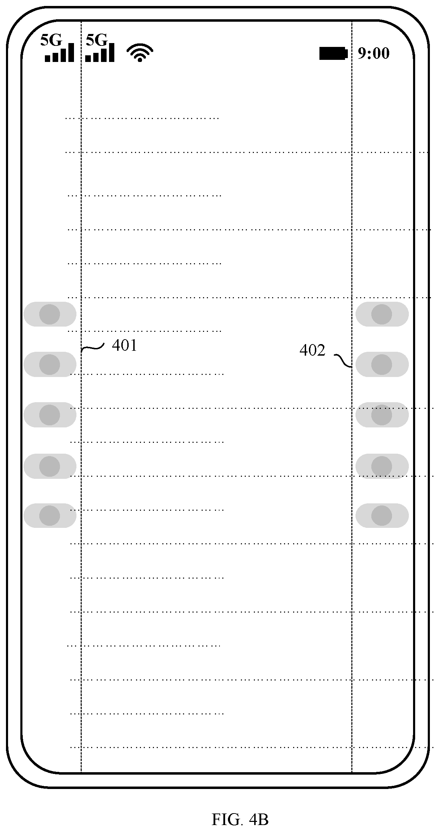

Referring to FIG. 4B, FIG. 4B is a schematic diagram of a display manner of a target animation according to an embodiment of this application. As shown in FIG. 4B, when the electronic device (such as a mobile phone) is in a portrait mode, the two track groups of the target animation are separately distributed in the left preset region and the right preset region.

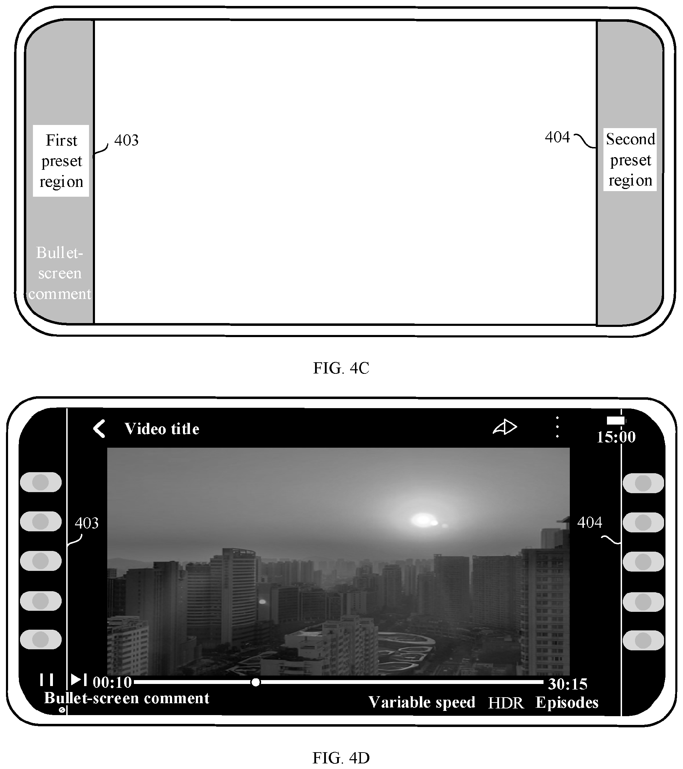

In another example, the user uses a landscape mode of the electronic device (such as a mobile phone), that is, the screen/display interface layout of the electronic device (such as a mobile phone) is horizontal, and the two track groups of the target animation may still be distributed in the preset region of the electronic device. Different from the portrait mode, the preset region in the landscape mode changes. Referring to FIG. 4C, FIG. 4C is a schematic diagram of another preset region according to an embodiment of this application. As shown in FIG. 4C, the preset region may include a first preset region 403 and/or a second preset region 404.

Referring to FIG. 4D, FIG. 4D is a schematic diagram of another display manner of a target animation according to an embodiment of this application. As shown in FIG. 4D, when the electronic device (such as a mobile phone) is in a landscape mode, the two track groups of the target animation are separately distributed in the first preset region 403 and the second preset region 404.

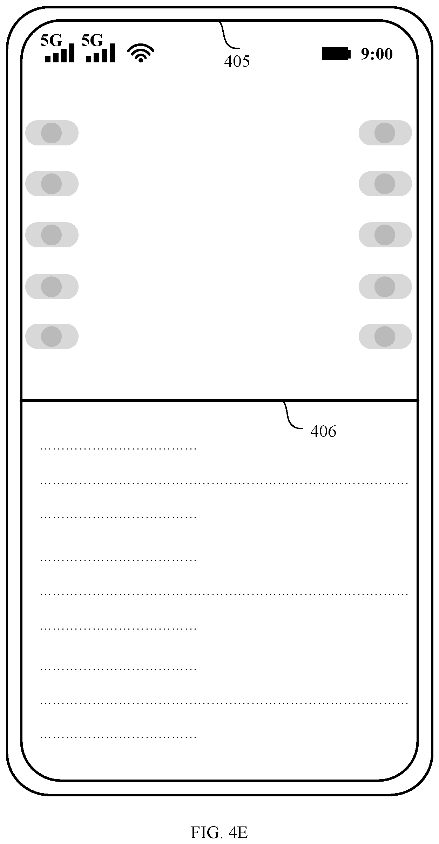

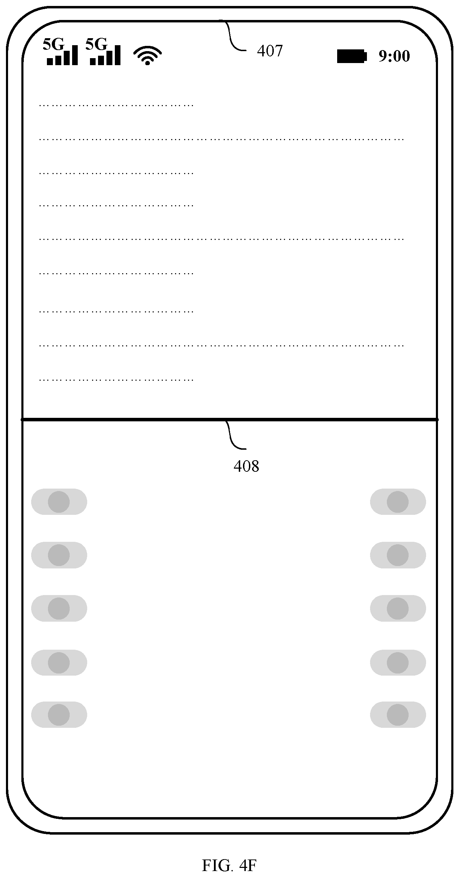

In still another example, the user uses a split-screen mode of the electronic device (such as a mobile phone), that is, the display interface of the electronic device (such as a mobile phone) is divided into two or more independent display regions, and each display region may independently run different applications or display different content. In this application scenario, the target animation may be displayed in any independent display region. Referring to FIG. 4E and FIG. 4F, FIG. 4E and FIG. 4F are schematic diagrams of still another display manner of a target animation according to an embodiment of this application. As shown in FIG. 4E, the display interface of the electronic device (such as a mobile phone) is divided into a display region 405 and a display region 406. The display region 406 is configured to display a normal page (for example, content corresponding to an application or a system interface), and the display region 405 is configured to independently display a target animation, display the target animation in a floating manner, or display the target animation in a superimposed manner.

For example, independently displaying the target animation means that only the target animation is displayed in the display region 405, and no other page is displayed. Displaying the target animation in a superimposed manner means that in addition to displaying the target animation in the display region 405, another page may be displayed. The another page may include a color background (using a single color or a gradient color as the background), an image background (using any image as the background), a texture background (using a texture pattern as the background), a normal page (for example, content corresponding to an application and a system interface), and a dynamic background. Displaying the target animation in a floating manner means that the target animation is displayed in a floating manner above another page displayed in the display region 405. It may be understood that a window corresponding to the target animation provided in this application is a floating window, and the floating window may be displayed in a floating manner above another page without blocking or interfering with normal use of the another page.

As shown in FIG. 4F, the display interface of the electronic device (such as a mobile phone) is divided into a display region 407 and a display region 408. A difference from FIG. 4E is that the target animation in FIG. 4F is displayed in the display region below the display interface, that is, is displayed in the display region 408. It should be understood that, in an actual application scenario, the user may select, according to a preference of the user, to display the target animation in different display regions. Correspondingly, the electronic device displays the target animation in different display regions according to different selections of the user.

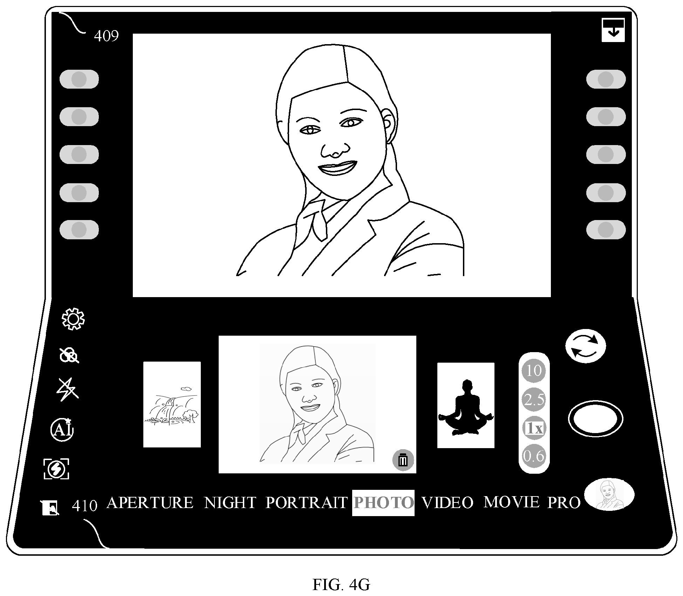

In another example, the electronic device used by the user is a foldable-screen device. When the foldable-screen device is in a folded state, the screen may be divided into two independent display regions, and each display region may independently run different applications or display different content. In this application scenario, the target animation may be displayed in any independent display region. Referring to FIG. 4G, FIG. 4G is a schematic diagram of yet another display manner of a target animation according to an embodiment of this application. As shown in FIG. 4G, the screen of the electronic device is divided into a display region 409 and a display region 410. The display region 409 is configured to independently display a target animation, display the target animation in a floating manner, or display the target animation in a superimposed manner, and the display region 410 is configured to display a normal page (for example, content corresponding to an application or a system interface). Optionally, in a possible implementation, the display region 410 may also be configured to independently display the target animation, display the target animation in a floating manner, or display the target animation in a superimposed manner, and correspondingly, the display region 409 may also be configured to display a normal page (for example, content corresponding to an application or a system interface).

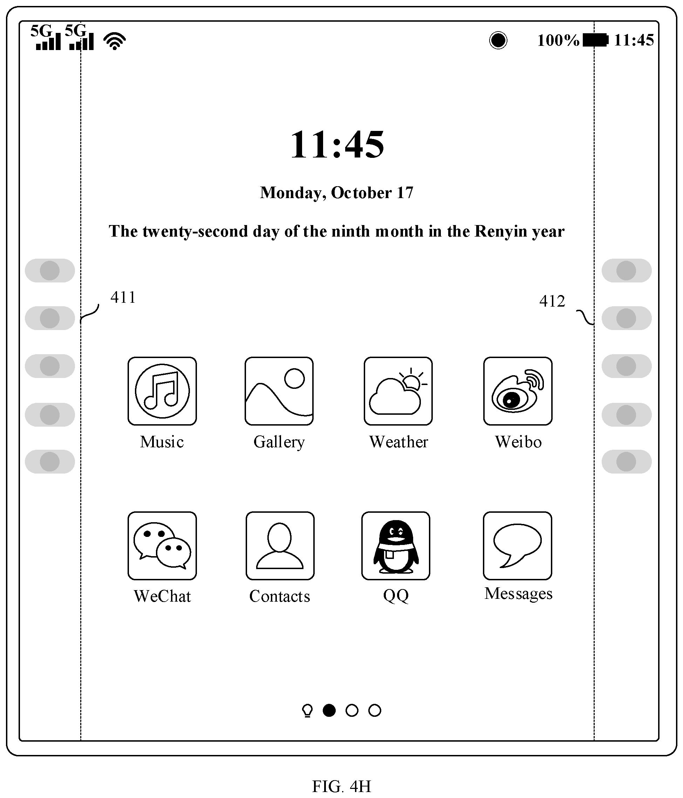

When the foldable-screen device is in an unfolded state, the entire screen may be used as a continuous display region, and the two track groups of the target animation may be distributed in the preset region of the electronic device. Referring to FIG. 4H, FIG. 4H is a schematic diagram of still another display manner of a target animation according to an embodiment of this application. As shown in FIG. 4H, the two track groups of the target animation are respectively distributed in a left preset region 411 and a right preset region 412.

It should be noted that the display manner of the target animation on the display interface of the electronic device may be flexibly adjusted, and a display manner in an actual application scenario prevails, which is not limited.

The foregoing describes the display manners of the target animation on the display interface of the electronic device with reference to the accompanying drawings, and the following describes animation effects of the target animation simulating the vehicle in different driving/motion states with reference to the accompanying drawings.

**Animation effect** 1. The target animation simulates an animation effect of the vehicle in a steady driving/motion state.

The steady driving/motion state refers to a state in which the vehicle, during driving/motion, maintains a stable speed and direction, without involving sudden acceleration, deceleration, turning, uphill/downhill movement, jolting, and the like. In the steady driving/motion state, the vehicle runs smoothly and continuously.

For example, when the vehicle is detected to be in a steady driving/motion state (such as an ignition-off state, a stationary state, or a temporary parking state), the target animation is controlled to be located in the preset region of the display interface of the electronic device. The preset region may be any region in the display interface. For example, the preset region may include regions on left and right sides (a left preset region 401 and a right preset region 402 shown in FIG. 4A, or a first preset region 403 and a second preset region 404 shown in FIG. 4C, or a left preset region 411 and a right preset region 412 shown in FIG. 4H) of the display interface, an upper region (for example, an upper one-third region of the display interface, or a top status bar region) of the display interface, a lower region (for example, a lower one-third region of the display interface, or a lower status bar region) of the display interface, a center region of the display interface (for example, a region other than the upper region and the lower region), or a combination of any plurality of regions.

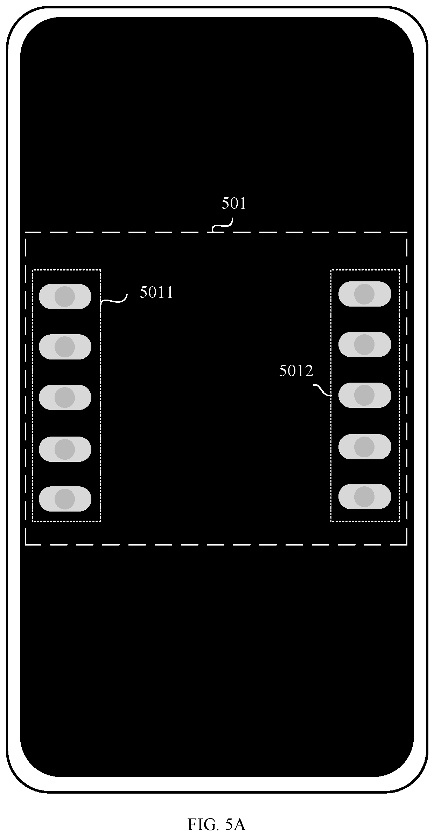

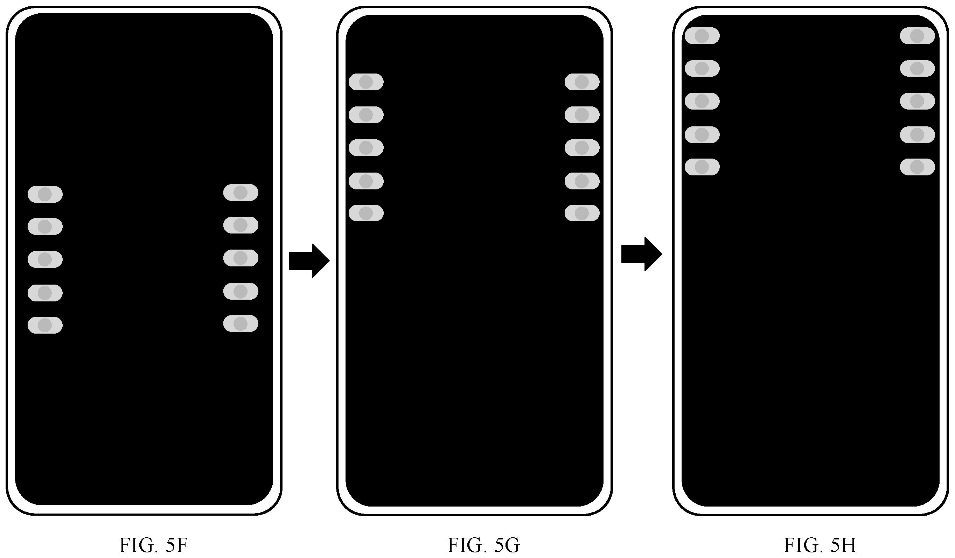

In this embodiment of this application, that the target animation is located in the preset region of the electronic device is used as an example for description. Referring to FIG. 5A, FIG. 5A is a schematic diagram of an animation effect according to an embodiment of this application. As shown in FIG. 5A, a target animation 501 includes two track groups, which are respectively a track group 5011 and a track group 5012. Animation elements in each track group include a movable element. When it is detected that the vehicle is in a steady driving/motion state, the track group 5011 of the target animation 501 is controlled to be located in a middle position of the preset region on the left, and the track group 5012 is controlled to be located in a middle position of the preset region on the right.

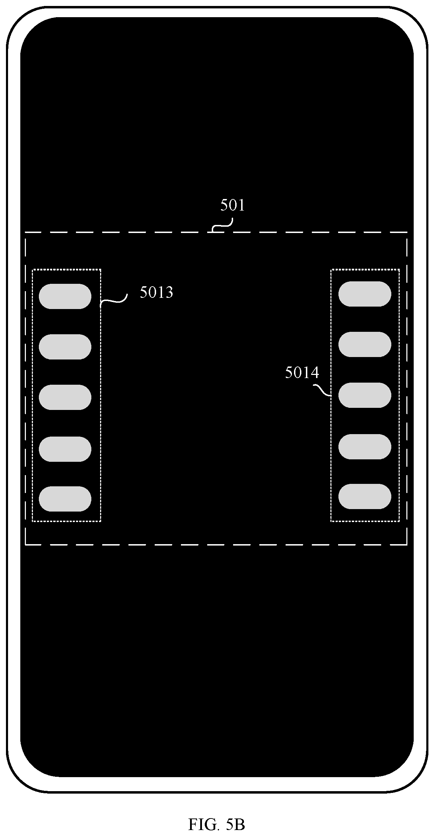

Referring to FIG. 5B, FIG. 5B is a schematic diagram of another animation effect according to an embodiment of this application. A difference between the target animation shown in FIG. 5B and the target animation shown in FIG. 5A is that neither the animation element in the track group 5013 nor the track group 5014 includes a movable element.

It should be understood that a visual style of the target animation shown in FIG. 5A and FIG. 5B, a quantity of animation elements, a color of the animation element, an arrangement manner of the animation element, and a position of the target animation are all shown as examples, and no limitation is imposed on the target animation in an actual application scenario.

It should be noted that in this embodiment and subsequent embodiments, to better display the animation effect of the target animation, a normal page (such as content corresponding to an application and a system interface) displayed on the display interface of the electronic device is replaced with a black background. In an actual application scenario, the target animation may be independently displayed on the display interface, displayed on a normal page in a floating manner, or displayed on a normal page in a superimposed manner. The user can select different display modes according to a preference of the user. Correspondingly, the electronic device displays the target animation in different display manners according to different selections of the user.

Optionally, in a possible implementation, the electronic device may adaptively adjust a display size of the target animation. For example, the electronic device may adaptively adjust the display size of the target animation based on the currently obtained type of the electronic device in use, a screen mode (such as a landscape mode, a portrait mode, a split-screen mode, or a foldable screen mode), a screen size/display interface size, and the like. For example, the electronic device is a mobile phone, the screen mode is a portrait mode, a screen resolution of the mobile phone is 1400×640, a size of a track in a track element is adjusted to 66×30, and a diameter of a small ball in a movable element is adjusted to 25. This is merely an example description, and is not limited.

Optionally, in a possible implementation, because visual sensitivity of each user is different, for some users, a greater feedback degree of the target animation brings a greater degree of visual impact and a better effect of relieving motion sickness. For example, in some scenarios, the greater the motion amplitude of the vehicle, the greater the deformation amplitude of the target animation, and the greater the feedback degree it presents. For some other users, the smaller the feedback degree of the target animation, the more comfortable the visual experience is, and the more effectively the target animation relieves motion sickness.

Optionally, in the display method provided in this embodiment of this application, the user may further adjust a size of any one or more elements in the target animation according to a preference of the user. Correspondingly, the electronic device responds to an operation of adjusting a size by the user, and displays the target animation with an adjusted size.

Optionally, in a possible implementation, when it is detected that the vehicle is in an ignition-off state or a stationary state, the target animation may also be controlled to be located at a first position on the display interface of the electronic device.

Optionally, in a possible implementation, when it is detected that the acceleration of the vehicle is relatively small, the target animation may also be controlled to be located at a first position on the display interface of the electronic device. A case in which acceleration is relatively small refers to the acceleration being less than a first acceleration threshold, or the acceleration being within a first acceleration range. It should be understood that the first acceleration threshold and the first acceleration range may be set and adjusted according to an actual situation, which is not limited herein. For example, the first acceleration threshold may be 0.3 meters per second squared, 0.5 meters per second squared, or the like, and the first acceleration range may be 0.1 to 0.3 meters per second squared, 0.1 to 0.5 meters per second squared, or the like.

Optionally, in a possible implementation, when it is detected that the vehicle is continuously in a steady driving/motion state, or an ignition-off state, or a stationary state, or a scenario with a relatively small acceleration, the electronic device can adaptively adjust the transparency of the target animation. "Continuously being in" refers to being in within first preset duration. It should be understood that the first preset duration may be set and adjusted according to an actual situation, which is not limited. For example, the first preset duration may be 300 milliseconds, 500 milliseconds, 1 second, 2 seconds, 1 minute, 2 minutes, or 5 minutes.

For example, when it is detected that the vehicle is continuously in a steady driving/motion state, the electronic device can automatically enable a transparency enhancement mode. The transparency enhancement mode is used to increase the transparency of the target animation, causing the target animation to gradually become transparent and eventually fully transparent, making it invisible to the user.

Correspondingly, when it is detected that the vehicle is no longer in a scenario such as a steady driving/motion state, an ignition-off state, a stationary state, or with a relatively small acceleration, the electronic device can automatically enable a transparency reduction mode. The transparency reduction mode is used to reduce the transparency of the target animation, causing the target animation to gradually become solid and making it visible to the user. It should be understood that even if the transparency of the target animation is reduced, the target animation does not completely obscure a normal page displayed on the display interface, that is, normal display of the normal page is not affected, and the user can still clearly see content in the normal page.

For example, the electronic device may adjust the transparency of the target animation based on an RGBA (Red, Green, Blue, Alpha) color space model. For example, the transparency of the target animation is adjusted by adjusting an alpha (Alpha) channel of the target animation. In the RGBA color space model, R is red (Red), G is green (Green), B is blue (Blue), and A is transparency (Alpha).

Optionally, whether the transparency of the target animation is improved or the transparency of the target animation is reduced, a change in the transparency of the target animation may be a smooth and gradual transition process. For example, when the transparency of the target animation is improved, the target animation gradually changes from an opaque state to a transparent state, thereby exhibiting a fade-out effect. For another example, when the transparency of the target animation is reduced, the target animation gradually changes from a transparent state to an opaque state, thereby exhibiting a fade-in effect. This transition manner enhances a visual effect, makes the target animation look more natural, and improves user experience.

Optionally, in a possible implementation, when it is detected that the vehicle is continuously in a steady driving/motion state, an ignition-off state, a stationary state, or a scenario with a relatively small acceleration, the electronic device can also make the target animation not visible to the user by hiding the target animation, closing the target animation, adjusting a stacking order of the target animation, setting the target animation to be invisible, adjusting the priority of the target animation, minimizing the target animation, and the like. In this implementation, when the vehicle is in these states, the degree of carsickness of the user is relatively low. In this case, the target animation is not visible to the user, completely avoiding any intrusion of the target animation on the normal page and improving browsing experience of the user.

Optionally, in a possible implementation, the electronic device can also determine how to adjust the transparency of the target animation based on a parameter such as an offset of the animation element and/or a horizontal angular velocity corresponding to the animation element, as detailed in the description of subsequent embodiments.

Optionally, in a possible implementation, due to differences in visual sensitivity among users, for some users, the higher the transparency of the target animation, the lower the sense of intrusion on the normal page, resulting in a more comfortable visual experience for the users, thereby more effectively relieving motion sickness. For some other users, the lower the transparency of the target animation, the stronger visual impact of the user is, thereby more effectively relieving motion sickness. Therefore, in the display method provided in this embodiment of this application, the user may further adjust the transparency of the target animation according to a preference of the user. Correspondingly, the electronic device responds to an operation of adjusting the transparency by the user and displays the target animation with the adjusted transparency.

It should be noted that, whether the electronic device adaptively adjusts the transparency of the target animation or the user adjusts the transparency of the target animation, transparency of any one or more elements in the target animation may be adjusted.

**Animation effect 2.** The target animation simulates animation effects of the vehicle in a driving/motion state such as going uphill/downhill and experiencing vertical jolting.

In a possible implementation scenario, the uphill/downhill driving/motion state refers to the vehicle proceeding along a road with a specific slope during driving/motion. In another possible implementation scenario, the uphill/downhill driving/motion state also refers to the vehicle reversing along a road with a specific slope during driving/motion. Vertical jolting of the vehicle, depending on different conditions of a road surface, may be either random or regular. For example, when the vehicle passes over a speed bump, jolting motion is regular.

In this embodiment of this application, up-down movement/vertical movement of an element group (such as a track group) in the target animation within the display interface is used to represent (or map) uphill/downhill motion of the vehicle in the real world.

For example, when the vehicle is performing uphill motion, the track group in the target animation on the display interface moves downward. For example, if a change in slope per unit angle (such as 1°) is detected, the target animation moves by a first pixel value. By using the target animation in such a scenario, an effect of the vehicle performing uphill motion can be simulated.

For another example, when the vehicle is performing downhill motion, the track group in the target animation on the display interface moves upward. For example, if a change in slope per unit angle (such as 1°) is detected, the target animation moves by a second pixel value. By using the target animation in such a scenario, an effect of the vehicle performing downhill motion can be simulated.

It should be understood that the first pixel value and the second pixel value may be set and adjusted according to an actual situation, and the first pixel value and the second pixel value may be the same or different, which is not limited herein. For example, the first pixel value may be 20, 40, 60, or 80, and the second pixel value may be 20, 40, 60, or 80.

Optionally, in a possible implementation, a lower boundary threshold for moving downward and an upper boundary threshold for moving upward are preset for the track group. The lower boundary threshold is a limit of a lowest position that can be reached when the track group moves downward in the display interface, and the upper boundary threshold is a limit of a highest position that can be achieved when the track group moves upward in the display interface. It should be understood that the lower boundary threshold and the upper boundary threshold may be set and adjusted according to the screen size/the display interface size of the electronic device. In this implementation, a boundary threshold is set for the track group, so as to ensure that the track group moves within a specific range, effectively prevent the track group from moving beyond a visual range of the screen/display interface, ensure that the user can always see movement of the track group in the target animation, improve visual experience of the user, and better relieve carsickness symptoms of the user.

Optionally, in a possible implementation, the lower boundary threshold and the upper boundary threshold may alternatively be set and adjusted according to the screen size/the display interface size of the electronic device and a length of the track group. In this way, it can be ensured that the track group does not completely move beyond the visual range of the screen/display interface. That is, in some possible implementation scenarios, the track group may move beyond a part of the screen/display interface, but not completely beyond the visual range of the screen/display interface. In this implementation, the track group is allowed to move beyond a part of the screen/display interface, giving the user a sense of dynamic expansion, helping the user better focus on the target animation, thereby better relieving carsickness symptoms of the user.

Optionally, in a possible implementation, an initial position of the track group in the target animation is preset. The initial position is used to display the track group in the initial position when the target animation is displayed on the display interface for the first time. The initial position may be set and adjusted according to an actual situation, which is not limited. For example, the initial position may include the central region of the screen/display interface, or a central region corresponding to the preset region of the electronic device (a position of the track group shown in FIG. 4B). In this implementation, when the track group in the target animation is displayed for the first time, the track group is located in a middle position of the screen/display interface, so that when the track group moves upward or downward, it can be ensured that the track group does not directly exceed the visual range of the screen/display interface, so that the user can always see movement of the track group in the target animation, improve visual experience of the user, and better relieve carsickness symptoms of the user.

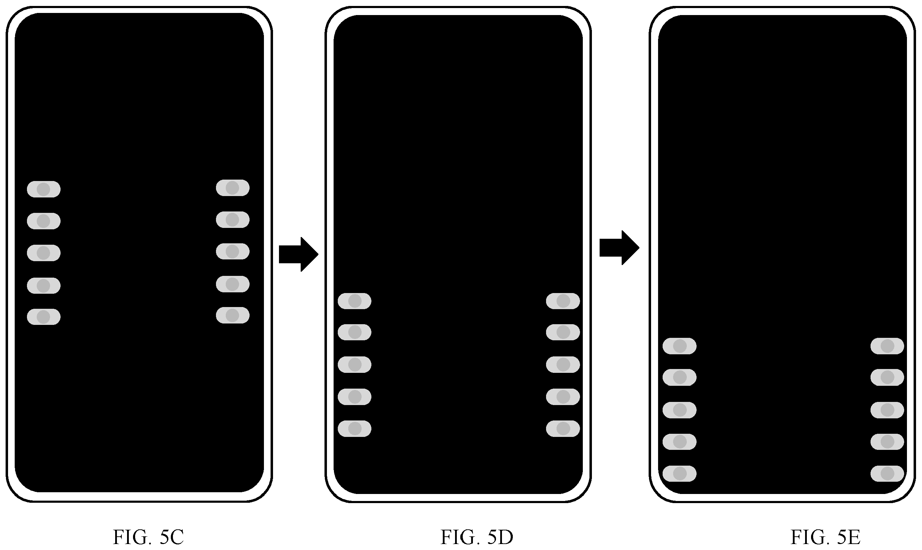

Referring to FIG. 5C to FIG. 5E, FIG. 5C to FIG. 5E are schematic diagrams of an uphill animation effect according to an embodiment of this application. As shown in FIG. 5C, the two track groups of the target animation are in the initial position. For example, the two track groups of the target animation are in the central region corresponding to the preset region of the electronic device. As shown in FIG. 5D and FIG. 5E, when it is detected that the vehicle performs uphill motion, the track group of the target animation in the display interface gradually moves downward.

Referring to FIG. 5F to FIG. 5H, FIG. 5F to FIG. 5H are schematic diagrams of a downhill animation effect according to an embodiment of this application. As shown in FIG. 5F, the two track groups of the target animation are in the initial position. For example, the two track groups of the target animation are in the central region corresponding to the preset region of the electronic device. As shown in FIG. 5G and FIG. 5F, when it is detected that the vehicle performs downhill motion, the track group of the target animation in the display interface gradually moves upward.

It may be popularly understood as that the electronic device (such as a mobile phone) in the vehicle is initially placed at an inclined angle on a horizontal plane, a small ball is placed inside the mobile phone, when the vehicle moves, the mobile phone also moves, and when the mobile phone moves, the small ball also moves accordingly. When the vehicle is performing uphill motion, the front end of the vehicle is raised relative to the ground, the front end of the mobile phone also tilts upward, and correspondingly, the small ball moves downward. When the vehicle is performing downhill motion, the front end of the vehicle is lowered relative to the ground, the front end of the mobile phone also tilts downward, and correspondingly, the small ball moves upward. It should be understood that the small ball is used here only as an example to illustrate the principle of the target animation simulating uphill and downhill motion of the vehicle. In an actual application scenario, no limitation is imposed on an actual style of the target animation.

For example, in a possible implementation, the electronic device may adaptively adjust a display size of each animation element in the target animation and a spacing between animation elements. For example, the electronic device may adaptively adjust a display size of each track (for example, widening and/or lengthening the track), a display size of each small ball, a spacing between tracks, and a spacing between track groups.

For example, in another possible implementation, the user may further adjust the display size of each track, the display size of each small ball, the spacing between tracks, and the spacing between track groups according to the preference of the user. In the two implementations, the target animation may present various visual effects to meet different visual requirements of the user.

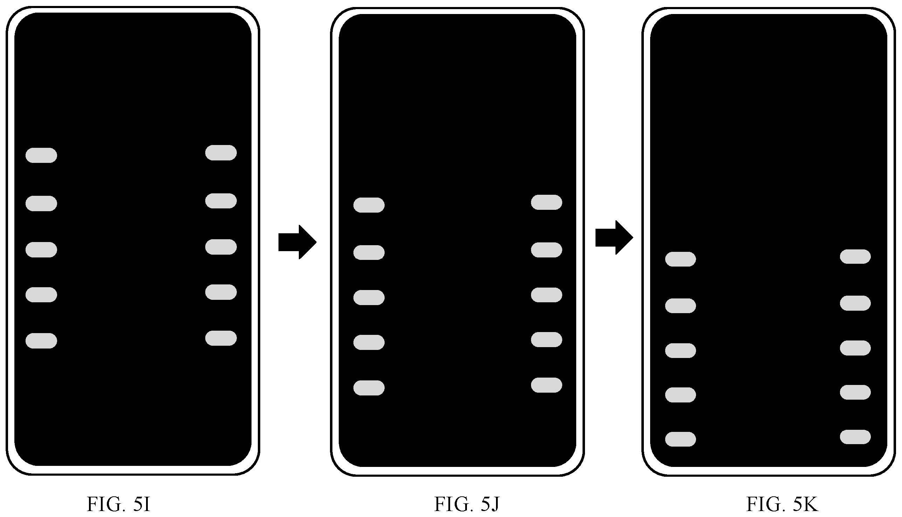

Referring to FIG. 5I to FIG. 5K, FIG. 5I to FIG. 5K are schematic diagrams of another uphill animation effect according to an embodiment of this application. As shown in FIG. 5I, the two track groups of the target animation are in the initial position. For example, the two track groups of the target animation are in the central region corresponding to the preset region of the electronic device. A difference from the target animation shown in FIG. 5C is that a distance between tracks of the target animation shown in FIG. 5I is large, and an animation element in the target animation does not include a movable element (for example, a small ball-style movable element). As shown in FIG. 5J and FIG. 5K, when it is detected that the vehicle performs uphill motion, the track group of the target animation in the display interface gradually moves downward.

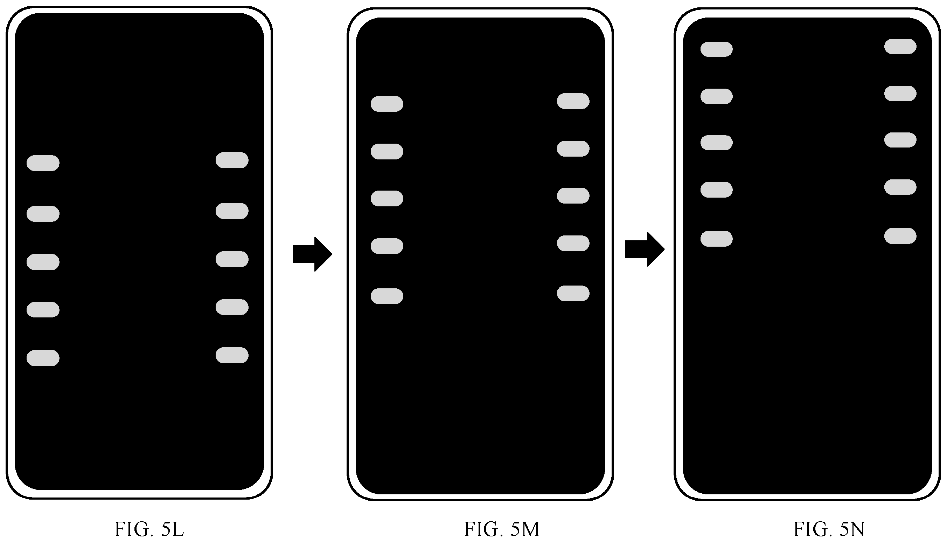

Referring to FIG. 5L to FIG. 5N, FIG. 5L to FIG. 5N are schematic diagrams of another downhill animation effect according to an embodiment of this application. As shown in FIG. 5L, the two track groups of the target animation are in the initial position. As shown in FIG. 5M and FIG. 5N, when it is detected that the vehicle performs downhill motion, the track group of the target animation in the display interface gradually moves upward.

Whether the user is holding the electronic device or the electronic device is fastened inside the vehicle, when the user uses the electronic device within the vehicle, the user subconsciously keeps the electronic device relatively stationary relative to the eyes of the user, thereby achieving that the motion state of the vehicle is basically consistent with the motion state of the electronic device, and the motion state of the electronic device is basically consistent with the motion state of the body of the user. That is, the motion state of the body of the user and the motion state of the electronic device have similarity. In this solution, the motion state of the electronic device is mapped out through the target animation, which is equivalent to mapping out the motion state of the vehicle through the target animation, while the eyes of the user remain basically consistent with the electronic device. When the user watches the target animation, the motion information perceived by the eyes of the user is consistent with the motion information perceived by the vestibular system, that is, the motion state of the target animation in a display interface seen by the eyes of the user is consistent with the motion state of the vehicle relative to the ground perceived by the vestibular system of the user. Therefore, it is possible to reduce a conflict between the motion state perceived by the vision of the user and the motion state perceived by the vestibular system of the user, that is, through the target animation, coordinated and consistent visual feedback can be provided for the user relative to the vestibular system, thereby relieving motion sickness of the user.

**Animation effect 3.** The target animation simulates animation effects of the vehicle in driving/motion states such as left-right tilting and left-right jolting.

Left-right tilting refers to left or right tilting of the vehicle body relative to the horizon line; it can also refer to left-right swaying of a ship's hull due to waves while onboard. This corresponds to changes in the Roll angle within the attitude angle. When mapped to the target animation, the presented animation effect is as follows: A track group on one side moves upward, while a track group on the other side moves downward. Simultaneously, the track groups also self-rotate to reflect a corresponding tilt angle. Inclination angles of the track groups on both sides can form a visual indication of the degree to which the current vehicle/ship hull/aircraft body is tilted relative to the horizon line.

Left-right jolting may refer to jolting motion experienced by the vehicle when driving on an uneven road due to a bumpy surface, or left-right rolling motion of an aircraft caused by an airflow change while on an aircraft. In addition to the change in the Roll angle, left-right jolting more reflects the change in the horizontal X-axis acceleration. The change in the horizontal X-axis acceleration, when mapped to the target animation, presents one animation effect: The track group on one side moves upward, while the track group on the other side moves downward.

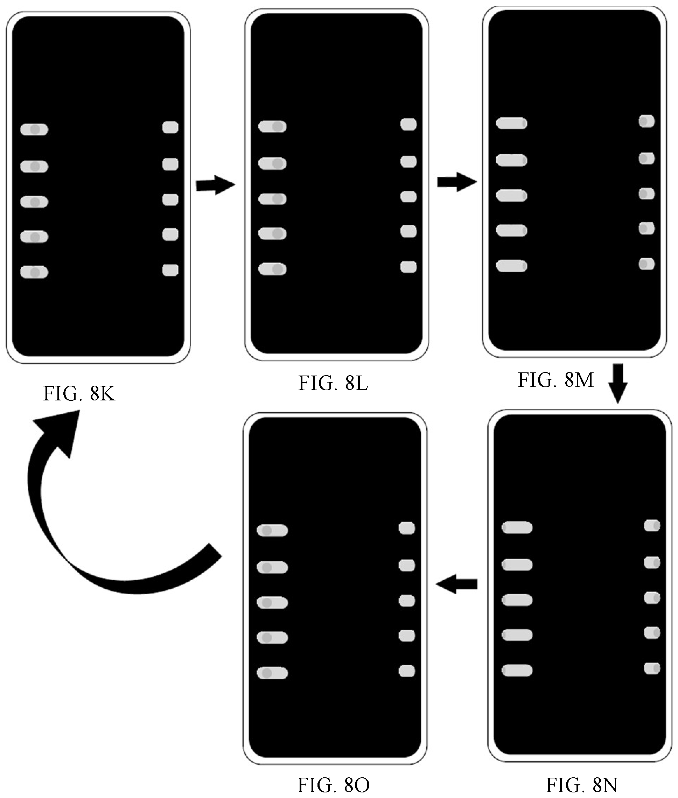

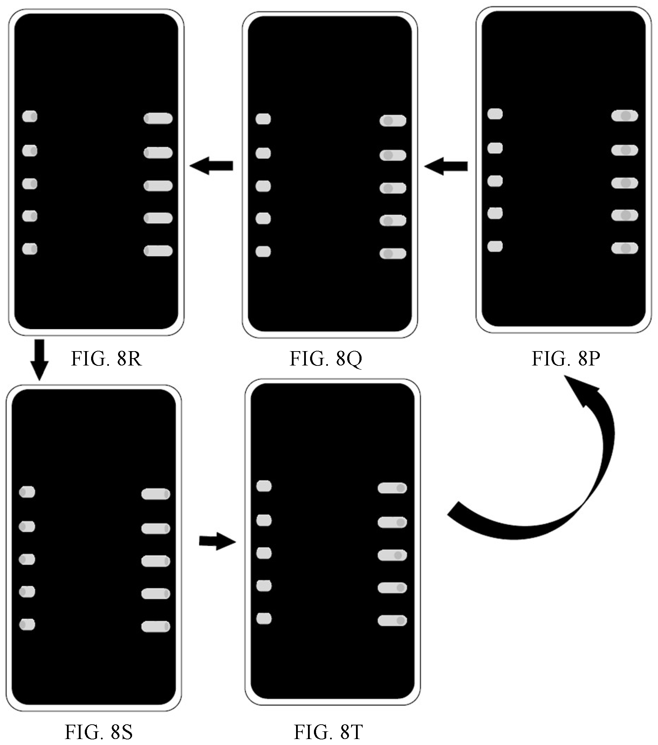

Optionally, another animation effect presented when the change in the horizontal X-axis acceleration is mapped to the target animation is extension and contraction of a track length as shown in FIG. 8M and FIG. 8T. This animation principle may be popularly understood as the track being similar to a spring in a spring system: When accelerating to the right, an object is thrown to the left, so that the left side length is compressed and the right side length is stretched; and when accelerating to the left, the object is thrown to the right, so that the right side length is compressed and the left side length is stretched.

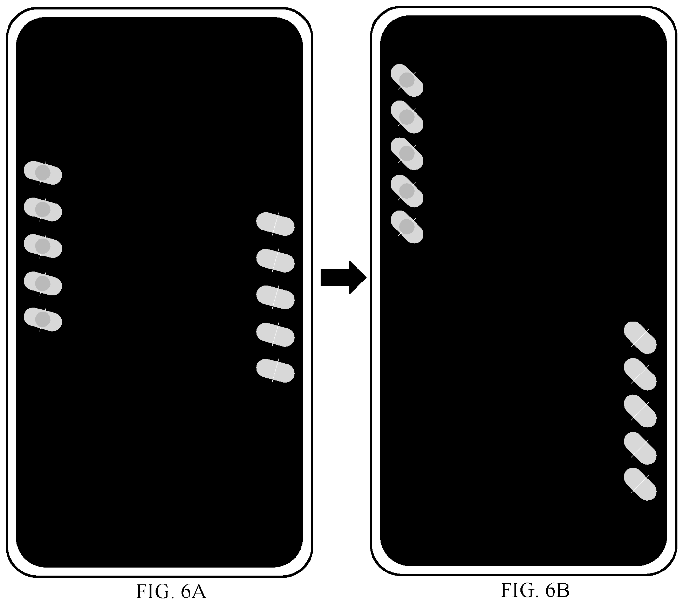

Referring to FIG. 6A and FIG. 6B, FIG. 6A and FIG. 6B are schematic diagrams of a leftward-tilting animation effect according to an embodiment of this application. As shown in FIG. 6A, compared with the two track groups of the target animation shown in FIG. 5C, the two track groups of the target animation shown in FIG. 6A move in opposite directions. When the vehicle tilts to the left, the track group on the left moves upward, and the track group on the right moves downward, presenting an animation effect that the left track group is higher and the right track group is lower.

When the degree of vehicle tilt differs, the track group in the target animation also feedbacks a corresponding inclination angle, that is, the inclination angle of the track group is consistent with the inclination angle of the electronic device/the vehicle body relative to the horizon line. For example, the greater the degree of vehicle tilt, the greater the angle of tilt of the track group in the target animation; the smaller the degree of vehicle tilt, the smaller the angle of tilt of the track group in the target animation. Optionally, the user may adjust sensitivity of the target animation according to the preference of the user, so as to adjust a feedback degree of the animation effect of the target animation in the scenario.

In a possible implementation scenario, as the degree to which the vehicle tilts left becomes greater and greater, the angle at which the track group tilts left in the target animation also becomes greater and greater. As shown in FIG. 6A and FIG. 6B, the angle of inclination of the tracks in the track group shown in FIG. 6B is greater than the angle of inclination of the tracks in the track group shown in FIG. 6A. It should be understood that, as the degree to which the vehicle tilts left becomes smaller and smaller, the angle at which the track tilts left in the target animation also becomes smaller and smaller.

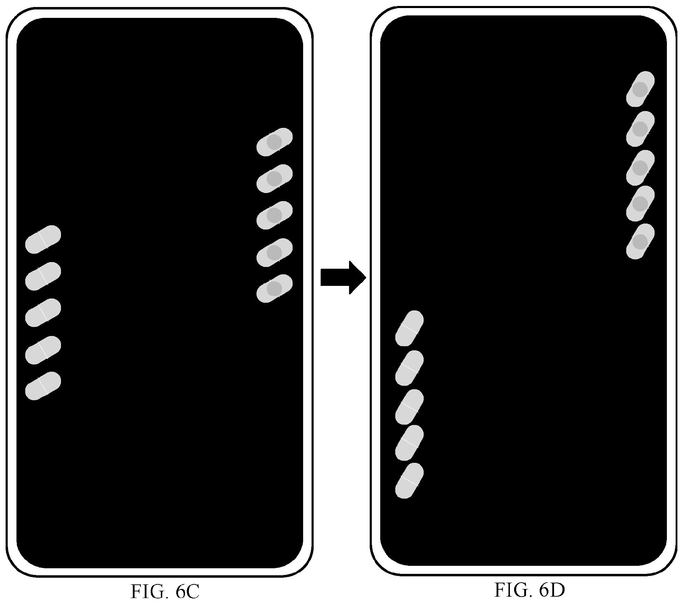

Referring to FIG. 6C and FIG. 6D, FIG. 6C and FIG. 6D are schematic diagrams of a rightward-tilting animation effect according to an embodiment of this application. As shown in FIG. 6C, compared with the two track groups of the target animation shown in FIG. 5C, the two track groups of the target animation shown in FIG. 6C move in opposite directions. When the vehicle tilts to the right, the track group on the left moves downward, and the track group on the right moves upward, presenting an animation effect that the left track group is lower and the right track group is higher.

In a possible implementation scenario, as the degree to which the vehicle tilts right becomes greater and greater, the angle at which the track group tilts right in the target animation also becomes greater and greater. As shown in FIG. 6C and FIG. 6D, the angle of inclination of the tracks in the track group shown in FIG. 6D is greater than the angle of inclination of the tracks in the track group shown in FIG. 6C. It should be understood that, as the degree to which the vehicle tilts right becomes smaller and smaller, the angle at which the track tilts right in the target animation also becomes smaller and smaller.

In the embodiment corresponding to FIG. 6A to FIG. 6D, the animation effects corresponding to the vehicle tilting left and tilting right are demonstrated separately. Below, with reference to the accompanying drawings, the animation effects corresponding to the vehicle tilting left and tilting right are demonstrated coherently.

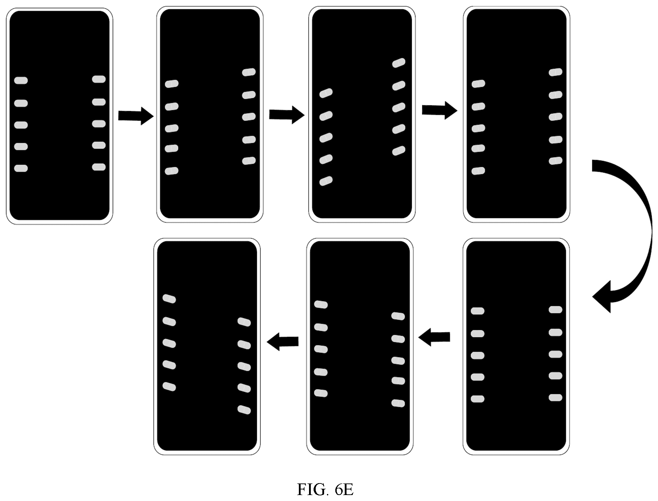

Referring to FIG. 6E, FIG. 6E is a schematic diagram of another animation effect according to an embodiment of this application. In the seven images shown in FIG. 6E, the animation effect corresponding to the steady state of the vehicle, gradually to the animation effect corresponding to tilt right, then to the animation effect corresponding to the gradually increasing degree of tilt right, then to the animation effect corresponding to the gradually decreasing degree of tilt right, then to the animation effect corresponding to the steady state of the vehicle again, gradually to the animation effect corresponding to tilt left, and finally to the animation effect corresponding to the gradually increasing degree of tilt left are sequentially presented.

It should be understood that, in the embodiment corresponding to FIG. 6A to FIG. 6E, all visual styles of the target animation are shown by way of example, and the visual style of the target animation in an actual application scenario is not limited.

In this implementation, the left-right tilting driving/motion states and the left-right jolting driving/motion states of the vehicle are mapped out through the target animation. When the user watches the target animation, the motion information perceived by the eyes of the user is consistent with the motion information perceived by the vestibular system, that is, the motion state of the target animation in the display interface seen by the eyes of the user is consistent with the motion state of the vehicle relative to the ground perceived by the vestibular system of the user. Therefore, it is possible to reduce a conflict between the motion state perceived by the vision of the user and the motion state perceived by the vestibular system of the user, that is, through the target animation, coordinated and consistent visual feedback can be provided for the user relative to the vestibular system, thereby relieving motion sickness of the user. It should be noted that, because the motion in this scenario belongs to low-frequency motion, the animation effect presented in this scenario is particularly effective in relieving motion sickness for the user on a ship (such as a scenario involving slow swaying of the ship's hull).

**Animation effect 4.** The target animation simulates an animation effect of the vehicle in an accelerating/decelerating driving/motion state.

The accelerating/decelerating driving/motion state refers to a process during which the vehicle experiences acceleration (that is, increase in vehicle speed) or deceleration (that is, decrease in vehicle speed) while driving. For example, when the driver presses the accelerator pedal, the engine outputs more power, which is transmitted to the wheels through the power system, causing the vehicle speed to increase. For another example, the driver releases the accelerator pedal or presses the brake pedal to reduce the vehicle speed.

When simulating the animation effect of the vehicle in the accelerating/decelerating driving/motion state through the target animation, this application uses the principle of camera movement animation. It may be popularly understood that the electronic device (such as a mobile phone) is placed in a three-dimensional (3Dimensions) scenario, and the eyes of the user are equivalent to a camera looking at the screen/display interface of the electronic device. During acceleration, the electronic device (such as a mobile phone) moves toward the eyes, which is equivalent to the camera moving toward the screen/display interface. When mapped into the perspective effect of the target animation, it appears as an enlargement of the track group. During deceleration, the electronic device (such as a mobile phone) moves away from the eyes, which is equivalent to the camera moving away from the screen/display interface. When mapped into the perspective effect of the target animation, it appears as a reduction of the track group.

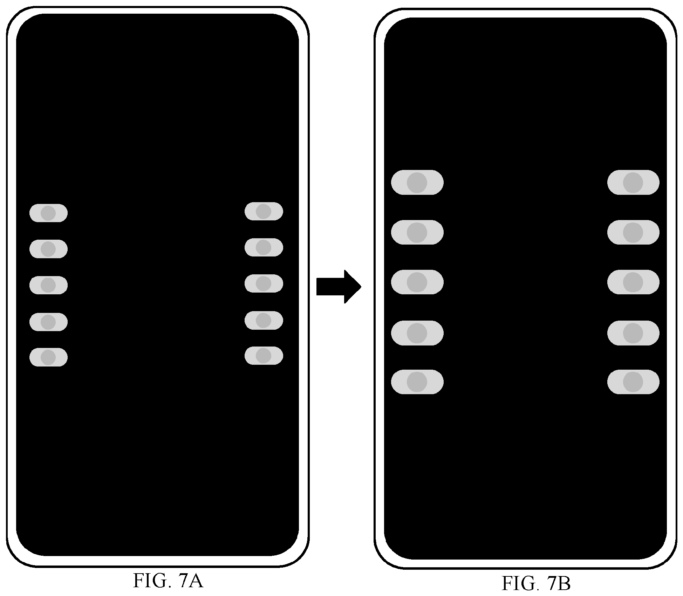

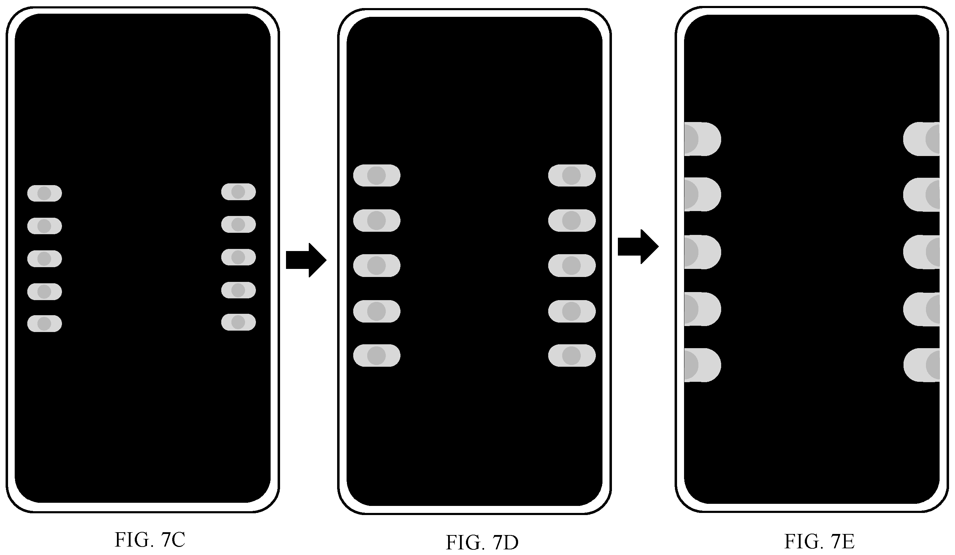

Referring to FIG. 7A and FIG. 7B, FIG. 7A and FIG. 7B are schematic diagrams of an acceleration animation effect according to an embodiment of this application. As shown in FIG. 7A, when the vehicle is detected to be in a steady driving/motion state, the two track groups of the target animation are located in the central region corresponding to the preset region of the electronic device. As shown in FIG. 7B, when acceleration of the vehicle is detected, the display size of the track group of the target animation in the display interface increases. Specifically, it can be manifested as: when acceleration of the vehicle is detected, the size of the track in the track element and the diameter of the small ball in the movable element rapidly increase, giving the user a visual sensation of rushing toward the human eyes. In addition, a motion trajectory of the track group conforms to single-point perspective, enhancing the dynamic feel and depth sense of the target animation, facilitating the user's viewing of the target animation, and helping to maintain consistency between the motion information perceived by the eyes of the user and the motion information perceived by the vestibular system, thereby better relieving carsickness symptoms of the user.

Optionally, in a possible implementation, a first size threshold for increasing the display size is preset for the track group. The first size threshold is a maximum size that can be reached when the display size of the track group increases. It should be understood that the first size threshold may be set and adjusted according to the screen size/display interface size of the electronic device. In this implementation, the first size threshold is set for the track group to ensure that the display size of the track group increases within a specific range, effectively preventing the display size of the track group from exceeding the visual range of the screen/display interface after enlargement. This enhances visual experience of the user and better relieves carsickness symptoms of the user.

Optionally, in a possible implementation, when the display size of the track group increases, the visual range of the screen/display interface may also be exceeded. Referring to FIG. 7C to FIG. 7E, FIG. 7C to FIG. 7E are schematic diagrams of another acceleration animation effect according to an embodiment of this application. The acceleration animation effect shown in FIG. 7C to FIG. 7E differs from the acceleration animation effect shown in FIG. 7A and FIG. 7B in that: in FIG. 7E, the display size of the track group increases and exceeds the visual range of the screen/display interface; and the track and the small ball in the track group currently displayed on the screen/display interface may be incomplete. In this implementation, after the display size of the track group increases and exceeds the visual range of the screen/display interface, a visual sense of breakthrough is achieved, providing the user with novel and intense visual experience; and depth perception of the visual animation is enhanced, perception of a three-dimensional space is strengthened, facilitating the user in viewing of the target animation, helping to maintain consistency between motion information perceived by the eyes of the user and motion information perceived by the vestibular system, thereby better relieving carsickness symptoms of the user.

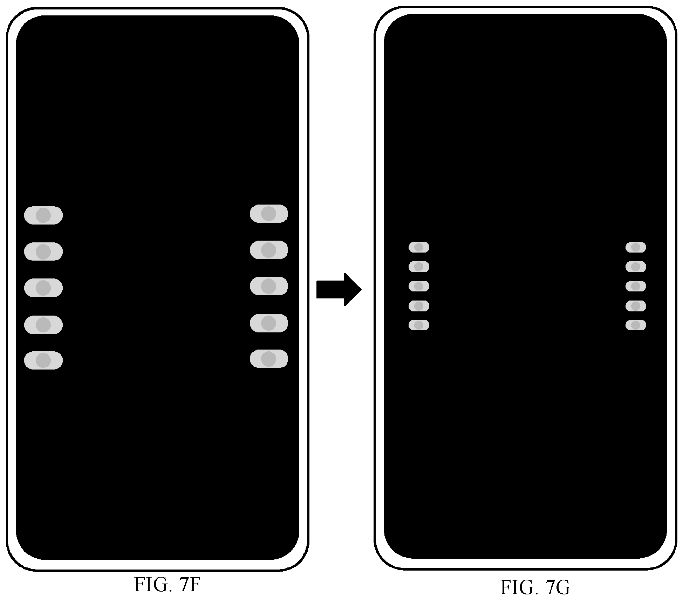

Referring to FIG. 7F and FIG. 7G, FIG. 7F and FIG. 7G are schematic diagrams of a deceleration animation effect according to an embodiment of this application. The deceleration animation effect shown in FIG. 7F and FIG. 7G differs from the acceleration animation effect shown in FIG. 7A and FIG. 7B in that as shown in FIG. 7G, when it is detected that the vehicle decelerates, the display size of the track group of the target animation in the display interface decreases. Specifically, it may be manifested as: when deceleration of the vehicle is detected, the size of the track in the track element and the diameter of the small ball in the movable element rapidly decrease, giving the user a visual sensation of moving away from the eyes. In addition, a motion trajectory of the track group presents an effect of converging from the periphery toward the center, enhancing the dynamic feel and depth sense of the target animation, facilitating the user's viewing of the target animation, and helping to maintain consistency between the motion information perceived by the eyes of the user and the motion information perceived by the vestibular system, thereby better relieving carsickness symptoms of the user.

Optionally, in a possible implementation, a second size threshold for decreasing the display size is preset for the track group. The second size threshold is a minimum size that can be reached when the display size of the track group decreases. It should be understood that the second size threshold may be set and adjusted according to the screen size/display interface size of the electronic device. In this implementation, the second size threshold is set for the track group to ensure that the display size of the track group decreases within a specific range, effectively preventing the display size of the track group from decreasing without limit, which causes the target animation to be displayed incompletely or be difficult to recognize, ensuring a good display effect of the target animation and improving visual experience of the user.

Optionally, in a possible implementation, the user may further adjust, according to the preference of the user, the first size threshold and the second size threshold that are corresponding to the target animation. Correspondingly, the electronic device responds to an operation of the user adjusting the first size threshold and the second size threshold, and displays the target animation by using the adjusted first size threshold and the adjusted second size threshold. The user customizes the size of the track group to increase or decrease according to a visual preference and a use habit of the user, thereby improving personalized experience. In addition, different users may have different visual conditions, and the manner for customizing adjustment of the display size can enhance usability of the target animation. In addition, electronic devices of different users may have different performance, and the manner for customizing adjustment of the display size can make the effect of the target animation more fluent.

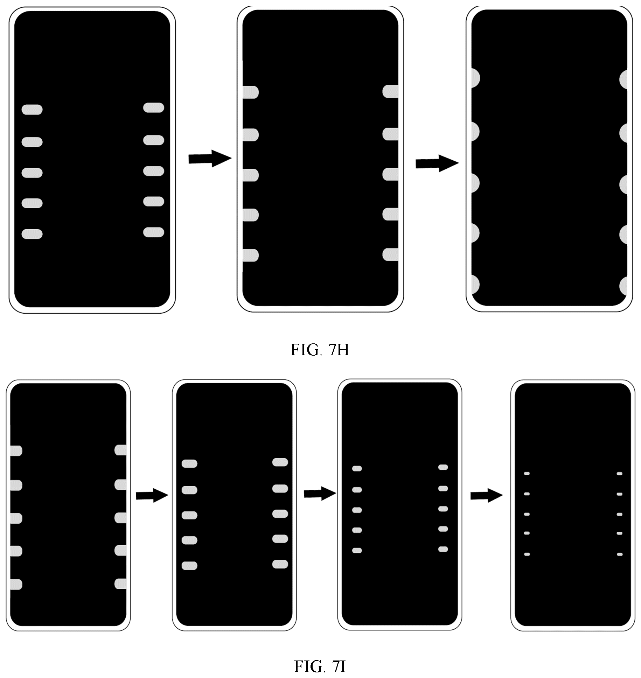

Referring to FIG. 7H, FIG. 7H is a schematic diagram of still another acceleration animation effect according to an embodiment of this application. A difference between the acceleration animation effect shown in FIG. 7H and the acceleration animation effect shown in FIG. 7C to FIG. 7E is that a distance between tracks of the target animation shown in FIG. 7H is large, and an animation element in the target animation does not include a movable element (for example, a small ball-style movable element). As shown in FIG. 7H, when acceleration of the vehicle is detected, the display size of the track group of the target animation in the display interface increases. Specifically, it can be manifested as: when acceleration of the vehicle is detected, the size of the track in the track element rapidly increases, and the spacing between the various tracks also rapidly increases.

Referring to FIG. 7I, FIG. 7I is a schematic diagram of still another deceleration animation effect according to an embodiment of this application. A difference between the deceleration animation effect shown in FIG. 7I and the deceleration animation effect shown in FIG. 7F to FIG. 7G is that a distance between tracks of the target animation shown in FIG. 7I is large, and an animation element in the target animation does not include a movable element (for example, a small ball-style movable element). As shown in FIG. 7I, when deceleration of the vehicle is detected, the display size of the track group of the target animation in the display interface decreases. Specifically, it can be manifested as: when acceleration of the vehicle is detected, the size of the track in the track element rapidly decreases, and the spacing between the various tracks also rapidly decreases.

Compared with the target animation which includes a movable element, the foregoing two types of target animations, which do not include movable elements, have a more concise visual presentation, reduce overall complexity of the target animation, and make the target animation easier to maintain. In addition, the memory resource of the electronic device is further saved, and power consumption of the electronic device is reduced.

Optionally, in a possible implementation, the electronic device may adaptively adjust the speed at which the display size of the track group increases or decreases. This can optimize resource usage and improve the performance of the electronic device. Optionally, in another possible implementation, the user may also adjust the speed at which the display size of the track group increases or decreases according to the preference of the user. This can enhance personalized experience of the user.

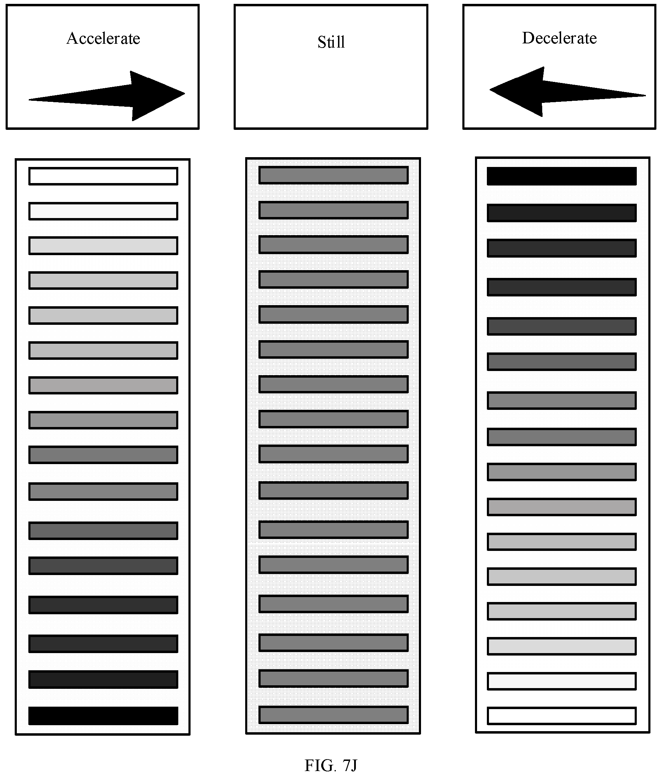

Optionally, referring to FIG. 7J, FIG. 7J is a schematic diagram of a visual style of another target animation according to an embodiment of this application. As shown in FIG. 7J, the visual style of the track may be a rectangular style, with a plurality of rectangles arranged in a vertical linear arrangement, and using a plurality of different colors (such as a plurality of gradient colors) to fill the plurality of rectangles respectively. When the vehicle is performing acceleration motion, the plurality of opaque rectangles are controlled to change sequentially in a first order, presenting a scrolling animation effect; when the vehicle is stationary, the same color is used to fill the plurality of rectangles, presenting a static animation effect; and when the vehicle is performing deceleration motion, the plurality of opaque rectangles are controlled to change sequentially in a second order, presenting a scrolling animation effect. Here, the first order is opposite to the second order. The first order is opposite to the second order.

Optionally, in a possible implementation, when the target animation simulates the animation effect of the vehicle in an accelerating/decelerating driving/motion state, it can also be presented through the small ball performing cyclic fade-in/fade-out motion as shown in FIG. 3I.

In this implementation, the feedback of the target animation is strengthened, meaning even when the user watches the target animation with peripheral vision, consistency can be maintained between the motion information perceived by the eyes of the user and the motion information perceived by the vestibular system, which is beneficial for better relieving carsickness symptoms of the user.

**Animation effect 5.** The target animation simulates animation effects of the vehicle in a left-turning and left-tilting driving/motion state, and in a right-turning and right-tilting driving/motion state.

It should be understood that the animation effect of the vehicle in the left-turning and left-tilting driving/motion state is a coupled effect, and this similarly applies to the animation effect of the vehicle in the right-turning and right-tilting driving/motion state.

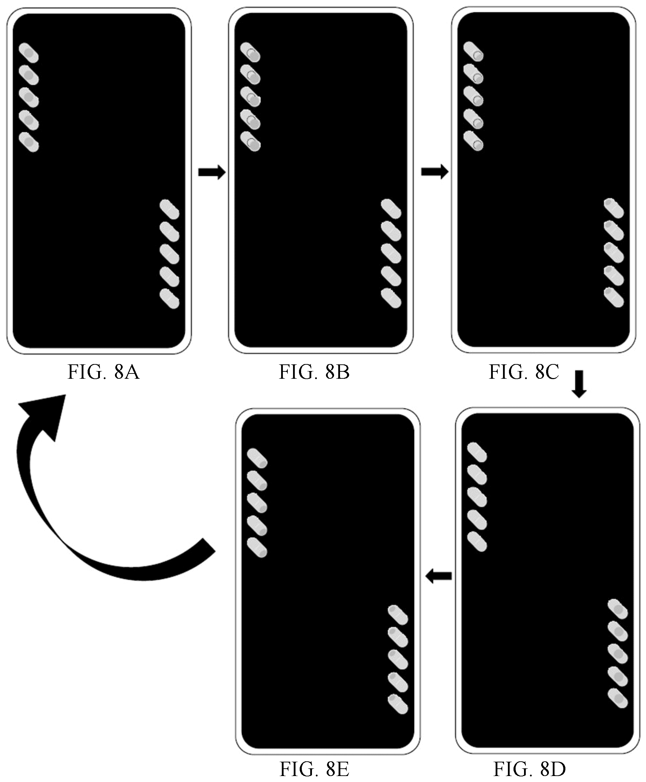

Referring to FIG. 8A, FIG. 8B, FIG. 8C, FIG. 8D, and FIG. 8E, FIG. 8A, FIG. 8B, FIG. 8C, FIG. 8D, and FIG. 8E are schematic diagrams of a left-turn and leftward-tilting animation effect according to an embodiment of this application. As shown in FIG. 8A, the target animation includes two track groups, animation elements in the left track group include a track element and a movable element (such as a small ball), while animation elements in the right track group include a track element but do not include a movable element (such as a small ball). It should be understood that the visual style of the target animation shown in FIG. 8A is merely exemplarily illustrated. In an actual application scenario, a quantity of animation elements in each track group may be smaller or larger, and a quantity of movable elements (such as small balls) in the two track groups may also be larger. For example, the animation elements in the left track may include a plurality of movable elements (such as small balls), and the animation elements in the right track may also include one or more movable elements (such as small balls).

As the vehicle turns to the left, as shown in FIG. 8B, the small balls in the tracks in the left track group (subsequently represented by the small balls in the left track) gradually move to the right along inclination angles of the left tracks.

As shown in FIG. 8C, the small balls in the left tracks gradually move to the right along the tilted angle of the left tracks and enters the tracks of the right track group. It should be understood that the movement process of the small ball is smooth and continuous. In the movement process shown in FIG. 8C, one part of the small ball is displayed in the left track, and the other part is displayed in the right track.

It should be noted that, quantities of animation elements in the left and right track groups correspond to each other, that is, a quantity of tracks in the left track group corresponds to a quantity of tracks in the right track group. Therefore, when the small ball moves from the left track to the right track, it also moves within the corresponding track. For example, the small ball in the first track of the left track group gradually moves to the right along the tilted angle of the first track in the left track group and enters the first track of the right track group; the small ball in the second track of the left track group gradually moves to the right along the tilted angle of the second track in the left track group and enters the second track of the right track group; and so on.

As shown in FIG. 8D, the small ball in the left track has completely moved into the track of the right track group. Subsequently, the small ball continues to move to the right along the tilted angle of the track in the right track group until the small ball moves out of the right track. After moving out of the right track, the small ball gradually moves from the left side of the left track into the left track. As shown in FIG. 8E, one part of the small ball is displayed in the left track, and the other part is displayed in the right track. After that, the small ball in the right track completely moves into the track of the left track group, as shown in FIG. 8A, and based on this, cyclic/reciprocating motion is performed.

In this implementation, through the tilted angle of the track and the cyclic/reciprocating motion of the movable element, the motion state of the vehicle turning left can be intuitively mapped out, helping to maintain consistency between the motion information perceived by the eyes of the user and the motion information perceived by the vestibular system, and thereby better relieving carsickness symptoms of the user.

For example, when the vehicle turns right, the eyes of the user see the scene outside the vehicle moving left. Specifically mapping this scenario into the target animation manifests as: when the vehicle turns right, the small ball in the movable element moves left. After entering the track in the left track group, the small ball then moves out from the track in the left track group, subsequently enters the track in the right track group, and based on this motion pattern, performs cyclic/reciprocating motion.

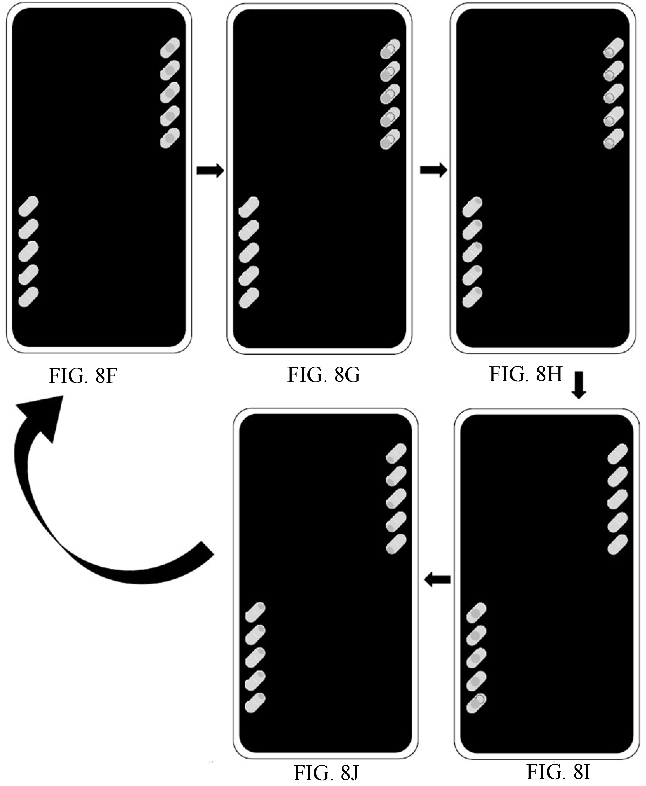

Referring to FIG. 8F, FIG. 8G, FIG. 8H, FIG. 8I, and FIG. 8J, FIG. 8F, FIG. 8G, FIG. 8H, FIG. 8I, and FIG. 8J are schematic diagrams of a right-turn and rightward-tilting animation effect according to an embodiment of this application. As shown in FIG. 8F, the target animation includes two track groups, animation elements in the right track group include a track element and a movable element (such as a small ball), while animation elements in the left track group include a track element but do not include a movable element (such as a small ball). It should be understood that the visual style of the target animation shown in FIG. 8F is merely exemplarily illustrated. In an actual application scenario, a quantity of animation elements in each track group may be smaller or larger, and a quantity of movable elements (such as small balls) in the two track groups may also be larger. For example, the animation elements in the right track may include a plurality of movable elements (such as small balls), and the animation elements in the left track may also include one or more movable elements (such as small balls).

As the vehicle turns to the right, as shown in FIG. 8G, the small balls in the tracks in the right track group (subsequently represented by the small balls in the right track) gradually move to the left along inclination angles of the right tracks.

As shown in FIG. 8H, the small balls in the right tracks gradually move to the left along the tilted angle of the right tracks and enters the tracks of the left track group. It should be understood that the movement process of the small ball is smooth and continuous. In the movement process shown in FIG. 8H, one part of the small ball is displayed in the right track, and the other part is displayed in the left track.

As shown in FIG. 8I, the small ball in the right track has completely moved into the track of the left track group. Subsequently, the small ball continues to move to the left along the tilted angle of the track in the left track group until the small ball moves out of the left track. After moving out of the left track, the small ball gradually moves from the right side of the right track into the right track. As shown in FIG. 8J, one part of the small ball is displayed in the right track, and the other part is displayed in the left track. After that, the small ball in the left track completely moves into the track of the right track group, as shown in FIG. 8F, and based on this, cyclic/reciprocating motion is performed.

In this implementation, through the tilted angle of the track and the cyclic/reciprocating motion of the movable element, the motion state of the vehicle turning right can be intuitively mapped out, helping to maintain consistency between the motion information perceived by the eyes of the user and the motion information perceived by the vestibular system, and thereby better relieving carsickness symptoms of the user.

Optionally, in another possible implementation, this application uses the target animation to simulate the animation effect of the vehicle in a left-right turning driving/motion state, primarily manifested through the cyclic/reciprocating motion of the movable element and the change in the display size of the track element.

For example, when the vehicle turns left, the eyes of the user see the scene outside the vehicle moving right. Specifically mapping this scenario into the target animation manifests as: when the vehicle turns left, the small ball in the movable element moves right. After entering the track in the right track group, the small ball then moves out from the track in the right track group, subsequently enters the track in the left track group, and based on this motion pattern, performs cyclic/reciprocating motion. In addition, during the cyclic/reciprocating motion of the small ball, the display size of the track in the left track group widens and/or lengthens, and the display size of the track in the right track group narrows and/or shortens. Because turning usually involves changes in horizontal acceleration due to a centrifugal force, the animation corresponding to horizontal acceleration changes described in the embodiments of this application (such as superimposing the track length extension/contraction animation) can be overlaid onto the animation corresponding to the turn.

**Animation effect 6.** The target animation simulates an animation effect of the vehicle in a left-right turning driving/motion state.

The left-right turning driving/motion state refers to the vehicle performing a steering action during driving, that is, the vehicle changes its direction of travel along a specific path, turning left or right. It should be understood that when the vehicle is in a uniform-speed left-turn motion state, the left and right track groups in the target animation present an animation effect of being higher on the right and lower on the left; and when the vehicle is in a uniform-speed right-turn motion state, the left and right track groups in the target animation present an animation effect of being higher on the left and lower on the right.

Optionally, in a possible implementation, this application uses the target animation to simulate the animation effect of the vehicle in a left-right turning driving/motion state, primarily manifested through the cyclic/reciprocating motion of the movable element.

For example, when the vehicle turns left, the eyes of the user see the scene outside the vehicle moving right. Specifically mapping this scenario into the target animation manifests as: when the vehicle turns left, the small ball in the movable element moves right. After entering the track in the right track group, the small ball then moves out from the track in the right track group, subsequently enters the track in the left track group, and based on this motion pattern, performs cyclic/reciprocating motion.

Referring to FIG. 8K, FIG. 8L, FIG. 8M, FIG. 8N, and FIG. 8O, FIG. 8K, FIG. 8L, FIG. 8M, FIG. 8N, and FIG. 8O are schematic diagrams of another left-turn animation effect according to an embodiment of this application. As shown in FIG. 8K, the target animation includes two track groups, animation elements in the left track group include a track element and a movable element (such as a small ball), while animation elements in the right track group include a track element but do not include a movable element (such as a small ball). It should be understood that the visual style of the target animation shown in FIG. 8K is merely exemplarily illustrated. In an actual application scenario, a quantity of animation elements in each track group may be smaller or larger, and a quantity of movable elements (such as small balls) in the two track groups may also be larger. For example, the animation elements in the left track may include a plurality of movable elements (such as small balls), and the animation elements in the right track may also include one or more movable elements (such as small balls).

When the vehicle turns left, the electronic device may adaptively adjust the display size of the track. As shown in FIG. 8K, the length of the track in the left track group is longer than the length of the track in the right track group. It should be understood that the animation effect corresponding to the change in the display size of the track is also the animation effect corresponding to the change in horizontal acceleration. Optionally, in a possible implementation, the user may also adjust the display size of the track according to the preference of the user, and no limitation is imposed on this.

When the vehicle turns left, as shown in FIG. 8K, FIG. 8L, and FIG. 8M, the small ball in the left track gradually moves to the right along the left track. As shown in FIG. 8M and FIG. 8N, when the small ball moves into the track of the right track group, the small ball continues to move to the right until the small ball moves out of the right track. After moving out of the right track, the small ball gradually moves from the left side of the left track into the left track. As shown in FIG. 8O, when the small ball moves into the track of the left track group, the small ball gradually moves to the right along the left track, and based on this, performs cyclic/reciprocating motion.

In this implementation, through the cyclic/reciprocating motion of the movable element and the change in the display size of the track element, the motion state of the vehicle turning left can be intuitively mapped out, helping to maintain consistency between the motion information perceived by the eyes of the user and the motion information perceived by the vestibular system, and thereby better relieving carsickness symptoms of the user.

In addition, because the vehicle usually travels on a horizontal plane, mapping out the effect corresponding to the change in horizontal acceleration essentially maps out the motion state of the vehicle in a conventional scenario. Thereby, it can effectively relieve carsickness symptoms of the user in such a scenario, enhancing the application value of the target animation.

For example, when the vehicle turns right, the eyes of the user see the scene outside the vehicle moving left. Specifically mapping this scenario into the target animation manifests as: when the vehicle turns right, the small ball in the movable element moves left. After entering the track in the left track group, the small ball then moves out from the track in the left track group, subsequently enters the track in the right track group, and based on this motion pattern, performs cyclic/reciprocating motion. In addition, during the cyclic/reciprocating motion of the small ball, the display size of the track in the right track group widens and/or lengthens, and the display size of the track in the left track group narrows and/or shortens.

Referring to FIG. 8P, FIG. 8Q, FIG. 8R, FIG. 8S, and FIG. 8T, FIG. 8P, FIG. 8Q, FIG. 8R, FIG. 8S, and FIG. 8T are schematic diagrams of another right-turn animation effect according to an embodiment of this application. As shown in FIG. 8P, the target animation includes two track groups, animation elements in the right track group include a track element and a movable element (such as a small ball), while animation elements in the left track group include a track element but do not include a movable element (such as a small ball). It should be understood that the visual style of the target animation shown in FIG. 8P is merely exemplarily illustrated. In an actual application scenario, a quantity of animation elements in each track group may be smaller or larger, and a quantity of movable elements (such as small balls) in the two track groups may also be larger. For example, the animation elements in the right track may include a plurality of movable elements (such as small balls), and the animation elements in the left track may also include one or more movable elements (such as small balls).

When the vehicle turns right, the electronic device may adaptively adjust the display size of the track. As shown in FIG. 8P, the length of the track in the right track group is longer than the length of the track in the left track group. Optionally, in a possible implementation, the user may also adjust the display size of the track according to the preference of the user, and no limitation is imposed on this.

When the vehicle turns right, as shown in FIG. 8P, FIG. 8Q, and FIG. 8R, the small ball in the right track gradually moves to the left along the right track. As shown in FIG. 8R and FIG. 8S, when the small ball moves into the track of the left track group, the small ball continues to move to the left until the small ball moves out of the left track. After moving out of the left track, the small ball gradually moves from the right side of the right track into the right track. As shown in FIG. 8T, when the small ball moves into the track of the right track group, the small ball gradually moves to the left along the right track, and based on this, performs cyclic/reciprocating motion.

It should be noted that, in the various implementations described above, the tracks in the two track groups may have a specific inclined angle, or may remain horizontal relative to the screen/display interface, depending on the actual application scenario, and no limitation is imposed on this.

In this implementation, through the cyclic/reciprocating motion of the movable element and the change in the display size of the track element, the motion state of the vehicle turning right can be intuitively mapped out, helping to maintain consistency between the motion information perceived by the eyes of the user and the motion information perceived by the vestibular system, and thereby better relieving carsickness symptoms of the user.

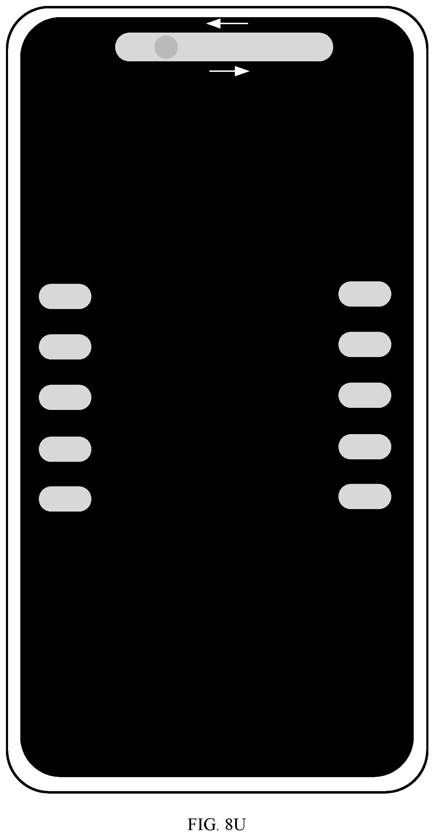

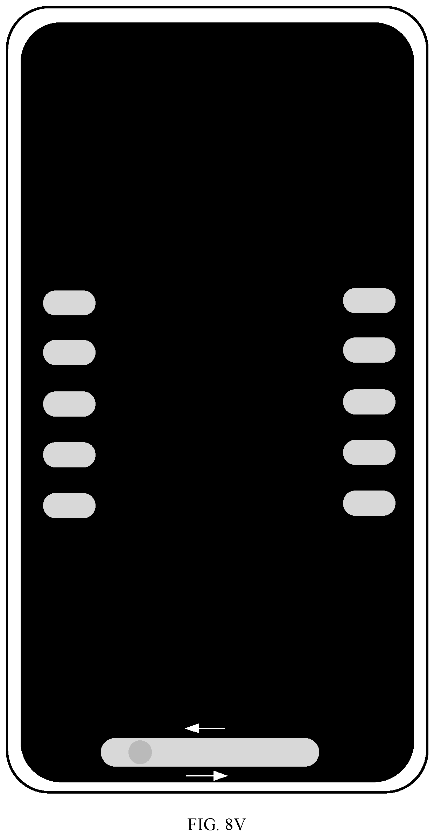

Optionally, in another possible implementation, considering that when the small ball (one small ball in each of the left and right tracks, or one small ball shared between the left and right tracks) moves left and right on the screen, some users may experience visual discomfort (such as dizziness), this application also provides a visual style for the target animation to enhance visual comfort of the user. Referring to FIG. 8U and FIG. 8V, FIG. 8U and FIG. 8V are schematic diagrams of a visual style according to an embodiment of this application. As shown in FIG. 8U and FIG. 8V, a track is disposed above and/or below the screen, and a small ball moves left and right in the track disposed above and/or below the screen.

It should be noted that when applied in an actual scenario, the target animation provided by this application can present any one type of the foregoing animation effects or the coupled effects of a plurality of types of the foregoing animation effects.

The animation effects of the target animation simulating the vehicle under different driving/motion states are described above with reference to the accompanying drawings. The principles of the different animation effects simulated by the target animation are explained below with reference to the accompanying drawings.

When the user uses the electronic device inside the vehicle, the motion state of the vehicle is basically consistent with the motion state of the electronic device, and the motion state of the electronic device is basically consistent with the motion state of the user's own body. That is, the motion state of the user's own body and the motion state of the electronic device have similarity. In this solution, a motion parameter (also referred to as sensor data) is collected by using an electronic device, and a target animation is generated based on the motion parameter. The target animation can map different driving/moving states of a vehicle in real time. It may be understood that, by using the electronic device, six directions of motion (namely forward-backward, up-down, left-right, pitch, roll, and yaw), high-frequency and low-frequency motion information, and horizontal motion information perceived by the user riding in the vehicle are mapped into the target animation. Because the eyes of the user are basically aligned with the electronic device, when the user watches the target animation, the motion information perceived by the eyes of the user is consistent with the motion information perceived by the vestibular system, that is, the motion state of the target animation in a display interface seen by the eyes of the user is consistent with the motion state of the vehicle relative to the ground perceived by the vestibular system of the user. Therefore, it is possible to reduce a conflict between the motion state perceived by the vision of the user and the motion state perceived by the vestibular system of the user, that is, through the target animation, coordinated and consistent visual feedback can be provided for the user relative to the vestibular system, thereby relieving motion sickness of the user.

In a possible implementation, for an implementation principle involved in the data processing method provided in this application, refer to the following step S101 to step S105.

S101: Obtain sensor data of an electronic device.

For example, the electronic device may include a sensor and a sensor API. The sensor may include a hardware sensor and a virtual sensor. The sensor API is an interface that allows an application to interact with the hardware sensor. In this embodiment of this application, the application program may access the sensor in the electronic device by using the sensor API, to obtain data of the hard sensor.

For example, sensors that the electronic device needs to invoke to generate a target animation may include the hardware sensor and the virtual sensor. In this embodiment of this application, the hardware sensor is hardware that physically exists in the electronic device, the hardware sensor may be an IMU sensor, and the IMU sensor may include an ACC and a GYRO.

The virtual sensor also becomes a software sensor or a synthetic sensor, is not physical hardware, and is generated by combining and processing data of another hardware sensor. The virtual sensor may include a rotation vector sensor and a linear acceleration sensor.

A rotation vector sensor (Game Rate of Turn Velocity, Game ROTV) may be implemented by using an algorithm to fuse data of the ACC and the GYRO, can provide three-dimensional rotation vector information about the electronic device, and has a good high-frequency filtering capability and a good low-frequency motion characteristic. The linear acceleration sensor (Linear Acceleration, Linear ACC) can measure a linear acceleration of the electronic device that is not affected by gravity, has a good low-frequency filtering capability, and has a good high-frequency motion characteristic.

The sensor data in this embodiment of this application may include data of the acceleration sensor, data of the gyroscope sensor, data of the rotation vector sensor, and data of the linear acceleration sensor. It should be understood that the sensor data may be collected by using sensors respectively corresponding to the sensor data.

For example, the Game ROTV performs fusion processing on acceleration data and gyroscope data, for example, performs fusion processing on the acceleration data and the gyroscope data by using a Kalman filter, a compensation filter, and a non-linear observer, to obtain a three-axis rotation vector. It should be understood that the rotation vector fuses data separately collected by the acceleration sensor and the gyroscope sensor. In this fusion manner, more stable and accurate direction data can be provided.

For example, an attitude change (for example, changes of a pitch angle, a roll angle, and a yaw angle) is determined as low-frequency motion, where the low-frequency motion has a low-frequency motion characteristic, the acceleration change is determined as high-frequency motion, and the high-frequency motion has a high-frequency motion characteristic. Therefore, low-frequency motion can be well processed by using the Game ROTV, and high-frequency motion can be well processed by using the Linear ACC, so that the electronic device maps, to the target animation, the low-frequency motion and the high-frequency motion that are sensed by the user.

Optionally, in a possible implementation, a sampling frequency may be preset. The sampling frequency is usually in a unit of Hertz (Hz), indicating a quantity of times of sensor data collected per second. In this application, the sampling frequency may be dynamically adjusted according to parameters such as a type, performance, a battery level, and a storage space of the electronic device, so as to optimize performance and a resource of the electronic device.

S102: Determine an Euler angle according to the sensor data.

For example, the Game ROTV is used to obtain a quaternion of an attitude of the electronic device, and mathematical conversion is performed on the quaternion to obtain a rotation matrix (also referred to as a first rotation matrix in this application), so as to convert the rotation matrix into an Euler angle. The Euler angle may include a Yaw angle, a Pitch angle, and a Roll angle.

The Pitch angle is a rotation angle around an X-axis, greater than 0 when going downhill. An angle range of the Pitch angle may be -180 to 180, with 0 representing level. The Roll angle is a rotation angle around a Y-axis, greater than 0 when tilting left. An angle range of the Roll angle may be -90 to 90. The Yaw angle is a rotation angle around a Z-axis, greater than 0 when turning right. An angle range of the Yaw angle may be 0 to 360.

The quaternion is usually represented as [$b, c, d, a$], where b, c, d, and a are real and imaginary parts of the quaternion. The electronic device obtains four components of the quaternion, that is, obtains components respectively corresponding to b, c, d, and a, and adjusts the components of the quaternion according to a direction of the electronic device. Subsequently, the quaternion is converted from an Android coordinate system to a conventional coordinate system, the square of the quaternion is calculated, and then the rotation matrix is calculated based on the quaternion. A unit vector of each axis (the X-axis, the Y-axis, and the Z-axis) is extracted from the rotation matrix, a modulus of the X-axis unit vector is calculated, the X-axis is normalized, and a Yaw angle (yaw angle), a Pitch angle (pitch angle), and a Roll angle (roll angle) are calculated. After the Yaw angle, the Pitch angle, and the Roll angle are obtained, a real-time attitude of the electronic device is obtained.

Optionally, in a possible implementation, the electronic device may not obtain data from the magnetic sensor, causing the Yaw angle in the Euler angle to be a virtual dimension, that is, the Yaw angle is a relative virtual measure, while the Pitch angle and the Roll angle correspond to actual geographic coordinates.

For example, the four components of the quaternion may be obtained from the sensor data by using preset program code, and the components of the quaternion are adjusted according to the attitude of the electronic device. The attitude (landscape attitude) of the electronic device may be rotated by 90°, or may be rotated by 270°. A first rotation matrix is calculated according to the adjusted quaternion, and the first rotation matrix is converted into an Euler angle.

It should be noted that rotation by 90° refers to rotation by 90° from a vertical direction to the left by the electronic device, and rotation by 270° refers to rotation by 90° from the vertical direction to the right by the electronic device.

S103: Obtain three-axis angular velocity data by using a gyroscope sensor.

For example, the electronic device obtains gyroscope data collected by the gyroscope sensor. The gyroscope data collected by the gyroscope sensor includes a rotation rate of the electronic device around each axis (the X-axis, the Y-axis, and the Z-axis), and a direction complies with the right-hand rule. A unit of the gyroscope data is degrees per second (°/s) or radians per second (rad/s).

Optionally, in a possible implementation, original gyroscope data may include noise and a deviation. In this embodiment of this application, calibration and denoising processing may be performed on the original gyroscope data, so as to improve data quality.

S104: Determine a linear acceleration on a horizontal plane according to linear acceleration data and the Euler angle by using a rotation matrix.

For example, an Android system service (such as a SensorManager) is used to register and obtain the linear acceleration data of the electronic device. For example, SensorManager is used to register an interface (for example, SensorEventListener) to receive the linear acceleration data obtained by the linear acceleration sensor. The linear acceleration data provides a linear acceleration vector of the electronic device, and compared with the acceleration data, removes impact of gravitational acceleration.

The Euler angle corresponding to the current electronic device, such as the Pitch angle and the Roll angle, can be obtained by using the Game ROTV.

A rotation matrix (also referred to as a second rotation matrix in this application) is constructed by using the Pitch angle and the Roll angle. The rotation matrix is used to convert the linear acceleration data from a coordinate system of the electronic device to a horizontal coordinate system. That is, an actual linear acceleration of the electronic device is converted into the horizontal coordinate system by using the rotation matrix. It may be understood that the linear acceleration data is applied to the rotation matrix to obtain acceleration data on the horizontal plane, and the converted acceleration data is used to generate a target animation. It may be popularly understood that the Pitch angle and the Roll angle are angles relative to a geodetic coordinate system, and converting them to horizontal angles is equivalent to converting these two angles back.

In the conventional technology, the obtained linear acceleration is directly used for mapping. In this case, accuracy of the acceleration data is ensured only when the electronic device is used vertically, and the acceleration data is inaccurate when the electronic device is used in another attitude. In this application, the linear acceleration data is converted into horizontal linear acceleration data, so that regardless of the attitude adopted by the user when using the electronic device, the form of acceleration experienced by the user's own body remains unchanged. Thus, using the converted horizontal linear acceleration data to generate the target animation can make motion information fed back by the target animation more consistent and better matched with motion information actually perceived by the user, improving user experience.

The rotation matrix used in the foregoing implementation is as follows:

$$\begin{bmatrix} \cos\alpha & 0 & \sin\alpha \\ \sin\theta\cdot\sin\alpha & \cos\theta & -\sin\theta\cdot\cos\alpha \\ -\cos\theta\cdot\sin\alpha & \sin\theta & \cos\theta\cdot\cos\alpha \end{bmatrix} \begin{bmatrix} x \\ y \\ z \end{bmatrix} = \begin{bmatrix} x' \\ y' \\ z' \end{bmatrix}$$

where $\theta$=-Pitch, $\alpha$=-Roll, x, y, and z respectively represent directly obtained three-axis linear accelerations of the electronic device, and x', y', and z' respectively represent three-axis linear accelerations mapped to the horizontal coordinate system.

It should be noted that this mapping manner provided in this application is also applicable to mapping three-axis angular velocity data obtained by using the gyroscope sensor to the horizontal coordinate system, and performing another procedure based on the angular velocity data of the horizontal coordinate system.

For example, the three-axis angular velocity data is respectively $V_X$, $Y_Y$, and $V_Z$, which are converted to the horizontal coordinate system as follows:

$$\begin{bmatrix} \cos\alpha & 0 & \sin\alpha \\ \sin\theta\cdot\sin\alpha & \cos\theta & -\sin\theta\cdot\cos\alpha \\ -\cos\theta\cdot\sin\alpha & \sin\theta & \cos\theta\cdot\cos\alpha \end{bmatrix} \begin{bmatrix} V_X \\ V_Y \\ V_Z \end{bmatrix} = \begin{bmatrix} V_X' \\ V_Y' \\ V_Z' \end{bmatrix}$$

where $\theta$=-Pitch, $\alpha$=-Roll, and $V_X'$, $V_Y'$, and $V_Z'$ respectively represent three-axis angular velocities mapped to the horizontal coordinate system.

S105: Perform filtering processing on the linear acceleration data.

The three-axis (the X-axis, the Y-axis, and the Z-axis) linear accelerations are respectively represented by acc_x, acc_y, and acc_z, and a unit is usually meters per second squared (m/s$^2$).

High-frequency components and bandwidths of the three-axis (the X-axis, the Y-axis, and the Z-axis) accelerations are relatively high. For example, in signal processing, an acceleration signal may be decomposed into components of different frequencies, and a high-frequency component refers to a part of the signal that changes rapidly and has a short period. The bandwidth refers to a frequency range that can be measured by the acceleration sensor, and a high bandwidth means that the acceleration sensor can capture movement or vibration at a higher frequency.

Because the high-frequency components and the bandwidths of the accelerations on the three axes are relatively high, using the acceleration sensor may capture high-frequency noise. If the acceleration data from the three axes collected by the acceleration sensor is used directly, it may cause a jitter issue in the target animation, affecting user experience. To avoid this case, in a display manner provided in this application, the linear acceleration data is filtered.

For example, filtering processing may be performed on the linear acceleration data by using a filtering algorithm. The filtering algorithm may include moving average filtering, Kalman filtering, low-pass filtering, exponential moving average filtering, median filtering, and the like. Specifically, a design parameter of the filter, such as a type of the filter, a cut-off frequency, and a sampling time, is determined, a selected filtering algorithm is implemented in program code, and the filtering algorithm is applied to original linear acceleration data to obtain linear acceleration data obtained after filtering processing.

After the sensor data collected by the electronic device is processed, the sensor data is mapped as a target animation, so that the target animation can map different driving/motion states of a vehicle in real time. Because the eyes of the user are basically aligned with the electronic device, when the user watches the target animation, the motion information perceived by the eyes of the user is consistent with the motion information perceived by the vestibular system, that is, the motion state of the target animation in a display interface seen by the eyes of the user is consistent with the motion state of the vehicle relative to the ground perceived by the vestibular system of the user. Therefore, it is possible to reduce a conflict between the motion state perceived by the vision of the user and the motion state perceived by the vestibular system of the user, that is, through the target animation, coordinated and consistent visual feedback can be provided for the user relative to the vestibular system, thereby relieving motion sickness of the user.

**Animation principle** 1.A principle of how the target animation maps out animation effects for uphill/downhill and vertical jolting.

When the user uses the electronic device in the vehicle, a motion state of the vehicle is basically the same as a motion state of the electronic device. Then, when the vehicle is performing uphill/downhill motion, the Pitch angle of the vehicle (that is, the pitch angle) changes. Correspondingly, the Pitch angle (that is, the pitch angle) of the electronic device also changes. Similarly, when the vehicle experiences vertical jolting, the vehicle's acceleration on the Z-axis changes; and correspondingly, the acceleration of the electronic device on the Z-axis also changes.

Uphill/downhill motion is low-frequency motion, and motion information manifested is low-frequency information; and vertical jolting is high-frequency motion, and motion information manifested is high-frequency information. In this embodiment of this application, the low-frequency information of the Pitch angle of the electronic device changes during uphill/downhill and the high-frequency information of the Z-axis acceleration acc_z during vertical jolting are both mapped into vertical movement of the target animation, for example, into synchronous vertical movement of an element group (such as a track group).

For example, when it is detected that the pitch angle is less than an initial pitch angle, and/or the X-axis linear acceleration is greater than a first acceleration threshold, it is determined that the vehicle is in an uphill and/or upward jolting motion state; and when it is detected that the pitch angle is not less than the initial pitch angle, and/or the X-axis linear acceleration is less than the first acceleration threshold, it is determined that the vehicle is in a downhill and/or downward jolting motion state. The first acceleration threshold may be set and adjusted according to an actual situation, for example, the first acceleration threshold may be 0, 5, 10, or 15, which is not limited.

For example, the low-frequency information of the Pitch angle change is mapped into the target animation, and the presented animation effect is: when the vehicle is performing uphill motion, the Pitch angle decreases, and the position of the track group moves downward, or the track group moves downward synchronously; and when the vehicle is performing downhill motion, the Pitch angle increases, and the position of the track group moves upward, or the track group moves upward synchronously.

For example, the high-frequency information of acc_z is mapped into the target animation, and the presented animation effect is: when acc_z is greater than 0, the acceleration is upward, and the position of the track group moves downward, or the track group moves downward; and when acc_z is less than 0, the acceleration is downward, and the position of the track group moves upward, or the track group moves upward.

Optionally, a pixel value for each vertical movement of the track group may be preset, facilitating the track group to move upward or downward according to the set pixel value. For example, when a change in slope per unit angle (such as 1°, 2°, 3°, etc.) is detected, the track group moves downward by a first pixel value. The first pixel value may be set to 20, 40, 60, 80, or the like. For another example, when a change in slope per unit angle (such as 1°, 2°, 3°, etc.) is detected, the track group moves upward by a second pixel value. The second pixel value may be set to 10, 20, 30, 40, 60, 80, or the like.

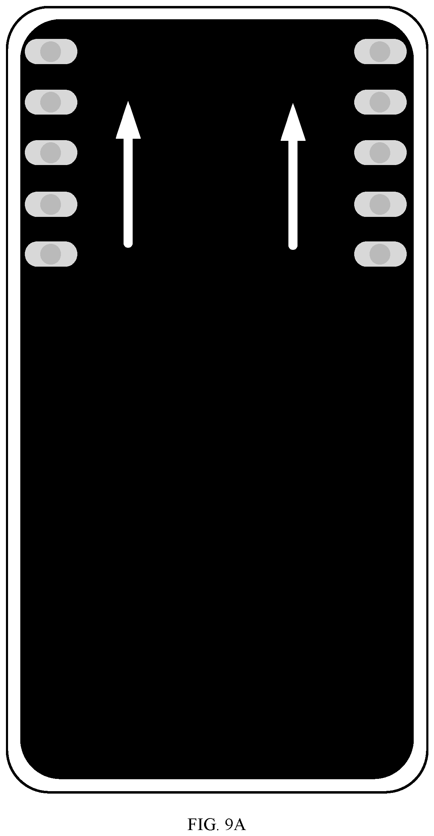

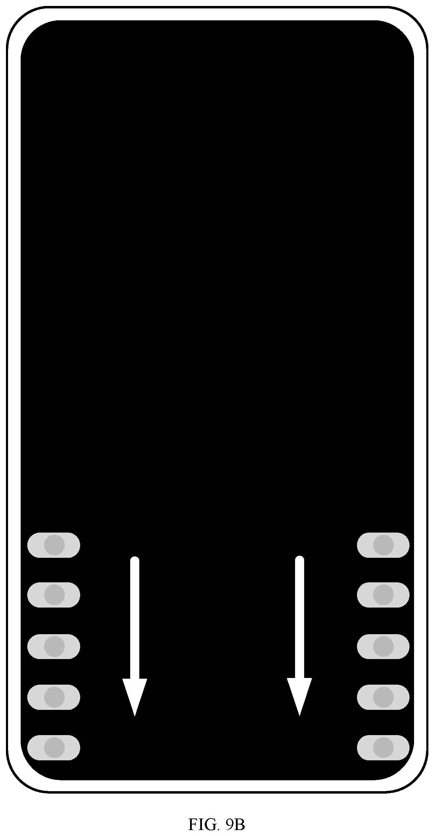

Referring to FIG. 9A and FIG. 9B, FIG. 9A and FIG. 9B are schematic diagrams of a principle of an animation effect according to an embodiment of this application. As shown in FIG. 9A, when the Pitch angle increases and/or acc_z is less than 0, the track groups on the left and right sides move upward; and as shown in FIG. 9B, when the Pitch angle decreases and/or acc_z is greater than 0, the track groups on the left and right sides move downward.

Optionally, in a possible implementation, an initial position of the track group in the target animation is preset. The initial position is used to display the track group in the initial position when the target animation is displayed on the display interface for the first time. The initial position may be set and adjusted according to an actual situation, which is not limited. In this example, the initial position may be an intermediate region of the screen/display interface, for example, the region displayed by the target animation shown in FIG. 2B. For example, when the display interface displays the target animation for the first time, the Pitch angle at this time is read as the initial Pitch angle. When the Pitch angle equal to the initial Pitch angle is detected, the target animation is displayed in the central region of the screen/display interface.

Optionally, in a possible implementation, when the target animation is displayed at the initial position on the display interface for the first time, an initial pitch angle is recorded. Based on the initial pitch angle, an initial angle change range is calculated to control a movement amplitude of the track group. That is, a maximum change angle between the initial Pitch angle and a state where the electronic device is completely horizontal or completely vertical. This ensures that when the track group in the target animation moves according to the angle change, the target animation will not completely move off the screen, while also maximizing the movement range. As a result, the animation effect provides better user experience and enhances user acceptance. For example, when a difference between a current pitch angle and the initial Pitch angle is within a range of positive and negative maximum change angles, a linear mapping slope for the pitch may be set to $\pm 540$. As shown in FIG. 9A, the linear mapping slope for the pitch corresponding to the two track groups is 540. As shown in FIG. 9B, the linear mapping slope for the pitch corresponding to the two track groups is -540. This is merely an example description, and is not limited. It should be noted that, according to a habit of using the electronic device by the user, the initial Pitch angle is generally set in a range of -90° to 0°.

**Animation principle** 2.A principle of how the target animation maps out an animation effect for a left-right and horizontal acceleration change.

When the user uses the electronic device in the vehicle, a motion state of the vehicle is basically the same as a motion state of the electronic device. Then, when the vehicle tilts left or right, the Roll angle (roll angle) of the vehicle changes; and correspondingly, the Roll angle (roll angle) of the electronic device also changes. Similarly, when the acceleration on the X-axis of the vehicle changes, the acceleration on the X-axis of the electronic device also changes.

Left-right tilting motion is low-frequency motion, and motion information manifested is low-frequency information; and left-right jolting is high-frequency motion, and motion information manifested is high-frequency information. In this embodiment of this application, the low-frequency information of the Roll angle change of the electronic device during left-right tilting and the high-frequency information of the X-axis acceleration acc_x during left-right jolting are both mapped into reverse vertical movement of the target animation, for example, into reverse vertical movement of an element group (such as two track groups).

For example, when it is detected that the roll angle is greater than an initial roll angle, and/or the X-axis linear acceleration is greater than a first acceleration threshold, it is determined that the vehicle is in a left-tilting and/or left-jolting motion state; and when it is detected that the roll angle is not greater than the initial roll angle and/or the X-axis linear acceleration is less than the first acceleration threshold, it is determined that the vehicle is in a right-tilting and/or right-jolting motion state. The initial roll angle may be set and adjusted according to an actual situation. For example, the initial roll angle may be 0 degrees, 5 degrees, or 10 degrees, which is not limited.

For example, the low-frequency information of the Roll angle change is mapped into the target animation, and presented animation effect is: when the vehicle tilts left, the Roll angle increases, the left track group moves upward, and the right track group moves downward; and when the vehicle tilts right, the Roll angle decreases, the left track group moves downward, and the right track group moves upward.

For example, the high-frequency information of acc_x is mapped into the target animation, and a presented animation effect is: when acc_x is greater than 0, the acceleration is to the right, the left track group moves upward, and the right track group moves downward; and when acc_x is less than 0, the acceleration is to the left, the left track group moves downward, and the right track group moves upward.

Optionally, pixel values for each asynchronous vertical movement of the two track groups may be preset, facilitating the two track groups to move upward or downward respectively according to the set pixel values. For example, when it is detected that the Roll angle increases a unit angle (such as 1°, 2°, or 3°), the left track group moves upward by a third pixel value, and the right track group moves downward by a fourth pixel value. For another example, when it is detected that the Roll angle decreases a unit angle (such as 1°, 2°, or 3°), the right track group moves upward by a third pixel value, and the left track group moves downward by a fourth pixel value. The third pixel value and the fourth pixel value may be set to 20, 40, 60, 80, or the like, which is not limited.

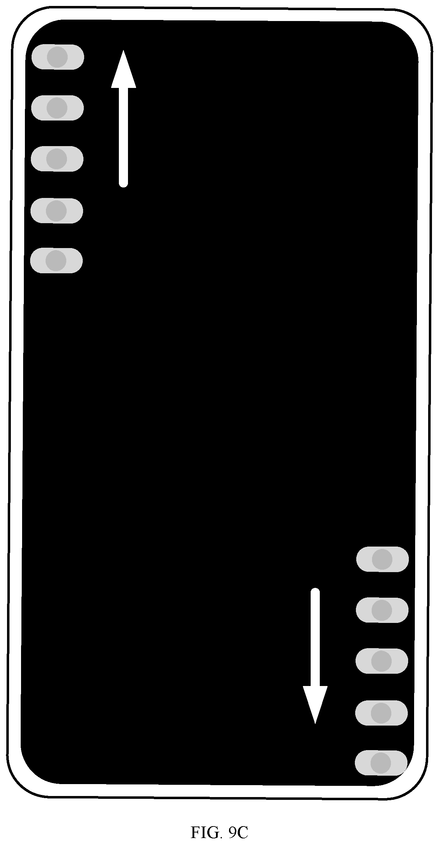

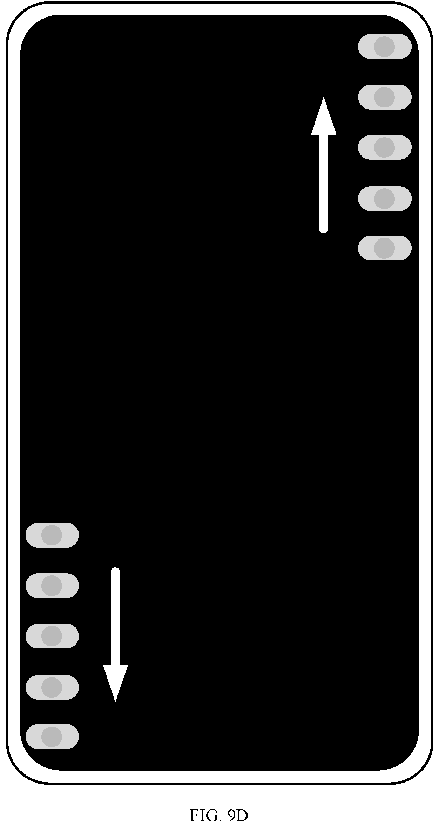

Referring to FIG. 9C and FIG. 9D, FIG. 9C and FIG. 9D are schematic diagrams of another principle of an animation effect according to an embodiment of this application. As shown in FIG. 9C, when the vehicle tilts left, the Roll angle increases, the left track group moves upward, and the right track group moves downward; and/or when acc_x is greater than 0, the acceleration is to the right, the left track group moves upward, and the right track group moves downward.

As shown in FIG. 9D, when the vehicle tilts right, the Roll angle decreases, the left track group moves downward, and the right track group moves upward; and/or when acc_x is less than 0, the acceleration is to the left, the left track group moves downward, and the right track group moves upward.

Optionally, in this embodiment of this application, the roll linear mapping slope may be set to 540. As shown in FIG. 9C, the linear mapping slope for the roll corresponding to the two track groups is 540. As shown in FIG. 9D, the linear mapping slope for the roll corresponding to the two track groups is -540. In this way, the target animation does not completely move off the screen while maximizing the expansion of the movement range, making the animation effect provide better user experience.

Optionally, this application further provides an animation effect for the target animation. While the two track groups move left-right in opposite directions, the two track groups themselves rotate around the Z-axis, thereby achieving a left-right tilting orientational visual effect on the target animation. Referring to FIG. 9E, FIG. 9E is a schematic diagram of rotation around an axis according to an embodiment of this application. As shown in FIG. 9E, the Z-axis refers to a direction perpendicular to the screen/display interface, and the track group itself rotates inward around the Z-axis.

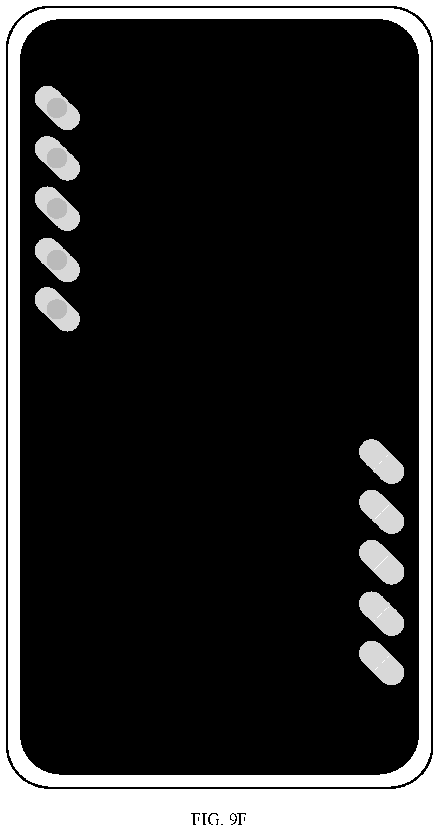

Referring to FIG. 9F, FIG. 9F is a schematic diagram of still another principle of an animation effect according to an embodiment of this application. As shown in FIG. 9F, it demonstrates the animation effect when tilting left with roll=45 degrees, where each animation element in the target animation rotates by -45 degrees around its own center point.

**Animation principle** 3. A principle of how the target animation maps out an animation effect of accelerating/-decelerating motion of the vehicle.

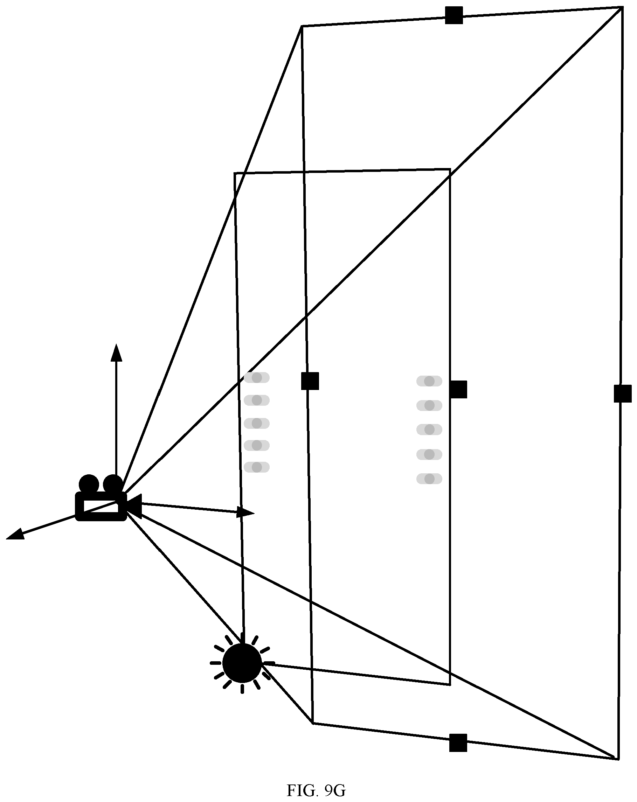

When simulating the animation effect of the vehicle in accelerating/decelerating driving/motion states through the target animation, this application, in order to simulate a real motion effect in a 3D world, uses the principle of camera movement animation and incorporates camera movement animation into the animation corresponding to acceleration/-deceleration simulation. Referring to FIG. 9G, FIG. 9G is a schematic diagram of yet another principle of an animation effect according to an embodiment of this application. As shown in FIG. 9G, all UX objects may be regarded as being on a plane; and a perspective camera rendering the target animation is equivalent to the eyes of the user. When a distance between the camera and a target animation plane is modified, the target animation also exhibits effects of positional and size perspective changes.

All UX objects refer to all objects related to user experience (User Experience, UX) in a 3D scenario. These objects may be elements that the user can see, interact with, or perceive, such as animation elements, interface controls, icons, texts, or graphics.

For example, when it is detected that the Y-axis linear acceleration is greater than a second acceleration threshold, it is determined that the vehicle is in an acceleration motion state; and when it is detected that the Y-axis linear acceleration is less than the second acceleration threshold, it is determined that the vehicle is in a deceleration motion state. The second acceleration threshold may be set and adjusted according to an actual situation, for example, the second acceleration threshold may be 0, 5, 10, or 15, which is not limited.

Optionally, in a possible implementation, parameters such as a field of view range of a perspective camera, distances of near and far planes of a viewing frustum, and an initial distance from the target animation plane may be set according to an actual situation, so that the track group is positioned in a position on the screen/display interface that provides visual comfort for the user. For example, the field of view range FOV of the perspective camera may be set to 67, the distances of the near and far planes of the viewing frustum may be set to 1 and 2000 respectively, and the initial distance INIT_POS from the target animation plane may be set to 1000 (in this case, the track groups are just located on both sides of the screen). In an acceleration scenario where acc_y > 0, the distance between the camera and the target animation plane decreases; and in a deceleration scenario where acc_y < 0, the distance cam_pos between the camera and the target animation plane increases.

Optionally, in a possible implementation, to enhance the visual feedback provided to the user by the target animation, a vertical movement animation and a scaling animation with the effect of "larger when closer, smaller when farther" have been added to the animation corresponding to the simulation of acceleration and deceleration. For example, during acceleration, the electronic device (such as a mobile phone) moves toward the eyes, which is equivalent to the camera moving toward the screen/display interface. When mapped into the perspective effect of the target animation, it appears as enlargement of the element groups (such as the two track groups), while simultaneously, the element groups (such as the two track groups) move downward. During deceleration, the electronic device (such as a mobile phone) moves away from the eyes, which is equivalent to the camera moving away from the screen/display interface. When mapped into the perspective effect of the target animation, it appears as reduction of the element groups (such as the two track groups), while simultaneously, the element groups (such as the two track groups) move upward.

Optionally, for this scenario, the pixel value by which the track group moves per unit of Y-axis acceleration (such as 30, 40, 50, or 60), the scaling ratio of the track group per unit of Y-axis acceleration (such as 0.1, 0.2, or 0.3), and the final mapping ratio for the track group (such as upper and lower amplitude limits of 0.2-2 or 0.1-1) may be preset, facilitating control of the change of the track group according to the set pixel value, scaling ratio, and mapping ratio, thereby presenting a more realistic animation effect to the user.

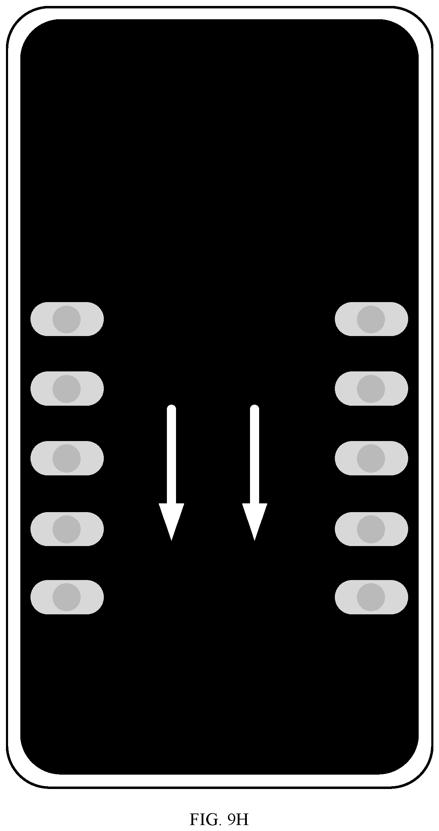

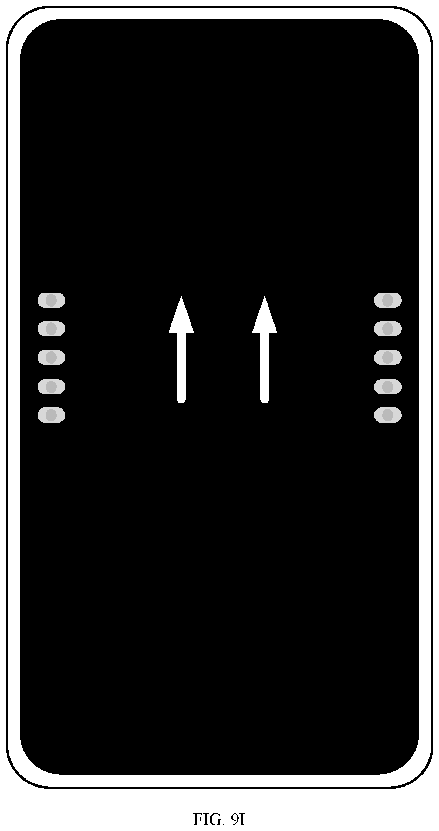

Referring to FIG. 9H and FIG. 9I, FIG. 9H and FIG. 9I are schematic diagrams of still another principle of an animation effect according to an embodiment of this application. As shown in FIG. 9H, when the vehicle accelerates and acc_y > 0, the track groups on the left and right sides move downward while simultaneously the track groups on the left and right sides enlarge. As shown in FIG. 9I, when the vehicle decelerates and acc_y < 0, the track groups on the left and right sides move upward while simultaneously the track groups on the left and right sides shrink.

**Animation principle** 4.A principle of how the target animation maps out an animation effect of left-right turning motion of the vehicle.

For example, when it is detected that a yaw angle is less than an initial yaw angle, it is determined that the vehicle is in a left-turning motion state; if it is detected that the yaw angle continues to decrease, it is determined that the vehicle is continuously in a left-turning motion state; when it is detected that the yaw angle is greater than the initial yaw angle, it is determined that the vehicle is in a right-turning motion state; and if it is detected that the yaw angle continues to increase, it is determined that the vehicle is continuously in a right-turning motion state. The initial yaw angle may be set and adjusted according to an actual situation. For example, the initial yaw angle may be 0 degrees, 5 degrees, or 10 degrees, which is not limited.

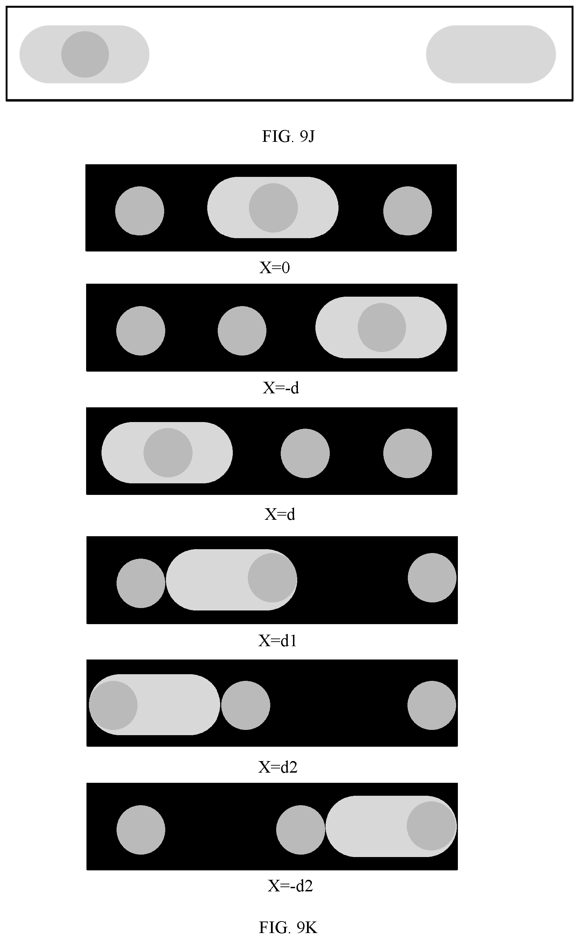

When simulating the animation effect of the vehicle in left-right turning driving/motion states through the target animation, this application adopts a cyclic animation manner. Referring to FIG. 9J, FIG. 9J is a schematic diagram of a principle of a cyclic animation according to an embodiment of this application. As shown in FIG. 9J, initially, the small ball is located at the center of the left track; and subsequently, the position of the small ball undergoes periodic mapping based on a change in the Yaw angle (heading angle), which may be understood as the small ball performing cyclic motion within the tracks on the left and right sides. It should be noted that the Yaw angle is the Yaw angle among the Euler angles converted from the GAME ROTV.

When the vehicle turns left, mapping this into the target animation presents the following animation effect: the Yaw angle decreases, and the small ball moves from the left track to the right. When the small ball completely moves out of the left track (that is, the small ball completely moves out from the right side of the left track), the small ball enters the left side of the right track. If the Yaw angle continues to decrease, and when the small ball completely moves out of the right track (that is, the small ball completely moves out from the right side of the right track), the small ball enters the left side of the left track. If the Yaw angle continues to decrease, the small ball continues this cyclic motion.

When the vehicle turns right, mapping this into the target animation presents the following animation effect: the Yaw angle increases, and the small ball moves from the right track to the left. When the small ball completely moves out of the right track (that is, the small ball completely moves out from the left side of the right track), the small ball enters the right side of the left track. If the Yaw angle continues to increase, and when the small ball completely moves out of the left track (that is, the small ball completely moves out from the left side of the left track), the small ball enters the right side of the right track. If the Yaw angle continues to increase, the small ball continues this cyclic motion.

Referring to FIG. 9K, FIG. 9K is a schematic diagram of another principle of a cyclic animation according to an embodiment of this application. As shown in FIG. 9K, each track has three small balls, and a spacing between the small balls is a track length d.

To enhance visual experience of the user and make the target animation more concise, different display manners are set for the three small balls, causing the small balls outside the track region to be hidden. It should be understood that this does not impose limitations on a quantity of small balls or the display manner of the small ball in an actual application scenario. For example, the quantity of small balls in the actual application scenario may be greater or less than that shown in FIG. 9K. The small balls outside the track region may be visible, may be partially hidden, the spacing between the small balls may also be adjusted, and so on.

For example, each track itself implements a cyclic animation. For example, the three small balls are numbered 2, 0, and 1 from left to right, respectively. When implementing the cyclic animation, the three small balls move as a whole, with the x-coordinate center located at the center of the small ball 0. FIG. 9K shows animation effects with x located at different positions.

Optionally, for the track on each side, the cyclic movement of the small ball within the track can be achieved through a sawtooth wave function in this application. For example, let x and the Yaw angle satisfy the sawtooth wave function. The sawtooth wave function is as follows:

$$x = -d(yaw/T + 0.5 - floor(yaw/T + 0.5)) + d/2$$

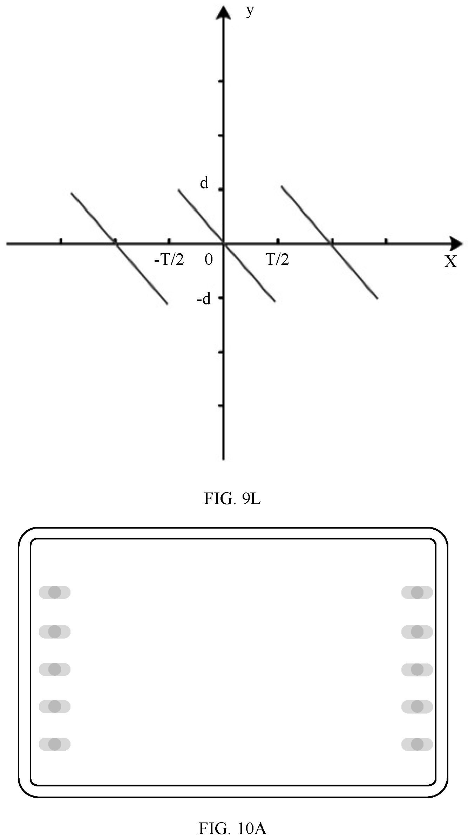

Referring to FIG. 9L, FIG. 9L is a schematic diagram of a function according to an embodiment of this application. As shown in FIG. 9L, d represents the spacing between the small balls, T represents the mapping period, and the Yaw angle may be set and adjusted according to an actual scenario, and in this example, is designed as 18°.

Optionally, an embodiment of this application further provides a display method: according to simulated different driving/motion states of the vehicle, transparency of the target animation is adjusted to make the target animation present a fade-out or fade-in animation effect.

For example, the electronic device determines different motion states (or referred to as motion scenarios) the vehicle is currently in based on collected sensor data, and adjusts the transparency of the animation elements according to the different motion states. For example, adjusting the transparency of the track element (such as the track) and the movable element (such as the small ball) included in the animation element to generate a fade-out animation or a fade-in animation, causing the track element (such as the track) and the movable element (such as the small ball) to present a fade-out or fade-in animation effect.

It should be noted that, the process of adjusting the transparency of the animation elements, or the transition process from a fade-out animation to a fade-in animation and from a fade-in animation to a fade-out animation, is a smooth and continuous process. This transition manner enhances a visual effect, makes the target animation look more natural, and improves user experience.

Optionally, in a possible implementation, the electronic device may adaptively adjust the animation transition time, for example, set the transition time (represented by tween_time in this example) to 1 second, 1.5 seconds, or 2 seconds. Optionally, the user may also adjust the animation transition time according to the preference of the user, which can enhance personalized experience of the user.

The logic for adjusting transparency is explained using an example where the track element is a track and the movable element is a small ball in the following.

For example, for the small ball, when the electronic device detects that the vehicle is in a non-steady/uniform motion state, the opacity of the small ball is increased/raised, or the transparency of the small ball is decreased/lowered, and the small ball presents a fade-in animation effect; and when the electronic device detects that the vehicle is in a steady/uniform motion state, the opacity of the small ball is decreased/lowered, or the transparency of the small ball is increased/raised, and the small ball presents a fade-out animation effect. The non-steady/uniform motion state may include a turning motion state, an uphill/downhill motion state, a left-right jolting motion state, a left-right tilting motion state, a vertical jolting motion state, an acceleration/deceleration motion state, and the like.

In this example, the vehicle being in a turning motion state is taken as an example for explanation. For example, the angle between the electronic device and the horizontal plane is defined as θ (0<θ<90°), and the angular velocity of the Yaw angle of the electronic device is defined as $V_{yaw}^{*}$ (which may be obtained from the gyroscope sensor). Then, a relationship between θ and $V_{yaw}^{*}$ is as follows:

$$V_{yaw}^{*} = V_{yaw}/\cos\theta, \theta < 45$$

$$V_{yaw}^{*} = V_{roll}/\sin\theta, \theta > 45$$

When the angular velocity of the Yaw angle is greater than a first angular velocity threshold, for example, when $V_{yaw}^{*} > TURN\_THRES$, a small ball fade-in animation is played, and the opacity transitions from a first opacity value to a second opacity value and is maintained; and when the angular velocity of the Yaw angle is less than or equal to the first angular velocity threshold, for example, when $V_{yaw}^* < TURN\_THRES$ or $V_{yaw}^* = TURN\_THRES$, a small ball fade-out animation is played, and the opacity transitions from the second opacity value to the first opacity value and is maintained. For example, the first opacity value may be set to 100 or 110, and the second opacity value may be set to 230 or 255. The opacity values here are merely examples illustrated and impose no limitation on setting of the opacity values in an actual scenario.

Optionally, in a possible implementation, when the angular velocity of the Yaw angle is greater than or equal to the first angular velocity threshold, for example, $V_{yaw}^* \geq TURN\_THRES$, a small ball fade-in animation is played, and the opacity transitions from the first opacity value to the second opacity value and is maintained; and when the angular velocity of the Yaw angle is less than the first angular velocity threshold, for example, $V_{yaw}^* < TURN\_THRES$, a small ball fade-out animation is played, and the opacity transitions from the second opacity value to the first opacity value and is maintained.

For example, for the track, when the electronic device detects that the vehicle is in a non-steady/uniform motion state, the opacity of the track is increased/raised, or the transparency of the track is decreased/lowered, and the track presents a fade-in animation effect; and when the electronic device detects that the vehicle is in a steady/uniform motion state, the opacity of the track is decreased/lowered, or the transparency of the track is increased/raised, and the track presents a fade-out animation effect.

Optionally, when a pixel value moved by the left and right track groups within a single-frame rendering time exceeds a first movement threshold, a track fade-in animation is played, and the opacity transitions from a third opacity value to a fourth opacity value and is maintained; and when the single-frame movement pixel value does not exceed the first movement threshold, a track fade-out animation is played, and the opacity transitions from the fourth opacity value to the third opacity value and is maintained. For example, the third opacity value may be set to 100 or 120, and the fourth opacity value may be set to 220 or 255. The opacity values here are merely examples illustrated and impose no limitation on setting of the opacity values in an actual scenario.

It may be understood that the first movement threshold and the single-frame rendering time may be set and adjusted according to an actual scenario, which is not limited. In this example, the first movement threshold may be set to 1, 2, 3, or the like, and the single-frame rendering time is 33.33 ms at 30 Hz, 16.67 ms at 60 Hz, 11.11 ms at 90 Hz, 8.33 ms at 120 Hz, 6.94 ms at 144 Hz, 4.17 ms at 240 Hz, or the like.

It should be noted that, in this embodiment of this application, when the track element (such as the track) and the movable element (such as the small ball) respectively meet their corresponding fade-in conditions or fade-out conditions, their corresponding transparency can be adjusted simultaneously.

In this implementation, when the vehicle is in a steady/uniform motion state, the opacity of the track element and the movable element is reduced, thereby lowering the presence of the target animation, reducing the intrusive feeling of the target animation on the screen/display interface, which is beneficial for the user to focus on browsing the page content; and when the vehicle is in a non-steady/uniform motion state, the opacity of the track element and the movable element is increased, enhancing the feedback of the target animation, which helps maintain consistency between the motion information perceived by the eyes of the user and the motion information perceived by the vestibular system, thereby better relieving carsickness symptoms of the user.

Optionally, in a possible implementation, it is also possible to detect whether the user is gazing at the target animation, and adjust the transparency of the target animation based on a detection result, causing the target animation to present a fade-out or fade-in animation effect. For example, if it is detected that the user is gazing at the target animation, the opacity of the target animation is increased/raised, and the target animation presents a fade-in animation effect; and if it is detected that the user is not gazing at the target animation, the opacity of the target animation is decreased/lowered, and the target animation presents a fade-out animation effect. For another example, if the electronic device detects that the vehicle is in a non-steady/uniform motion state and detects that the user is gazing at the target animation, the opacity of the target animation is increased/raised, and the target animation presents a fade-in animation effect; and if the electronic device detects that the vehicle is in a non-steady/uniform motion state and detects that the user is not gazing at the target animation, the opacity of the target animation is decreased/lowered, and the target animation presents a fade-out animation effect. This is merely an example description, and is not limited.

It should be noted that a window corresponding to the target animation provided by this application is a floating window. This floating window may be displayed floating above an underlying page (such as a page corresponding to an application or a system interface) without obstructing or interfering with normal use of the underlying page. That is, the target animation provided by this application is displayed above the underlying page in a form of a floating window. Due to transparency and penetrability of the floating window, while watching the target animation, the user can normally browse content of the underlying page and also interact normally with the underlying page through the target animation. In this implementation, displaying the target animation in the form of a floating window can relieve motion sickness of the user through the target animation while not affecting browsing and interaction of the user with the page, thereby enhancing user experience.

Optionally, in a possible implementation, the display method provided by this application further includes: generating different anti-carsickness modes according to different motion sickness scenarios. The motion sickness scenarios refer to scenarios that may cause the user to experience motion sickness and may include vehicle riding scenarios, subway riding scenarios, ship riding scenarios, aircraft riding scenarios, and the like.

For example, through environmental perception and user state, it is determined that the user is in a vehicle riding scenario; and based on different driving/motion states of the vehicle, a corresponding anti-carsickness mode is customized for the vehicle riding scenario.

Optionally, in a possible implementation, the display method provided by this application further includes: customizing different anti-carsickness modes for users with different needs in motion sickness scenarios. Users with different needs may include users with work requirements (that is, users who need to work in motion sickness scenarios) and users with entertainment needs (such as playing games, watching dramas, reading, painting, and listening to music.).

Optionally, in a possible implementation, these customized anti-carsickness modes may also be integrated into accessibility features of the electronic device, facilitating the user to independently select different anti-carsickness modes according to needs.

This manner of personalized customization of anti-carsickness modes can meet the needs of various users, relieving motion sickness of the user while enhancing user experience.

Optionally, in a possible implementation, the display method provided by this application further includes: The electronic device obtains a current screen mode and adaptively switches a display manner of the target animation according to the screen mode. The screen mode may include a landscape mode, a portrait mode, a split-screen mode, a foldable screen mode, and the like.

Take automatic switching of an animation aspect ratio to adapt to the screen between the landscape mode and the portrait mode as an example for explanation. The screen mode shown in FIG. 4B is the portrait mode, and the screen mode shown in FIG. 4D is the landscape mode. For example, during switching between the landscape and portrait modes, an actual coordinate system of a sensor needs to be adjusted.

For example, when switching from the portrait mode to the landscape mode, the quaternion is twisted and transformed through the Game ROTV to obtain a new quaternion of the electronic device. The new quaternion is processed using the foregoing first rotation matrix to calculate Euler angles of the electronic device in the landscape mode. Based on the Euler angles in the landscape mode and the third rotation matrix, a linear acceleration of the electronic device in the horizontal coordinate system is calculated.

For example, the quaternion may be represented as ( $[b,c,d,a]$ ). Twisting transformation of the quaternion is achieved through a first formula or a second formula, after which the linear acceleration undergoes coordinate twisting transformation via the third rotation matrix. Then, the converted quaternion is transformed into Euler angles using the formulas mentioned earlier. Based on the Euler angles and the linearly accelerated transformed coordinates, horizontal projections in different directions are performed according to the formulas mentioned earlier. For example, when the electronic device rotates by 90° to the left, the twisting transformation of the quaternion is achieved through the first formula; and when the electronic device rotates by 90° to the right, the twisting transformation of the quaternion is achieved through the second formula.

The first formula is as follows:

$$\left[b',c',d',a'\right]=\left[\frac{\sqrt{2}}{2}(\mathrm{b}-c),\frac{\sqrt{2}}{2}(\mathrm{b}+c),\frac{\sqrt{2}}{2}(\mathrm{d}-a),\frac{\sqrt{2}}{2}(\mathrm{d}+a)\right]$$

The second formula is as follows:

$$\left[b',c',d',a'\right]=\left[\frac{\sqrt{2}}{2}(\mathrm{b}+\mathrm{c})\ ,\frac{\sqrt{2}}{2}(\mathrm{c}-\mathrm{b}),\frac{\sqrt{2}}{2}(a+d),\frac{\sqrt{2}}{2}(a-d)\right]$$

The third rotation matrix is as follows:

$$[x'', \quad y'', \quad z''] = \begin{bmatrix} 0 & -1 & 0 \\ 1 & 0 & 0 \\ 0 & 0 & 1 \end{bmatrix} * [x', \quad y', \quad z'] \quad ,$$

$$[x'', \quad y'', \quad z''] = \begin{bmatrix} 0 & 1 & 0 \\ -1 & 0 & 0 \\ 0 & 0 & 1 \end{bmatrix} * [x', \quad y', \quad z']$$

In the foregoing third rotation matrix, the first matrix is a rotation matrix corresponding to a 90° left turn, and the second matrix is a rotation matrix corresponding to a 90° right turn.

In this implementation, the display manner of the target animation is adaptively switched based on the screen mode, enabling the target animation to promptly respond to a change in the screen mode. This manner offers high flexibility and adaptability, ensuring that the user can obtain optimal viewing experience in any screen mode.

Optionally, in a possible implementation, considering that the user may adopt different attitudes when using the electronic device, such as holding the electronic device vertically or placing the electronic device flat, in order to ensure continuous visibility of the target animation, when a change in attitude is detected, the display position of the target animation may be reset. For example, if it is detected that the electronic device is changed from being held vertically to being placed flat, or from being placed flat to being held vertically, the display position of the target animation is reset to a first position (such as the center of the screen).

Optionally, in a possible implementation, the display method provided by this application may further automatically adjust the display position and/or the display size of the target animation according to the size of the display interface.

For example, the target animation provided by this application has broad applicability and can be applied to various types of electronic devices. For example, the target animation can be applied to a mobile phone, a smart screen, a tablet computer, a wearable device (such as a smartwatch, smart glasses, or a smart band), an AR/VR device, a laptop, a UMPC, a netbook, a PDA, handheld or laptop device, a media player, a smart projector, a smart TV, a desktop computer, and a vehicle-mounted infotainment system.

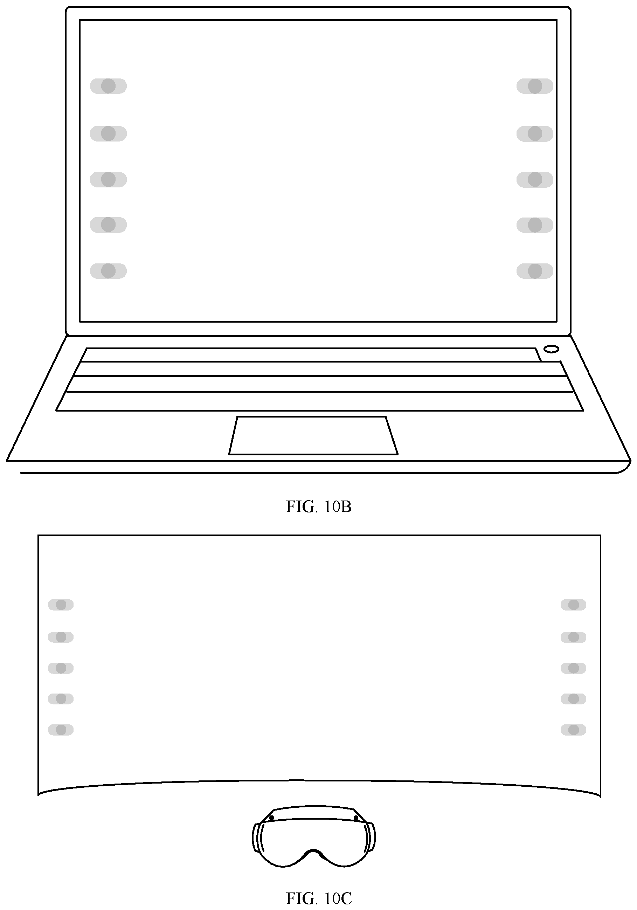

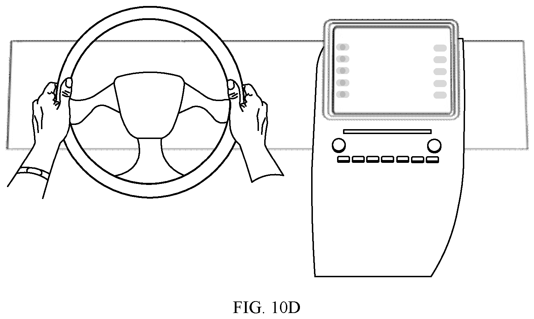

Referring to FIG. 10A to FIG. 10D, FIG. 10A to FIG. 10D are schematic diagrams of some application scenarios of a target animation according to an embodiment of this application. As shown in FIG. 10A to FIG. 10D, scenarios in which the target animation is applied to a tablet, a laptop, a VR device, and a vehicle central control screen are respectively illustrated. It should be understood that the descriptions regarding the target animation in the previous embodiments are all applicable to the tablet, the laptop, the VR device, and the vehicle central control screen.

Optionally, in a possible implementation, the display method provided by this application can further adjust a color of the target animation according to a color of a page currently displayed on the electronic device. For example, a main color tone of the display interface is extracted, and the display color of the animation element is adjusted based on this main color tone. The main color tone and the display color of the animation elements can produce contrast, thereby creating contrast between the page color and the display color of the animation element. This is more conducive to the user perceiving and viewing the target animation.

For example, the background color is extracted through a color picking logic, the display color of the target animation is determined based on the background color, and the target animation is displayed with the display color. The background color is the color of the underlying page in the current display region of the target animation. For example, when two track groups are displayed on both sides of the screen, the color of the underlying page in the current display region of the two track groups is the background color, that is, the color of the pages displayed on both sides of the screen.

The color picking logic refers to a series of algorithms and techniques used in an application or a system to determine and obtain a color of a specific region.

Determining the display color of the target animation may be determining the display colors of the track element and the movable element within the animation elements. For example, the display colors of the track and the small ball are determined. These display colors enable the target animation to be clearly displayed on a page of any color. In this embodiment of this application, the display color may be composed of any combination in an RGB color model. For example, the display color may include red, orange, yellow, green, cyan, blue, and purple.

Optionally, in a possible implementation, the display method provided by this application may further include: performing personalized adjustment on an animation parameter corresponding to the target animation. That is to say, the user can adjust the animation parameter corresponding to the target animation according to the preference of the user. The animation parameter may include sensitivity of the three-axis acceleration, the scaling ratio of the target animation, the camera position, the Pitch mapping amplitude, a track color grayscale, an initial size, the color of the small ball, the transparency, and the like.

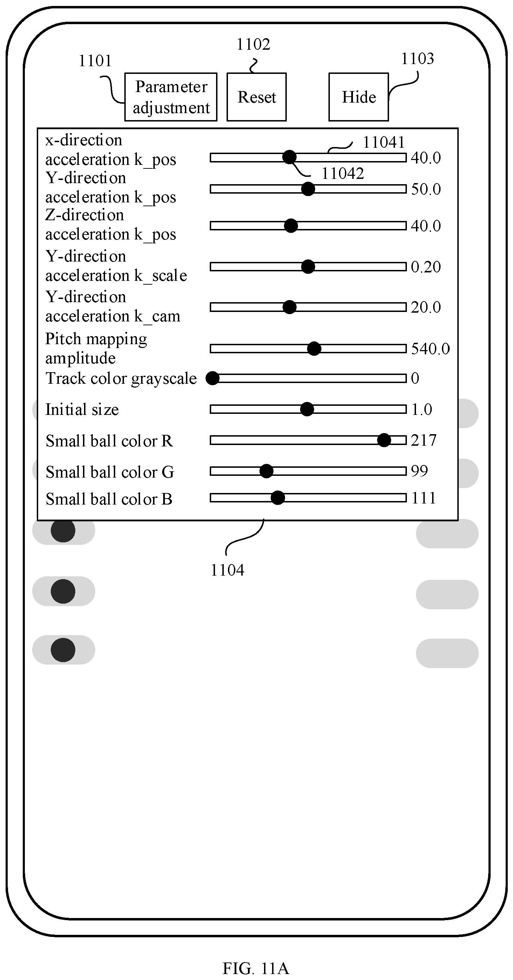

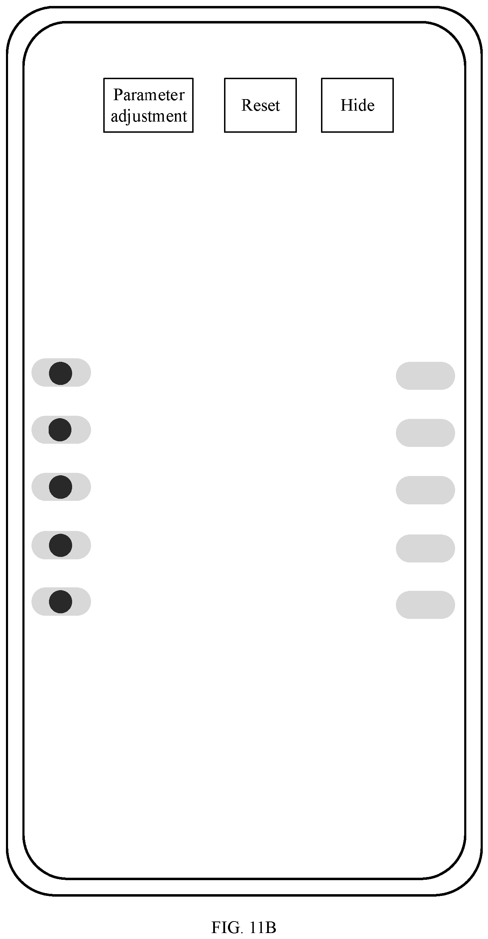

Referring to FIG. 11A and FIG. 11B, FIG. 11A and FIG. 11B are schematic diagrams of a parameter adjustment interface according to an embodiment of this application. As shown in FIG. 11A, the target animation may further include a parameter adjustment interface. The parameter adjustment interface includes a "parameter adjustment" control 1101, a "reset" control 1102, a "hide" control 1103, and an animation parameter display region 1104. The animation parameter display region 1104 displays a plurality of animation parameters, an adjustment bar corresponding to each animation parameter, a parameter value corresponding to each animation parameter, and the like.

As shown in FIG. 11A, the animation parameters may include: an X-direction acceleration k_pos, a Y-direction acceleration k_pos, a Z-direction acceleration k_pos, a Y-direction acceleration k_scale, a Y-direction acceleration k_cam, a Pitch mapping amplitude, a track color grayscale, an initial size, a small ball color R, a small ball color B, and a small ball color G. Parameter values corresponding to each animation parameter may include: 40.0, 50.0, 40.0, 0.20, 20.0, 540.0, 0, 1.0, 217, 99, and 111.

The "parameter adjustment" control 1101 is used to display the animation parameter display region 1104, facilitating the user to adjust each animation parameter via the adjustment bar. For example, the user may drag a small ball 11042 left or right within an adjustment bar 11041, or tap anywhere within the adjustment bar 11041, to adjust the parameter value of the X-direction acceleration k_pos. Correspondingly, a parameter value on the right side of the adjustment bar 11041 also changes accordingly. It should be understood that the manner of adjusting the animation parameters in this example does not impose a limitation on the manner of adjusting the animation parameters in an actual scenario. For example, the parameter value on the right side may be tapped to directly modify a number of the parameter value.

Optionally, controls for adjusting various animation parameters may alternatively be integrated into a single adjustment control, allowing for one-tap adjustment of the animation parameters of the target animation, or one-tap adjustment of a feedback degree of the target animation. This implementation facilitates the user in adjusting the overall animation effect of the target animation, reduces difficulty of use, and enhances user experience.

The "reset" control 1102 is used to reset a plurality of animation parameters with one tap, that is, to restore a plurality of animation parameters to their initial values with one tap, which is equivalent to performing an initialization operation on a plurality of animation parameters. For example, when the user taps the "reset" control 1102, the electronic device responds to the tap operation of the user on the "reset" control 1102 by restoring the plurality of animation parameters to their initial values. This operation is simple and provides the user with comfortable experience.

The "hide" control 1103 is used to hide the animation parameter display region 1104. For example, when the user taps the "hide" control 1103, the electronic device responds to the tap operation of the user on the "hide" control 1103 by hiding the animation parameter display region 1104, as shown in the interface in FIG. 11B. This facilitates the user's viewing of the target animation and browsing of the content of the underlying page of the target animation.

Because each user has different visual sensitivity, the manner of personalized adjustment of the animation parameters provided by this application allows the user to adjust the target animation to a visual feedback intensity suitable for the user, thereby using the adjusted target animation to relieve motion sickness of the user to a greater extent.

Optionally, in a possible implementation, the user may directly perform various functional operations on the target animation, such as a tap operation, a drag operation, a scaling operation (such as a two-finger pinch-to-zoom operation), and a long-press operation. For example, the user performs a tap operation on the target animation, and the electronic device responds to this tap operation by switching the color of the target animation; the user performs a drag operation on the target animation, and the electronic device responds to this drag operation by moving the target animation to any position on the screen/display interface; the user performs a two-finger pinch-to-zoom operation on the target animation, and the electronic device responds to this two-finger pinch-to-zoom operation by enlarging or reducing the display size of the target animation; the user performs a long-press operation on the target animation, and the electronic device responds to this long-press operation by adjusting the opacity of the target animation, and so on. This is merely an example description, and is not limited.

Optionally, in a possible implementation, the display method provided by this embodiment of this application may further include: after detecting use of an anti-motion sickness function/mode, displaying a question related to the anti-motion sickness function/mode on the display interface; and collecting the user's response, and intelligently adjusting the animation parameters of the target animation based on the user's response. The electronic device may record the animation parameters of the target animation adjusted each time, facilitating the user's selection according to the user's own needs.

For example, the initial animation parameters of the target animation are set to parameters suitable for a user with mild motion sickness. After the user uses the anti-motion sickness function/mode for the first time, the user's usage feedback is collected through inquiry, and the animation parameters of the target animation are intelligently adjusted based on the user's usage feedback.

Optionally, in a possible implementation, the display method provided by this embodiment of this application may further include: setting the initial animation parameters of the target animation to parameters suitable for a user with mild motion sickness; displaying one or more controls for adjusting the animation parameters in a preset region of the display interface (such as the top of the screen); and in response to the user's operation on these controls (such as a tap operation, a slide operation, or a drag operation), adjusting the animation parameters of the target animation with one tap. Visual styles of the controls for adjusting the animation parameters may be a capsule style, a rectangular style, and the like, which is not limited.

It should be understood that different controls correspond to different degrees of adjustment for the animation parameters, making the adjusted target animation suitable for users with different degrees of motion sickness.

Optionally, in a possible implementation, this embodiment of this application further provides a mini-program. The mini-program is used to implement the various functions and the various animation effects related to the target animation described in the foregoing embodiments. For example, when a condition for enabling the anti-motion sickness function/mode is met, the electronic device automatically invokes the mini-program, or the user scans a mini-program code corresponding to the mini-program to enter the mini-program. For example, in a possible implementation scenario, when the user is riding in a vehicle, the user scans a mini-program code posted inside the vehicle, enters the mini-program, and thereby experiences the various functions and the various animation effects of the target animation, achieving the effect of relieving motion sickness.

Optionally, in a possible implementation, an embodiment of this application further provides a web page, and the web page is used to implement the various functions and the various animation effects related to the target animation described in the foregoing embodiments.

Optionally, in a possible implementation, an embodiment of this application further provides a plug-in, and the plug-in is used to implement the various functions and the various animation effects related to the target animation described in the foregoing embodiments.

Optionally, in a possible implementation, this embodiment of this application further provides a method for relieving motion sickness. Based on the principle of relieving motion sickness through visual feedback, a method using haptic and/or auditory feedback to relieve motion sickness is designed.

For example, based on a motion sensor in the electronic device, a motion sensor built into a headset (a wireless headset or a wired headset), a motion sensor in a vehicle-mounted infotainment system, or the like, a position of a sound field is dynamically adjusted using a spatial audio feature to simulate different motion states of the vehicle. This allows motion information perceived by the user through hearing to be consistent with motion information perceived by the vestibular system. That is, a motion state perceived by the user through hearing is consistent with a motion state of the vehicle relative to the ground perceived by the vestibular system of the user. In other words, the spatial audio can provide the user with auditory feedback coordinated with the vestibular system, thereby relieving motion sickness of the user.

For another example, by adjusting frequency and intensity of motor vibration (such as one or more motors in an electronic device, a vehicle, a ship, an aircraft, and the like), synchronization with the actual motion state of the vehicle is achieved, providing the user with real-time haptic feedback. This allows the motion information perceived by the user through touch to be consistent with the motion information perceived by the vestibular system. For example, haptic feedback motors may be integrated into a plurality of regions such as a vehicle seat, a backrest, and an armrest. When the vehicle is in a non-steady/uniform motion state, comprehensive haptic feedback is provided through motor vibration, thereby ensuring that the motion information perceived by the user through touch is consistent with the motion information perceived by the vestibular system, achieving the effect of relieving motion sickness of the user. Optionally, the user can adjust the intensity and mode of the haptic feedback according to the preference of the user to obtain optimal comfort and the effect of relieving motion sickness.

For another example, any combination of visual feedback, auditory feedback, and haptic feedback is used to achieve the effect of relieving motion sickness of the user.

Optionally, vestibular training may further be performed based on the display method provided by this application, and as a quantity of times of training increases, the user may completely overcome motion sickness.

Optionally, assessment of the user's health status (such as vestibular health status) and/or athletic ability, and the like may further be performed based on the display method provided by this application, and a suggestion regarding health and/or exercise can be provided to the user, thereby improving user experience.

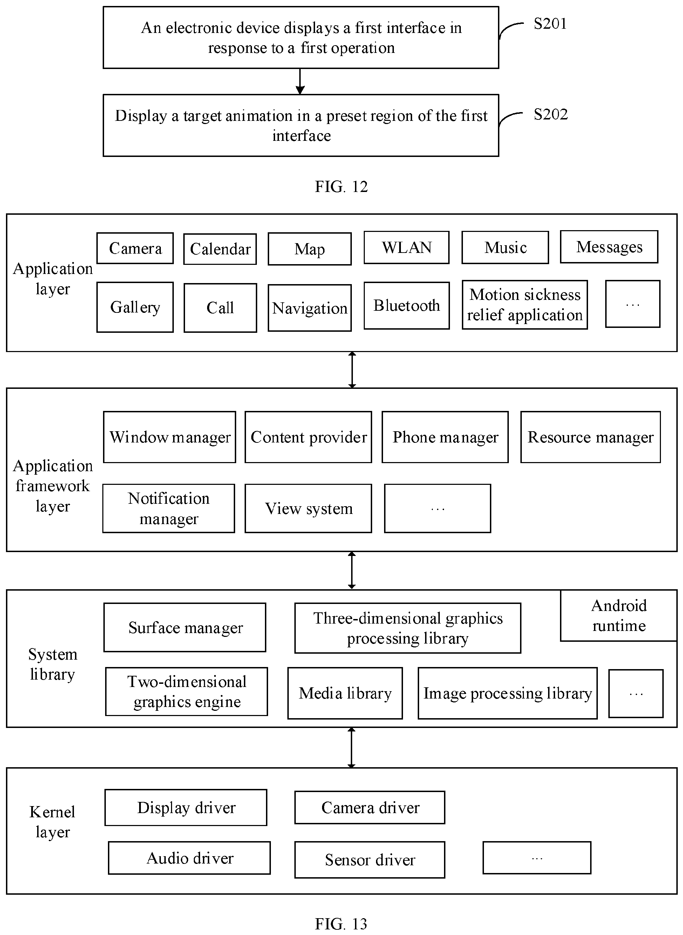

Referring to FIG. 12, FIG. 12 is an example flowchart of a display method according to an embodiment of this application.

In some possible cases, for an example process involved when an electronic device displays a target animation, refer to the following descriptions of step S201 and step S202.

S201: The electronic device displays a first interface in response to a first operation.

In response to the first operation, a motion sickness relief function is enabled, and the electronic device displays the first interface (also referred to as a display interface). The first operation may include at least one of a tap operation, a slide operation, a voice operation, and a gesture operation for enabling the motion sickness relief function switch.

For example, in addition to the manners of enabling the motion sickness relief function described in the foregoing embodiments, enabling the motion sickness relief function may be triggering enabling of a motion sickness relief application through a mobile travel application. The mobile travel application may include a navigation application, a ride-hailing application, an automatic driving application, and the like.

For example, the electronic device is running a mobile travel application. Through the running mobile travel application, it is detected that the user is currently in any one mode among a vehicle riding mode, a ship riding mode, an aircraft riding mode, and the like. The mobile travel application then inquires, through a notification or reminder, whether the user needs to start the motion sickness relief application. After the user performs an operation confirming the need to start the motion sickness relief application, the motion sickness relief application is started.

S202: Display the target animation in a preset region of the first interface.

For step S202, refer to related descriptions in the foregoing embodiments. Details are not described herein again.

Different target animations may be used to map in real time different motion states of the electronic device. When the electronic device is inside a transportation vehicle (such as a vehicle), the motion state of the electronic device is consistent with a motion state of the transportation vehicle (such as the vehicle), then different target animations may be used to map in real time different motion states of the transportation vehicle (such as the vehicle).

Optionally, the first preset direction in this application refers to a direction from bottom to top, as indicated by the direction in which the target animation shown in FIG. 5F moves to the target animation shown in FIG. 5G. The second preset direction refers to a direction from top to bottom, as indicated by the direction in which the target animation shown in FIG. 5C moves to the target animation shown in FIG. 5D. The third preset direction refers to a direction from left to right, and the fourth preset direction refers to a direction from right to left.

In this implementation, the animation element in the target animation changes according to the motion state of the electronic device, so that the displayed target animation can simulate different motion states of the electronic device in real time, and motion information felt by eyes of a user is consistent with motion information felt by the vestibular system, that is, the motion state of the target animation in the display interface seen by the eyes of the user is consistent with the motion state felt by the vestibular system. In this way, a conflict between motion states perceived by vision of the user and the vestibular system can be relieved, thereby relieving motion sickness of the user.

The foregoing describes the display method provided in the embodiments of this application with reference to a flowchart, and the following describes the display method provided in this application with reference to a software structure.

Referring to FIG. 13, FIG. 13 is a schematic diagram of a software structure of an electronic device according to an embodiment of this application. A software system of the electronic device may use a layered architecture, an event-driven architecture, a microkernel architecture, a microservice architecture, or a cloud architecture. In embodiments of this application, an Android (Android) system with a layered architecture is used as an example to describe a software structure of the electronic device.

It should be understood that in the layered architecture, software may be divided into several layers, and each layer has a clear role and task. Layers communicate with each other through a software interface.

As shown in FIG. 13, the Android system may be divided into four layers: an application layer, an application framework layer, an Android runtime (Android runtime) and system library, and a kernel layer from top to bottom. The application layer may include a series of application packages.

As shown in FIG. 13, the application packages may include applications such as Camera, Gallery, Calendar, Phone, Maps, Navigation, WLAN, Bluetooth, Music, Video, Messaging, and Motion Sickness Relief Application.

The application framework layer provides an application programming interface (application programming interface, API) and a programming framework for an application at the application layer. The application framework layer includes some predefined functions.

As shown in FIG. 13, the application framework layer may include a window manager, a content provider, a view system, a phone manager, a resource manager, a notification manager, and the like.

The window manager is configured to manage a window program. The window manager may obtain a screen/display interface size of the electronic device, determine whether there is a status bar, and control a target animation to be displayed in a floating manner.

The content provider is configured to store and obtain data, and enable the data to be accessible to an application. The data may include a video, an image, audio, calls that are made and answered, a browsing history and bookmarks, a phone book, and the like.

The view system includes visual controls such as a control for displaying a text, a control for displaying a picture, and a control for displaying a target animation. The view system may be configured to build an application. A display interface may include one or more views.

The phone manager is configured to provide a communication function of the electronic device, for example, call status management (including answering, hanging up, and the like).

The resource manager provides various resources for an application, for example, a localized string, an icon, a picture, a layout file, and an animation file.

The notification manager enables the application to display notification information in a status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted in the status bar, an alert sound is made, the terminal device vibrates, or an indicator light blinks.

The Android runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run in the virtual machine. The virtual machine executes java files of the application layer and the application framework layer as binary files. The virtual machine is configured to perform functions such as object lifecycle management, stack management, thread management, security and abnormity management, and garbage collection.

The system library may include a plurality of functional modules, for example, a surface manager (surface manager), a media library (Media Libraries), a three-dimensional graphics processing library (for example, an open graphics library for embedded systems (open graphics library for embedded systems, OpenGL ES)), and a 2D graphics engine (for example, a skia graphics library (skia graphics library, SGL)).

The surface manager is configured to manage a display subsystem, and provide 2D and 3D layer fusion for a plurality of applications.

The media library supports playback and recording of audio in a plurality of formats, playback and recording of videos in a plurality of formats, and still image files. The media library may support a plurality of audio and video encoding formats, such as MPEG4, H.264, moving picture experts group audio layer III (moving picture experts group audio layer III, MP3), advanced audio coding (advanced audio coding, AAC), adaptive multi-rate (adaptive multi-rate, AMR), joint photographic experts group (joint photographic experts group, JPG), and portable network graphics (portable network graphics, PNG).

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display driver, a camera driver, an audio driver, and a sensor driver.

The sensor driver provides a basis for the electronic device to obtain sensor data.

In this embodiment of this application, the electronic device may use the foregoing software system to display the display method in the embodiments corresponding to the foregoing accompanying drawings.

The foregoing embodiments are merely used to describe the technical solutions of this application, but are not used to limit this application. Although this application is described in detail with reference to the foregoing embodiments, it should be understood by a person of ordinary skill in the art that the technical solutions described in the foregoing embodiments may still be modified, or some technical features thereof are equivalently replaced. These modifications or replacements do not make the essence of the corresponding technical solutions depart from the scope of the technical solutions of the embodiments of this application.

The following briefly describes a hardware structure of the electronic device involved in embodiments of this application with reference to the accompanying drawings.

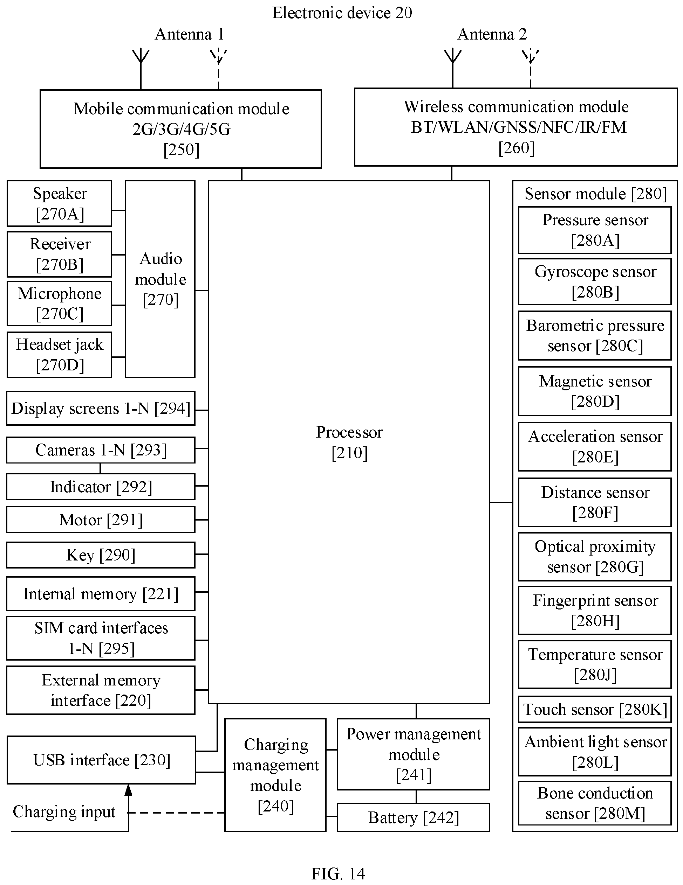

Referring to FIG. 14, FIG. 14 is a schematic diagram of a hardware structure of an electronic device according to an example embodiment of this application.

As shown in FIG. 14, the electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a key 290, a motor 291, an indicator 292, a camera 293, a display screen 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application constitutes no specific limitation on the electronic device 200. In some other embodiments of this application, the electronic device 200 may include more or fewer components than those shown in FIG. 14, or the electronic device 200 may include a combination of some of the components shown in FIG. 14, or the electronic device 200 may include sub-components of some of the components shown in FIG. 14. The components shown in FIG. 14 may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like.

A memory may be further disposed in the processor 210 to store instructions and data.

In this embodiment of this application, the processor 210 may perform steps in the display method. For example, the processor 210 may run software code of the display method provided in this embodiment of this application, so as to relieve motion sickness of the user.

The electronic device 200 may implement a display function by using the GPU, the display screen 294, and the application processor. The GPU is a microprocessor for image processing and connects the display screen 294 and the application processor. The GPU may be further used to perform mathematical and pose calculation, and for graphic rendering and the like. The processor 210 may include one or more GPUs, and the GPUs execute program instructions to generate or change display information.

In this embodiment of this application, a capability of the electronic device 200 to display the display interface and the target animation shown in the accompanying drawings depends on display functions provided by the GPU, the display screen 294, and the application processor.

In some embodiments, the electronic device 200 may include one or N display screens 294, and N may be a positive integer greater than 1.

The display screen 294 in this embodiment of this application may be a touchscreen. The display screen 294 may be integrated with the touch sensor 280K. The touch sensor 280K may also be referred to as a "touch panel". That is, the display screen 294 may include a display panel and a touch panel, and the touch sensor 280K and the display screen 294 form a touchscreen, which is also referred to as a "touch screen". The touch sensor 280K is configured to detect a touch operation on or near the touch sensor 280K. After the touch operation is detected by the touch sensor 280K, the touch operation may be transmitted to an upper layer by using a driver (for example, a TP driver) of the kernel layer, so as to determine a touch event type. A visual output related to the touch operation may be provided by using the display screen 294. In some other embodiments, the touch sensor 280K may be alternatively disposed on a surface of the electronic device 200, and is located at a position different from that of the display screen 294.

The external memory interface 220 may be configured to be connected to an external memory card, for example, a Micro SD card, to extend a storage capability of the electronic device 200.

The internal memory 221 may be configured to store computer-executable program code, and the executable program code includes instructions. The processor 110 runs the instructions stored in the internal memory 221, to perform various function applications and data processing of the electronic device 200.

In addition, the internal memory 221 may include a high-speed random access memory, and the internal memory 221 may further include a nonvolatile memory such as at least one magnetic disk storage device, a flash memory device, or a universal flash storage (universal flash storage, UFS).

The pressure sensor 280A is configured to sense a pressure signal, and may convert the pressure signal into an electrical signal. When a touch operation is performed on the display screen 294, the electronic device 200 detects strength of the touch operation by using the pressure sensor 280A. The electronic device 200 may also calculate a touch position based on a detected signal of the pressure sensor 280A. In some embodiments, touch operations that are performed at different touch positions but have different touch duration may correspond to different operation instructions.

The gyroscope sensor 280B may detect magnitudes of angular velocities of the electronic device 200 in all directions (generally, in an X-axis, a Y-axis, and a Z-axis).

The acceleration sensor 280E may detect magnitudes of accelerations of the electronic device 200 in various directions (generally, in the X-axis, the Y-axis, and the Z-axis).

In this embodiment of this application, the electronic device 200 may further include a virtual sensor, a virtual sensor rotation vector sensor, and a linear acceleration sensor. The virtual sensor is configured to process data collected by the acceleration sensor 280E and the gyroscope sensor 280B, so as to determine angle information corresponding to the electronic device 200 when a vehicle is in different motion states.

The motor 191 may generate vibration, and provide real-time haptic feedback for the user.

In addition, above the foregoing components, various types of operating systems are run, for example, an Android (Android) system, an IOS operating system, a Symbian (Symbian) operating system, a Black Berry (Black Berry) operating system, a Linux operating system, and a Windows operating system. This is merely an example description, and is not limited. On these operating systems, different applications can be installed and run, such as any application that supports a voice chat function.

The display method provided in embodiments of this application may be implemented by the electronic device 200 having the foregoing hardware structure.

An example of the display method provided in embodiments of this application is described above in detail. It may be understood that to implement the foregoing functions, the electronic device includes corresponding hardware and/or software modules for performing the functions. A person skilled in the art should be easily aware that the example units and algorithm steps described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

In the embodiments of this application, the electronic device may be divided into functional modules based on the foregoing method examples. For example, each functional module may be obtained through division for each corresponding function, or two or more functions may be integrated into one module. The integrated module may be implemented in a form of hardware, or may be implemented in a form of a software functional module. It should be noted that division of the modules in the embodiments of this application is an example, and is merely logical function division. During actual implementation, there may be another division manner.

It should be noted that all related content of the steps in the foregoing method embodiments may be cited to function description of a corresponding functional module. Details are not described herein again.

The electronic device provided in embodiments is configured to perform the display method. Therefore, effects that are the same as those of the method can be achieved.

When an integrated unit is used, the electronic device may further include a processing module, a storage module, and a communication module. The processing module may be configured to control and manage an action of the electronic device. The storage module may be configured to support the electronic device in executing stored program code, data, and the like. The communication module can be configured to support communication between the electronic device and another device.

The processing module may be a processor or controller. The processor may implement or execute various example logical blocks, modules, and circuits described with reference to content disclosed in this application. The processor may alternatively be a combination that implements a computing function, for example, a combination of one or more microprocessors or a combination of digital signal processing (digital signal processing, DSP) and a microprocessor. The storage module may be a memory. The communication module may be specifically a device, for example, a radio frequency circuit, a Bluetooth chip, or a Wi-Fi chip, that interacts with another electronic device.

An embodiment of this application further provides a computer-readable storage medium. The computer-readable storage medium stores a computer program. When the computer program is executed by a processor, the processor is enabled to perform the display method in any one of the foregoing embodiments.

An embodiment of this application further provides a computer program product. When the computer program product is run on a computer, the computer is enabled to perform the foregoing related steps, so as to implement the display method in the foregoing embodiment.

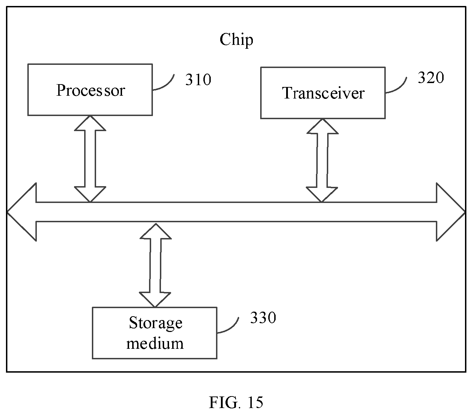

An embodiment of this application further provides a chip. Referring to FIG. 15, FIG. 15 is a schematic diagram of a structure of a chip according to an embodiment of this application. The chip shown in FIG. 15 may be a general-purpose processor, or may be a dedicated processor. The chip includes a processor 310. The processor 310 is configured to perform the display method in any one of the foregoing embodiments.

Optionally, the chip further includes a transceiver 320, and the transceiver 320 is configured to receive control of the processor to support a communication apparatus in performing the technical solutions shown above.

Optionally, the chip shown in FIG. 15 may further include a storage medium 330.

It should be noted that the chip shown in FIG. 15 may be implemented by using the following circuits or devices: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in the full text of this application.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

It may be understood by a person skilled in the art from the foregoing descriptions of the implementations that, for convenience and brevity of description, division into the foregoing functional modules is merely used as an example for description. In actual application, the foregoing functions may be allocated to different functional modules as required for implementation, that is, an internal structure of the apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A display method, applied to an electronic device, wherein the method comprises:

   displaying, by the electronic device, a first interface in response to a first operation; and
   displaying a target animation in a preset region of the first interface, wherein the target animation comprises an animation element, the animation element moves or remains still according to a motion state of the electronic device, and the target animation is used to map the motion state of the electronic device in real time.

2. The method according to claim 1, wherein when the electronic device is located in a vehicle and the vehicle is in an uphill and/or upward jolting motion state, the displaying a target animation in a preset region of the first interface comprises:
   displaying a first animation in the preset region, wherein an animation element in the first animation moves in a first preset direction.

3. The method according to claim 2, wherein when the vehicle is in a downhill and/or downward jolting motion state, the displaying a target animation in a preset region of the first interface comprises:
   displaying a second animation in the preset region, wherein an animation element in the second animation moves in a second preset direction, and the second preset direction is opposite to the first preset direction.

4. The method according to claim 3, wherein the animation element comprises a first animation element, the first animation element comprises a first track and a second track, and when the vehicle is in a leftward tilted and/or a leftward jolting motion state, the displaying a target animation in a preset region of the first interface comprises:
   displaying a third animation in the preset region, wherein in the third animation, the first track moves in the first preset direction, the second track moves in the second preset direction, and the first track and the second track separately rotate by a first rotation angle counterclockwise around a Z-axis.

5. The method according to claim 4, wherein when the vehicle is in a rightward titled and/or rightward jolting motion state, the displaying a target animation in a preset region of the first interface comprises:
displaying a fourth animation in the preset region, wherein in the fourth animation, the first track moves in the second preset direction, the second track moves in the first preset direction, and the first track and the second track separately rotate by the first rotation angle clockwise around the Z-axis.

6. The method according to claim 2, wherein when the vehicle is in an acceleration motion state, the displaying a target animation in a preset region of the first interface comprises:
displaying a fifth animation in the preset region, wherein a display size of an animation element in the fifth animation is adjusted from a first display size to a second display size, and the first display size is less than the second display size.

7. The method according to claim 6, wherein when the vehicle is in a deceleration motion state, the displaying a target animation in a preset region of the first interface comprises:
displaying a sixth animation in the preset region, wherein a display size of an animation element in the sixth animation is adjusted from a third display size to a fourth display size, and the third display size is greater than the fourth display size.

8. The method according to claim 2, wherein the first track and the second track are symmetrically displayed left and right in the preset region, the animation element further comprises a second animation element, and when the vehicle is in a turn left motion state, the displaying a target animation in a preset region of the first interface comprises:
displaying a seventh animation in the preset region, wherein in the seventh animation, the second animation element moves in the first track in a third preset direction, and moves through a right tail end of the first track to a left start end of the second track.

9. The method according to claim 8, wherein when the vehicle is continuously in a turn left motion state, the displaying a target animation in a preset region of the first interface comprises:
displaying an eighth animation in the preset region, wherein the second animation element in the eighth animation moves in the third preset direction on the left start end of the second track, and moves through a right tail end of the second track to a left start end of the first track.

10. The method according to claim 8, wherein when the vehicle is in a turn right motion state, the displaying a target animation in a preset region of the first interface comprises:
displaying a ninth animation in the preset region, wherein the second animation element in the ninth animation moves in the second track in a fourth preset direction and moves through a left tail end of the second track to a right start end of the first track, and the fourth preset direction is opposite to the third preset direction.

11. The method according to claim 10, wherein when the vehicle is continuously in a turn right motion state, the displaying a target animation in a preset region of the first interface comprises:
displaying a tenth animation in the preset region, wherein the second animation element in the tenth animation moves in the fourth preset direction on the right start end of the first track, and moves through a left tail end of the first track to a right start end of the second track.

12. The method according to claim 8, wherein when the vehicle is in a turn left motion state, the displaying a target animation in a preset region of the first interface further comprises:
displaying an eleventh animation in the preset region, wherein a display size of the first track in the eleventh animation is adjusted from a fifth display size to a sixth display size, a display size of the second track is adjusted from the fifth display size to a seventh display size, the fifth display size is less than the sixth display size, and the fifth display size is greater than the seventh display size.

13. The method according to claim 12, wherein when the vehicle is in a turn right motion state, the displaying a target animation in a preset region of the first interface further comprises:
displaying a twelfth animation in the preset region, wherein a display size of the first track in the twelfth animation is adjusted from the fifth display size to the seventh display size, and a display size of the second track is adjusted from the fifth display size to the sixth display size.

14. The method according to claim 2, wherein the method further comprises:
when the vehicle is in a steady motion state, displaying a thirteenth animation in the preset region, wherein an animation element in the thirteenth animation is still.

15. The method according to any one of claims 2 to 14, wherein the method further comprises: adjusting transparency of the animation element from a first transparency value to a second transparency value according to a motion state of the vehicle.

16. The method according to any one of claims 1 to 15, wherein the method further comprises: adjusting a display color of the animation element according to a color of the first interface.

17. The method according to any one of claims 8 to 16, wherein the first animation element comprises any one of a track, a rectangular frame, and a ring frame, and the second animation element comprises any one of a small ball, an animal, a person, and a plant.

18. The method according to any one of claims 1 to 17, wherein the first operation comprises at least one of a tap operation, a slide operation, a voice operation, and a gesture operation for enabling a motion sickness relief function switch.

19. The method according to any one of claims 1 to 18, wherein the method further comprises:

    displaying, by the electronic device, a second interface in response to a second operation, wherein the second interface comprises a control used to adjust the animation parameter; and
    adjusting the animation parameter in response to a third operation for the control.

20. An electronic device, comprising one or more processors and one or more memories, wherein the memory stores one or more programs, and when the one or more programs are executed by the processor, the electronic device is enabled to perform the method according to any one of claims 1 to 19.

21. A chip, comprising a processor, configured to invoke and run a computer program from a memory, so that an electronic device in which the chip is installed is enabled to perform the method according to any one of claims 1 to 19.

22. A computer-readable storage medium, wherein the computer-readable storage medium stores a computer program, and when the computer program is executed by a processor, the processor is enabled to perform the method according to any one of claims 1 to 19.

FIG. 1A

FIG. 1B

FIG. 1C

FIG. 2A

200

5G 5G

9:00

202

CONT.
FROM
FIG. 2A

FIG. 2B

It is detected that you enter
the vehicle riding mode
**Whether to enable the carsickness
relief display mode**

Yes          No

FIG. 2C

**11:45**

**Monday, October 17**

**The twenty-second day of the ninth month in the Renyin year**

TO
FIG. 2E

Music    Gallery    Weather    Exercise & Health

Camera    Contacts    Phone    Messages

FIG. 2D

**Control center**

WLAN

Bluetooth

Silent

Auto-rotate

Not playing

CONT.
FROM
FIG. 2D

Flashlight

Share

Location
information

Mobile data

Auto-rotate

Screenshot

Motion
sickness
relief mode

Screen
recording

FIG. 2E

● 5G .ooll 🛜 ▬ 11:45

**Settings**

🔍 Search settings item

👤 183******17
Account, find device, and the like ⟩

WLAN                    Aaaabb ⟩

Mobile communication network ⟩

More connections ⟩

Sounds and vibration ⟩

Notifications & status bar ⟩

Smart assistant ⟩

Accessibility features ⟩

Digital wellbeing ⟩

Users and accounts ⟩

System & updates ⟩

About phone ⟩

TO
FIG. 2G

FIG. 2F

FIG. 2G

5G 📶 📶 🔋 11:45

← **Accessibility features**

| | |
|---|---|
| Accessibility | ❯ |
| Senior care | Off ❯ |

| | |
|---|---|
| Gloves mode | On ❯ |
| Stylus | Off ❯ |
| Motion sickness relief mode | ⬤ |

CONT.
FROM
FIG. 2G

FIG. 2H

Movement of anterior
semicircular canal
and posterior
semicircular canal

Movement of utricle
and saccule

Movement of horizontal
semicircular canal

FIG. 3A

301

3011

3012

FIG. 3B

301

3013

FIG. 3C

302

3021

3022

FIG. 3D

302

3023

3024

FIG. 3E

302

3025

3026

FIG. 3F

302

3027

3028

FIG. 3G

302

3029

3030

FIG. 3H

FIG. 3I

FIG. 3J

FIG. 3K

FIG. 3L

FIG. 4A

FIG. 4B

First preset region

403

404

Second preset region

Bullet-screen comment

FIG. 4C

Video title

15:00

403

404

▶| 00:10 ●─────────────── 30:15
Bullet-screen comment          Variable speed  HDR  Episodes

FIG. 4D

FIG. 4E

5G 5G 📶 📶 〰️  407  🔋 9:00

408

FIG. 4F

FIG. 4G

5G 5G

**11:45**

**Monday, October 17**

**The twenty-second day of the ninth month in the Renyin year**

411

412

| Music | Gallery | Weather | Weibo |
|---|---|---|---|
| WeChat | Contacts | QQ | Messages |

100% 11:45

**FIG. 4H**

FIG. 5A

FIG. 5B

EP 4 772 987 A1

FIG. 5C　　　　　　　FIG. 5D　　　　　　　FIG. 5E

FIG. 5H

FIG. 5G

FIG. 5F

FIG. 5K

FIG. 5J

FIG. 5I

FIG. 5N

FIG. 5M

FIG. 5L

FIG. 6A

FIG. 6B

FIG. 6C

FIG. 6D

FIG. 6E

FIG. 7A

FIG. 7B

FIG. 7E

FIG. 7D

FIG. 7C

FIG. 7F

FIG. 7G

FIG. 7H

FIG. 7I

FIG. 7J

FIG. 8A

FIG. 8B

FIG. 8C

FIG. 8E

FIG. 8D

FIG. 8F

FIG. 8G

FIG. 8H

FIG. 8J

FIG. 8I

EP 4 772 987 A1

FIG. 8K

FIG. 8L

FIG. 8M

FIG. 8O

FIG. 8N

85

EP 4 772 987 A1

FIG. 8R

FIG. 8Q

FIG. 8P

FIG. 8S

FIG. 8T

86

FIG. 8U

FIG. 8V

FIG. 9A

FIG. 9B

FIG. 9C

FIG. 9D

FIG. 9E

FIG. 9F

FIG. 9G

FIG. 9H

FIG. 9I

FIG. 9J

X=0

X=-d

X=d

X=d1

X=d2

X=-d2

FIG. 9K

FIG. 9L

FIG. 10A

FIG. 10B

FIG. 10C

FIG. 10D

FIG. 11A

Parameter adjustment

Reset

Hide

FIG. 11B

An electronic device displays a first interface in response to a first operation — S201

Display a target animation in a preset region of the first interface — S202

FIG. 12

| Application layer | Camera | Calendar | Map | WLAN | Music | Messages |
| | Gallery | Call | Navigation | Bluetooth | Motion sickness relief application | ... |

| Application framework layer | Window manager | Content provider | Phone manager | Resource manager |
| | Notification manager | View system | ... | |

| System library | Surface manager | Three-dimensional graphics processing library | Android runtime |
| | Two-dimensional graphics engine | Media library | Image processing library | ... |

| Kernel layer | Display driver | Camera driver |
| | Audio driver | Sensor driver | ... |

FIG. 13

Electronic device 20

Antenna 1                   Antenna 2

| Mobile communication module 2G/3G/4G/5G [250] | Wireless communication module BT/WLAN/GNSS/NFC/IR/FM [260] |
|---|---|

| Speaker [270A] | | | Sensor module [280] |
|---|---|---|---|
| Receiver [270B] | Audio module [270] | Processor [210] | Pressure sensor [280A] |
| Microphone [270C] | | | Gyroscope sensor [280B] |
| Headset jack [270D] | | | Barometric pressure sensor [280C] |

Display screens 1-N [294]

Magnetic sensor [280D]

Cameras 1-N [293]

Acceleration sensor [280E]

Indicator [292]

Distance sensor [280F]

Motor [291]

Optical proximity sensor [280G]

Key [290]

Fingerprint sensor [280H]

Internal memory [221]

Temperature sensor [280J]

SIM card interfaces 1-N [295]

Touch sensor [280K]

External memory interface [220]

Ambient light sensor [280L]

| USB interface [230] | Charging management module [240] | Power management module [241] | Bone conduction sensor [280M] |
|---|---|---|---|
| Charging input | | Battery [242] | |

FIG. 14

Chip

Processor 310

Transceiver 320

Storage medium 330

FIG. 15

## INTERNATIONAL SEARCH REPORT

| International application No. |
| --- |
| **PCT/CN2025/095256** |

| A. | CLASSIFICATION OF SUBJECT MATTER |
| --- | --- |

G06F 3/04845(2022.01)i; G06F 3/04847(2022.01)i; G06F 3/0488(2022.01)i; G06F 3/04815(2022.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNTXT, WOTXT, EPTXT, USTXT, CNKI, IEEE: 动画, 元素, 设备, 运动, 移动, 静止, 元素, 显示, 尺寸, 方向, animation, element, device, motion, movement, still, element, display, size, direction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118860244 A (HONOR DEVICE CO., LTD.) 29 October 2024 (2024-10-29) description, paragraphs [0127]-[0571] | 1-22 |
| Y | US 7918781 B1 (THE UNITED STATES OF AMERICA AS REPRESENTED BY THE SECRETARY OF THE ARMY) 05 April 2011 (2011-04-05) description, column 1, line 57-column 2, line 33 and column 3, line 20-column 9, line 67 | 1-22 |
| Y | WO 2023276047 A1 (PIONEER CORP.) 05 January 2023 (2023-01-05) description, paragraphs [0023]-[0090], and figures 12A and 12B | 1-22 |
| A | CN 111103688 A (TAPUYIHAI (SHANGHAI) INTELLIGENT TECHNOLOGY CO., LTD.) 05 May 2020 (2020-05-05) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 August 2025** | **21 August 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/095256**

| Patent document cited in search report | | | Publication date (day/month/year) | Patent family member(s) | Publication date (day/month/year) |
|---|---|---|---|---|---|
| CN | 118860244 | A | 29 October 2024 | None | |
| US | 7918781 | B1 | 05 April 2011 | None | |
| WO | 2023276047 | A1 | 05 January 2023 | None | |
| CN | 111103688 | A | 05 May 2020 | None | |

Form PCT/ISA/210 (patent family annex) (July 2022)

**EP 4 772 987 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410868868